(19) Europäisches Patentamt
European Patent Office
Office européen des brevets

(11) EP 1 458 237 B1

(12) # EUROPEAN PATENT SPECIFICATION

(45) Date of publication and mention of the grant of the patent:
**12.04.2006 Bulletin 2006/15**

(21) Application number: **02793065.0**

(22) Date of filing: **18.12.2002**

(51) Int Cl.:
***A01N 43/76*** *(2006.01)*

(86) International application number:
**PCT/EP2002/014485**

(87) International publication number:
**WO 2003/051122 (26.06.2003 Gazette 2003/26)**

(54) **HERBICIDAL MIXTURE BASED ON 7-PYRAZOLYLBENZOXAZOLES**

HERBIZIDE MISCHUNG, DIE AUF 7-PYRAZOLYLBENZOXAZOLEN BASIERT

MELANGE HERBICIDE A BASE DE 7-PYRAZOLYLBENZOXAZOLES

(84) Designated Contracting States:
**AT BE BG CH CY CZ DE DK EE ES FI FR GB GR IE IT LI LU MC NL PT SE SI SK TR**
Designated Extension States:
**RO**

(30) Priority: **19.12.2001 US 340954 P**

(43) Date of publication of application:
**22.09.2004 Bulletin 2004/39**

(73) Proprietor: **BASF Aktiengesellschaft**
**67056 Ludwigshafen (DE)**

(72) Inventors:
- **ZAGAR, Cyrill**
**68167 Mannheim (DE)**
- **SIEVERNICH, Bernd**
**67454 Hassloch (DE)**
- **SCHÖFL, Ulrich**
**68782 Brühl (DE)**
- **WESTPHALEN, Karl-Otto**
**67346 SPEYER (DE)**
- **WATANABE, Akihide**
**252-1114 Ayase-shi, Kanagawa (JP)**
- **LANDES, Max**
**Visalia, CA 93291 (US)**
- **LANDES, Andreas**
**67354 Römerberg Heiligenstein (DE)**
- **WITSCHEL, Matthias**
**67098 Bad Dürkheim (DE)**

(74) Representative: **Reitstötter - Kinzebach**
**Ludwigsplatz 4**
**67059 Ludwigshafen (DE)**

(56) References cited:
**WO-A-98/27090** **WO-A-99/55702**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 458 237 B1

## Description

The present invention relates to herbicidally active compositions comprising 7-pyrazolylbenzoxazoles and at least one further herbicidally active compound and optionally at least one safener.

In crop protection products, it is desirable in principle to increase the specificity and the reliability of the action of active compounds. In particular, it is desirable for the crop protection product to control the harmful plants effectively and, at the same time, to be tolerated by the useful plants in question.

Various publications have described 7-pyrazolylbenzoxazoles as being highly effective herbicides. However, their compatibility with dicotyledonous crop plants such as cotton, oilseed rape and some graminaceous plants such as barley, millet, corn, rice, wheat and sugar cane is not always satisfactory, i.e. in addition to the harmful plants, the crop plants are also damaged to an extent which is not acceptable. It is possible to spare the useful plants by lowering the application rates; however, the extent of the control of harmful plants is naturally also reduced.

It is known that certain combinations of different herbicides with specific action result in an enhanced activity of a herbicide component by synergism. As a consequence, it is possible to reduce the application rates of herbicidally active compounds required for controlling the harmful plants. Furthermore, it is known that in some cases better crop plant compatibility can be achieved by joint application of specifically acting herbicides with organic active compounds, some of which are themselves herbicidally active. In these cases, the active compounds act as antidote or antagonist, and, owing to the fact that they can reduce or even prevent damage to the crop plants, they are also referred to as safeners.

WO 98/27090 and WO 99/55702 disclose 7-pyrazolylbenzoxazoles of the formula I

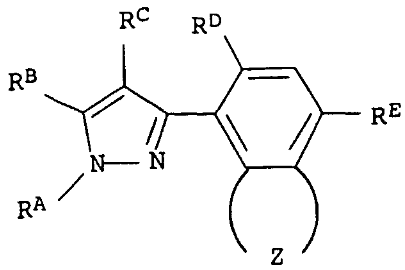

(I)

in which the variables $R^A$ - $R^E$ and Z are as defined below:

- $R^A$ is hydrogen, $C_1$-$C_4$-alkyl or $C_1$-$C_4$-haloalkyl;
- $R^B$ is cyano, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfinyl, $C_1$-$C_4$-haloalkylsulfinyl, $C_1$-$C_4$-alkylsulfonyl, $C_1$-$C_4$-haloalkylsulfonyl;
- $R^C$ is hydrogen, cyano, nitro, halogen, $C_1$-$C_4$-alkyl or $C_1$-$C_4$-haloalkyl;
- $R^D$ is halogen or hydrogen;
- $R^E$ is hydrogen, halogen, cyano, $C_1$-$C_4$-alkyl, $C_1$-$C_4$-haloalkyl, $C_1$-$C_4$-alkoxy or $C_1$-$C_4$-haloalkoxy, and
- Z together with the phenyl ring to which it is attached forms a benzoxazole ring or a benzothiazole ring which is substituted by various substituents.

However, the herbicidal action of the compounds described therein is unsatisfactory. Furthermore, at higher dosages, their compatibility with useful plants is not always ensured.

It is an object of the present invention to provide herbicidal compositions having increased activity against unwanted harmful plants and at the same time better compatibility with useful plants.

We have found that this object is achieved, surprisingly, by compositions comprising A) at least one 7-pyrazolylbenzoxazole of the formula I

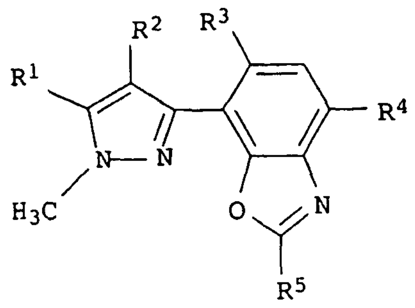

(I)

in which the variables $R^1$ - $R^5$ are as defined below:

$R^1$ is difluoromethoxy, trifluoromethyl or methylsulfonyl;

$R^2$ is halogen;

$R^3$ is hydrogen or halogen;

$R^4$ is halogen or cyano;

$R^5$ is hydrogen, $C_1$-$C_6$-alkyl, $C_1$-$C_6$-haloalkyl, $C_3$-$C_6$-alkenyl, cyano-$C_3$-$C_6$-alkenyl, $C_3$-$C_6$-haloalkenyl, $C_3$-$C_6$-alkynyl, cyano-$C_3$-$C_6$-alkynyl, $C_3$-$C_6$-haloalkynyl,
$C_1$-$C_4$-alkyl which carries one of the following groups: cyano, hydroxyl, carboxyl, $C_1$-$C_4$-alkoxy, $C_1$-$C_4$-haloalkoxy, $C_3$-$C_4$-alkenyloxy, $C_3$-$C_4$-alkynyloxy, $C_3$-$C_8$-cycloalkyl, $C_3$-$C_8$-cycloalkyloxy, amino, $C_1$-$C_4$-alkylamino, di($C_1$-$C_4$-alkyl)amino, $C_1$-$C_4$-alkylthio, $C_1$-$C_4$-haloalkylthio, $C_3$-$C_4$-alkenylthio, $C_3$-$C_4$-alkynylthio, $C_1$-$C_4$-alkylsulfinyl, $C_1$-$C_4$-haloalkylsulfinyl, $C_3$-$C_4$-alkenylsulfinyl, $C_3$-$C_4$-alkynylsulfinyl, $C_1$-$C_4$-alkylsulfonyl, $C_1$-$C_4$-haloalkylsulfonyl, $C_3$-$C_4$-alkenylsulfonyl, $C_3$-$C_4$-alkynylsulfonyl, ($C_1$-$C_4$-alkoxy)carbonyl, $C_3$-$C_8$-cycloalkyl, phenyl;
phenyl, $C_3$-$C_8$-cycloalkyl, where each cycloalkyl or phenyl ring may be unsubstituted or may carry one, two, three or four substituents independently of one another selected from the group consisting of cyano, nitro, amino, hydroxyl, carboxyl, halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkylsulfonyl, ($C_1$-$C_4$-alkoxy)carbonyl, ($C_1$-$C_4$-alkyl)carbonyl, ($C_1$-$C_4$-haloalkyl)carbonyl, ($C_1$-$C_4$-alkyl)carbonyloxy, ($C_1$-$C_4$-haloalkyl)carbonyloxy and di($C_1$-$C_4$-alkyl)amino;

and/or at least one agriculturally acceptable salt of I; and at least one further active compound selected from

B) herbicides of classes b1) to b15):

b1) lipid biosynthesis inhibitors;
b2) acetolactate synthase inhibibitors (ALS inhibitors);
b3) photosynthesis inhibitors;
b4) protoporphyrinogen-IX oxidase inhibitors,
b5) bleacher herbicides;
b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitose inhibitors;
b10) inhibitors of the synthesis of long-chain fatty acids (VLCFA inhibitors);
b11) cellulose biosynthesis inhibitors;
b12) decoupler herbicides;
b13) auxin herbicides;
b14) auxin transport inhibitors;
b15) other herbicides selected from the group consisting of benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, daimuron (dymron) and cumyluron;

and optionally

C) at least one safener selected from: benoxacor, cloquintocet, cyometrinil, dichlormid, dicyclonon, dietholate, fenchlorazole, fenclorim, flurazole, fluxofenim, furilazole, isoxadifen, mefenpyr, mephenate, napthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) and oxabetrinil;

the agriculturally acceptable salts of the active compounds B and optionally C and the agriculturally acceptable derivatives of the active compounds B and optionally C, provided they have a carboxyl group.

The invention relates in particular to compositions in the form of herbicidally active crop protection compositions comprising a herbicidally effective amount of at least one mixture of A with B and optionally C, as defined above, and at least one liquid and/or solid carrier, if desired, one or more surfactants and, if desired, one or more further auxiliaries customary for crop protection compositions. The invention also relates to compositions in the form of a crop protection composition formulated as a 2-component composition comprising a first component which comprises the active compound A, a solid or liquid carrier and, if appropriate, one or more surfactants, and a second component which comprises at least one further active compound selected from the herbicides B and, if desired, at least one safener C, a solid or liquid carrier and, if appropriate, one or more surfactants, where both components may additionally also comprise further auxiliaries customary for crop protection compositions.

Compositions according to the invention which comprise both at least one 7-pyrazolylbenzoxazole of the formula I and at least one herbicide B surprisingly have better herbicidal activity, i.e. better action against harmful plants, than would have been expected based on the herbicidal action observed for the individual compounds. Compositions comprising a 7-pyrazolylbenzoxazole I, a herbicide B and one of the compounds mentioned under C likewise have better herbicidal action against harmful plants than would have been expected based on the herbicidal activity of the individual compounds. The herbicidal action to be expected, based on the individual compounds, for the mixtures can be calculated using Colby's formula (see below). If the observed activity exceeds the expected additive activity of the individual compounds, this is referred to as synergism.

Compositions comprising a 7-pyrazolylbenzoxazole I, a herbicide B and one of the compounds mentioned under C, show a better compatibility with useful plants than compositions comprising only a 7-pyrazolylbenzoxazole I and a herbicide B.

The invention furthermore relates to a method for controlling undesirable vegetation, in particular in crops of cereals, corn, soybeans, rice, oilseed rape, cotton, potatoes, groundnuts or in perennial crops, and also in crops which, by genetic engineering or by breeding, are resistant to one or more herbicides or to attack by insects. The invention also relates to a method for the desiccation or defoliation of plants. In the latter methods it is immaterial whether the herbicidally active compounds of components A) and B) and optionally C) are formulated and applied jointly or separately, and, in the case of separate application, in which order the application takes place.

The organic moieties mentioned in the definition of the substituents $R^2$ to $R^5$ in formula I and $R^6$ to $R^{18}$ in the formulae II and III below or as radicals on cycloalkyl, phenyl or heterocyclic rings are - like the term halogen - collective terms for individual enumerations of the individual group members. All carbon chains, i.e. all alkyl, haloalkyl, cycloalkyl, alkoxy, haloalkoxy, alkylamino, alkylthio, haloalkylthio, alkylsulfinyl, haloalkylsulfinyl, alkylsulfonyl, haloalkylsulfonyl, alkenyl and alkynyl groups and corresponding moieties in larger groups such as alkylcarbonyl, alkoxycarbonyl, etc., can be straight-chain or branched, the prefix $C_n$-$C_m$ denoting in each case the possible number of carbon atoms in the group. Halogenated substituents preferably carry one, two, three, four or five identical or different halogen atoms.

Specifically, the radicals have, for example, the following meanings:

- halogen: fluorine, chlorine, bromine, iodine, preferably fluorine, chlorine or bromine;

- $C_1$-$C_4$-alkyl: $CH_3$, $C_2H_5$, n-propyl, $CH(CH_3)_2$, n-butyl, $CH(CH_3)$-$C_2H_5$, $CH_2$-$CH(CH_3)_2$ and $C(CH_3)_3$;

- $C_1$-$C_4$-haloalkyl: a $C_1$-$C_4$-alkyl radical as mentioned above which is partially or fully substituted by fluorine, chlorine, bromine and/or iodine, i.e., for example, $CH_2F$, $CHF_2$, $CF_3$, $CH_2Cl$, dichloromethyl, trichloromethyl, chlorofluoromethyl, dichlorofluoromethyl, chlorodifluoromethyl, 2-fluoroethyl, 2-chloroethyl, 2-bromoethyl, 2-iodoethyl, 2,2-difluoroethyl, 2,2,2-trifluoroethyl, 2-chloro-2-fluoroethyl, 2-chloro-2,2-difluoroethyl, 2,2-dichloro-2-fluoroethyl, 2,2,2-trichloroethyl, $C_2F_5$, 2-fluoropropyl, 3-fluoropropyl, 2,2-difluoropropyl, 2,3-difluoropropyl, 2-chloropropyl, 3-chloropropyl, 2,3-dichloropropyl, 2-bromopropyl, 3-bromopropyl, 3,3,3-trifluoropropyl, 3,3,3-trichloropropyl, 2,2,3,3,3-pentafluoropropyl, heptafluoropropyl, 1-(fluoromethyl)-2-fluoroethyl, 1-(chloromethyl)-2-chloroethyl, 1-(bromomethyl)-2-bromoethyl, 4-fluorobutyl, 4-chlorobutyl, 4-bromobutyl or nonafluorobutyl;

- $C_1$-$C_6$-alkyl: $C_1$-$C_4$-alkyl as mentioned above, and also, for example, n-pentyl, 1-methylbutyl, 2-methylbutyl, 3-methylbutyl, 2,2-dimethylpropyl, 1-ethylpropyl, n-hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl or 1-ethyl-2-methylpropyl, preferably methyl, ethyl, n-propyl, 1-methylethyl, n-butyl, 1,1-dimethylethyl, n-pentyl or n-hexyl;

- $C_1$-$C_6$-haloalkyl: a $C_1$-$C_6$-alkyl radical as mentioned above which is partially or fully substituted by fluorine, chlorine, bromine and/or iodine, i.e., for example, one of the radicals mentioned under $C_1$-$C_4$-haloalkyl and also 5-fluoro-1-pentyl, 5-chloro-1-pentyl, 5-bromo-1-pentyl, 5-iodo-1-pentyl, 5,5,5-trichloro-1-pentyl, undecafluoropentyl, 6-fluoro-1-hexyl, 6-chloro-1-hexyl, 6-bromo-1-hexyl, 6-iodo-1-hexyl, 6,6,6-trichloro-1-hexyl or dodecafluorohexyl;

- $C_1$-$C_4$-alkoxy: $OCH_3$, $OC_2H_5$, n-propoxy, $OCH(CH_3)_2$, n-butoxy, $OCH(CH_3)$-$C_2H_5$, $OCH_2$-$CH(CH_3)_2$ or $OC(CH_3)_3$, preferably $OCH_3$, $OC_2H_5$ or $OCH(CH_3)_2$;

- $C_1$-$C_4$-haloalkoxy: a $C_1$-$C_4$-alkoxy radical as mentioned above which is partially or fully substituted by fluorine, chlorine, bromine and/or iodine, i.e., for example, $OCH_2F$, $OCHF_2$, $OCF_3$, $OCH_2Cl$, $OCH(Cl)_2$, $OC(Cl)_3$, chlorofluoromethoxy, dichlorofluoromethoxy, chlorodifluoromethoxy, 2-fluoroethoxy, 2-chloroethoxy, 2-bromoethoxy, 2-iodoethoxy, 2,2-difluoroethoxy, 2,2,2-trifluoroethoxy, 2-chloro-2-fluoroethoxy, 2-chloro-2,2-difluoroethoxy, 2,2-dichloro-2-fluoroethoxy, 2,2,2-trichloroethoxy, $OC_2F_5$, 2-fluoropropoxy, 3-fluoropropoxy, 2,2-difluoropropoxy, 2,3-difluoropropoxy, 2-chloropropoxy, 3-chloropropoxy, 2,3-dichloropropoxy, 2-bromopropoxy, 3-bromopropoxy, 3,3,3-trifluoropropoxy, 3,3,3-trichloropropoxy, 2,2,3,3,3-pentafluoropropoxy, $OCF_2$-$C_2F_5$, 1-($CH_2F$)-2-fluoroethoxy, 1-($CH_2Cl$)-2-chloroethoxy, 1-($CH_2Br$)-2-bromoethoxy, 4-fluorobutoxy, 4-chlorobutoxy, 4-bromobutoxy or nonafluorobutoxy, preferably $OCHF_2$, $OCF_3$, dichlorofluoromethoxy, chlorodifluoromethoxy or 2,2,2-trifluoroethoxy;

- $C_1$-$C_4$-alkylamino: $NH(CH_3)$, $NH(C_2H_5)$, propylamino, $NH[CH(CH_3)_2]$, butylamino, 1-methylpropylamino, 2-methylpropylamino, $NH[C(CH_3)_3]$;

- di($C_1$-$C_4$-alkyl)amino: $N(CH_3)_2$, $N(C_2H_5)_2$, N,N-dipropylamino, $N[CH(CH_3)_2]_2$, N,N-dibutylamino, N,N-di(1-methylpropyl)amino, N,N-di(2-methylpropyl)amino, $N[C(CH_3)_3]_2$, N-ethyl-N-methylamino, N-methyl-N-propylamino, N-methyl-N-(1-methylethyl)amino, N-butyl-N-methylamino, N-methyl-N-(1-methylpropyl)amino, N-methyl-N-(2-methylpropyl)amino, N-(1,1-dimethylethyl)-N-methylamino, N-ethyl-N-propylamino, N-ethyl-N-(1-methylethyl)amino, N-butyl-N-ethylamino, N-ethyl-N-(1-methylpropyl)amino, N-ethyl-N-(2-methylpropyl)amino, N-ethyl-N-(1,1-dimethylethyl)amino, N-(1-methylethyl)-N-propylamino, N-butyl-N-propylamino, N-(1-methylpropyl)-N-propylamino, N-(2-methylpropyl)-N-propylamino, N-(1,1-dimethylethyl)-N-propylamino, N-butyl-N-(1-methylethyl)amino, N-(1-methylethyl)-N-(1-methylpropyl)amino, N-(1-methylethyl)-N-(2-methylpropyl)amino, N-(1,1-dimethylethyl)-N-(1-methylethyl)amino, N-butyl-N-(1-methylpropyl)amino, N-butyl-N-(2-methylpropyl)amino, N-butyl-N-(1,1-dimethylethyl)amino, N-(1-methylpropyl)-N-(2-methylpropyl)amino, N-(1,1-dimethylethyl)-N-(1-methylpropyl)amino or N-(1,1-dimethylethyl)-N-(2-methylpropyl)amino, preferably $N(CH_3)_2$ or $N(C_2H_5)$;

- $C_1$-$C_4$-alkylthio: $SCH_3$, $SC_2H_5$, n-propylthio, $SCH(CH_3)_2$, n-butylthio, $SCH(CH_3)$-$C_2H_5$, $SCH_2$-$CH(CH_3)_2$ or SC $(CH_3)_3$, preferably $SCH_3$ or $SC_2H_5$;

- $C_1$-$C_4$-haloalkylthio: a $C_1$-$C_4$-alkylthio radical as mentioned above which is partially or fully substituted by fluorine, chlorine, bromine and/or iodine, i.e., for example, $SCH_2F$, $SCHF_2$, $SCH_2Cl$, $SCH(Cl)_2$, $SC(Cl)_3$, $SCF_3$, chlorofluoromethylthio, dichlorofluoromethylthio, chlorodifluoromethylthio, 2-fluoroethylthio, 2-chloroethylthio, 2-bromoethylthio, 2-iodoethylthio, 2,2-difluoroethylthio, 2,2,2-trifluoroethylthio, 2-chloro-2-fluoroethylthio, 2-chloro-2,2-difluoroethylthio, 2,2-dichloro-2-fluoroethylthio, 2,2,2-trichloroethylthio, $SC_2F_5$, 2-fluoropropylthio, 3-fluoropropylthio, 2,2-difluoropropylthio, 2,3-difluoropropylthio, 2-chloropropylthio, 3-chloropropylthio, 2,3-dichloropropylthio, 2-bromopropylthio, 3-bromopropylthio, 3,3,3-trifluoropropylthio, 3,3,3-trichloropropylthio, $SCH_2$-$C_2F_5$, $SCF_2$-$C_2F_5$, 1-($CH_2F$)-2-fluoroethylthio, 1-($CH_2Cl$)-2-chloroethylthio, 1-($CH_2Br$)-2-bromoethylthio, 4-fluorobutylthio, 4-chlorobutylthio, 4-bromobutylthio or $SCF_2$-$CF_2$-$C_2F_5$, preferably $SCHF_2$, $SCF_3$, dichlorofluoromethylthio, chlorodifluoromethylthio or 2,2,2-trifluoroethylthio;

- $C_1$-$C_4$-alkylsulfinyl: SO-$CH_3$, SO-$C_2H_5$, SO-$CH_2$-$C_2H_5$, SO-$CH(CH_3)_2$, n-butylsulfinyl, SO-$CH(CH_3)$-$C_2H_5$, SO-$CH_2$-$CH(CH_3)_2$ or SO-$C(CH_3)_3$, preferably SO-$CH_3$ or SO-$C_2H_5$;

- $C_1$-$C_4$-haloalkylsulfinyl: a $C_1$-$C_4$-alkylsulfinyl radical - as mentioned above - which is partially or fully substituted by fluorine, chlorine, bromine and/or iodine, i.e., for example, SO-$CH_2F$, SO-$CHF_2$, SO-$CF_3$, SO-$CH_2Cl$, SO-$CH(Cl)_2$, SO-$C(Cl)_3$, chlorofluoromethylsulfinyl, dichlorofluoromethylsulfinyl, chlorodifluoromethylsulfinyl, 2-fluoroethylsulfinyl, 2-chloroethylsulfinyl, 2-bromoethylsulfinyl, 2-iodoethylsulfinyl, 2,2-difluoroethylsulfinyl, 2,2,2-trifluoroethylsulfinyl, 2-chloro-2-fluoroethylsulfinyl, 2-chloro-2,2-difluoroethylsulfinyl, 2,2-dichloro-2-fluoroethylsulfinyl, 2,2,2-trichloroethylsulfinyl, $SO-C_2F_5$, 2-fluoropropylsulfinyl, 3-fluoropropylsulfinyl, 2,2-difluoropropylsulfinyl, 2,3-difluoropropylsulfinyl, 2-chloropropylsulfinyl, 3-chloropropylsulfinyl, 2,3-dichloropropylsulfinyl, 2-bromopropylsulfinyl, 3-bromopropylsulfinyl, 3,3,3-trifluoropropylsulfinyl, 3,3,3-trichloropropylsulfinyl, $SO—CH_2—C_2F_5$, $SO—CF_2—C_2F_5$, 1-(fluoromethyl)-2-fluoroethylsulfinyl, 1-(chloromethyl)-2-chloroethylsulfinyl, 1-(bromomethyl)-2-bromoethylsulfinyl, 4-fluorobutylsulfinyl, 4-chlorobutylsulfinyl, 4-bromobutylsulfinyl or nonafluorobutylsulfinyl, preferably $SO-CF_3$, $SO-CH_2Cl$ or 2,2,2-trifluoroethylsulfinyl;

- $C_1$-$C_4$-alkylsulfonyl: $SO_2-CH_3$, $SO_2-C_2H_5$, $SO_2-CH_2-C_2H_5$, $SO_2-C_H(CH_3)_2$, n-butylsulfonyl, $SO_2-CH(CH_3)-C_2H_5$, $SO_2-CH_2-CH(CH_3)_2$ or $SO_2-C(CH_3)_3$, preferably $SO_2-CH_3$ or $SO_2-C_2H_5$;

- $C_1$-$C_4$-haloalkylsulfonyl: a $C_1$-$C_4$-alkylsulfonyl radical - as mentioned above - which is partially or fully substituted by fluorine, chlorine, bromine and/or iodine, i.e., for example, $SO_2-CH_2F$, $SO_2-CHF_2$, $SO_2-CF_3$, $SO_2-CH_2Cl$, $SO_2-CH(Cl)_2$, $SO_2-C(Cl)_3$, chlorofluoromethylsulfonyl, dichlorofluoromethylsulfonyl, chlorodifluoromethylsulfonyl, 2-fluoroethylsulfonyl, 2-chloroethylsulfonyl, 2-bromoethylsulfonyl, 2-iodoethylsulfonyl, 2,2-difluoroethylsulfonyl, 2,2,2-trifluoroethylsulfonyl, 2-chloro-2-fluoroethylsulfonyl, 2-chloro-2,2-difluoroethylsulfonyl, 2,2-dichloro-2-fluoroethylsulfonyl, 2,2,2-trichloroethylsulfonyl, $SO_2-C_2F_5$, 2-fluoropropylsulfonyl, 3-fluoropropylsulfonyl, 2,2-difluoropropylsulfonyl, 2,3-difluoropropylsulfonyl, 2-chloropropylsulfonyl, 3-chloropropylsulfonyl, 2,3-dichloropropylsulfonyl, 2-bromopropylsulfonyl, 3-bromopropylsulfonyl, 3,3,3-trifluoropropylsulfonyl, 3,3,3-trichloropropylsulfonyl, $SO_2-CH_2-C_2F_5$, $SO_2-CF_2-C_2F_5$, 1-(fluoromethyl)-2-fluoroethylsulfonyl, 1-(chloromethyl)-2-chloroethylsulfonyl, 1-(bromomethyl)-2-bromoethylsulfonyl, 4-fluorobutylsulfonyl, 4-chlorobutylsulfonyl, 4-bromobutylsulfonyl or nonafluorobutylsulfonyl, preferably $SO_2-CF_3$, $SO_2-CH_2Cl$ or 2,2,2-trifluoroethylsulfonyl;

- $C_1$-$C_4$-alkylaminocarbonyl: methylaminocarbonyl, ethylaminocarbonyl, 1-methylethylaminocarbonyl, propylaminocarbonyl, butylaminocarbonyl, 1-methylpropylaminocarbonyl, 2-methylpropylaminocarbonyl, 1,1-dimethylethylaminocarbonyl;

- di($C_1$-$C_4$-alkyl)aminocarbonyl: N,N-dimethylaminocarbonyl, N,N-diethylaminocarbonyl, N,N-di(1-methylethyl)aminocarbonyl, N,N-dipropylaminocarbonyl, N,N-dibutylaminocarbonyl, N,N-di(1-methylpropyl)aminocarbonyl, N,N-di(2-methylpropyl)aminocarbonyl, N,N-di(1,1-dimethylethyl)aminocarbonyl, N-ethyl-N-methylaminocarbonyl, N-methyl-N-propylaminocarbonyl, N-methyl-N-(1-methylethyl)aminocarbonyl, N-butyl-N-methylaminocarbonyl, N-methyl-N-(1-methylpropyl)aminocarbonyl, N-methyl-N-(2-methylpropyl)aminocarbonyl, N-(1,1-dimethylethyl)-N-methylaminocarbonyl, N-ethyl-N-propylaminocarbonyl, N-ethyl-N-(1-methylethyl)aminocarbonyl, N-butyl-N-ethylaminocarbonyl, N-ethyl-N-(1-methylpropyl)aminocarbonyl, N-ethyl-N-(2-methylpropyl)aminocarbonyl, N-ethyl-N-(1,1-dimethylethyl)aminocarbonyl, N-(1-methylethyl)-N-propylaminocarbonyl, N-butyl-N-propylaminocarbonyl, N-(1-methylpropyl)-N-propylaminocarbonyl, N-(2-methylpropyl)-N-propylaminocarbonyl, N-(1,1-dimethylethyl)-N-propylaminocarbonyl, N-butyl-N-(1-methylethyl)aminocarbonyl, N-(1-methylethyl)-N-(1-methylpropyl)aminocarbonyl, N-(1-methylethyl)-N-(2-methylpropyl)aminocarbonyl, N-(1,1-dimethylethyl)-N-(1-methylethyl)aminocarbonyl, N-butyl-N-(1-methylpropyl)aminocarbonyl, N-butyl-N-(2-methylpropyl)aminocarbonyl, N-butyl-N-(1,1-dimethylethyl)aminocarbonyl, N-(1-methylpropyl)-N-(2-methylpropyl)aminocarbonyl, N-(1,1-dimethylethyl)-N-(1-methylpropyl)aminocarbonyl or N-(1,1-dimethylethyl)-N-(2-methylpropyl)aminocarbonyl;

- $C_1$-$C_4$-alkoxy-$C_1$-$C_4$-alkyl: $C_1$-$C_4$-alkyl which is substituted by $C_1$-$C_4$-alkoxy- as mentioned above -, i.e., for example, $CH_2-OCH_3$, $CH_2-OC_2H_5$, n-propoxymethyl, $CH_2-OCH(CH_3)_2$, n-butoxymethyl, (1-methylpropoxy)methyl, (2-methylpropoxy)methyl, $CH_2-OC(CH_3)_3$, 2-(methoxy)ethyl, 2-(ethoxy)ethyl, 2-(n-propoxy)ethyl, 2-(1-methylethoxy)ethyl, 2-(n-butoxy)ethyl, 2-(1-methylpropoxy)ethyl, 2-(2-methylpropoxy)ethyl, 2-(1,1-dimethylethoxy)ethyl, 2-(methoxy)propyl, 2-(ethoxy)propyl, 2-(n-propoxy)propyl, 2-(1-methylethoxy)propyl, 2-(n-butoxy)propyl, 2-(1-methylpropoxy)propyl, 2-(2-methylpropoxy)propyl, 2-(1,1-dimethylethoxy)propyl, 3-(methoxy)propyl, 3-(ethoxy)propyl, 3-(n-propoxy)propyl, 3-(1-methylethoxy)propyl, 3-(n-butoxy)propyl, 3-(1-methylpropoxy)propyl, 3-(2-methylpropoxy)propyl, 3-(1,1-dimethylethoxy)propyl, 2-(methoxy)butyl, 2-(ethoxy)butyl, 2-(n-propoxy)butyl, 2-(1-methylethoxy)butyl, 2-(n-butoxy)butyl, 2-(1-methylpropoxy)butyl, 2-(2-methylpropoxy)butyl, 2-(1,1-dimethylethoxy)butyl, 3-(methoxy)butyl, 3-(ethoxy)butyl, 3-(n-propoxy)butyl, 3-(1-methylethoxy)butyl, 3-(n-butoxy)butyl, 3-(1-methylpropoxy)butyl, 3-(2-methylpropoxy)butyl, 3-(1,1-dimethylethoxy)butyl, 4-(methoxy)butyl, 4-(ethoxy)butyl, 4-(n-propoxy)butyl, 4-(1-methylethoxy)butyl, 4-(n-butoxy)butyl, 4-(1-methylpropoxy)butyl, 4-(2-methylpropoxy)butyl or 4-(1,1-dimethylethoxy)butyl, preferably $CH_2-OCH_3$, $CH_2-OC_2H_5$, 2-methoxyethyl or 2-ethoxyethyl;

- ($C_1$-$C_4$-alkyl)carbonyl: $CO-CH_3$, $CO-C_2H_5$, $CO-CH_2-C_2H_5$, $CO-CH(CH_3)_2$, n-butylcarbonyl, $CO-CH(CH_3)-C_2H_5$, $CO-CH_2-CH(CH_3)_2$ or $CO-C(CH_3)_3$, preferably $CO-CH_3$ or $CO-C_2H_5$;

- ($C_1$-$C_4$-alkoxy)carbonyl: $CO-OCH_3$, $CO-OC_2H_5$, n-propoxycarbonyl, $CO-OCH(CH_3)_2$, n-butoxycarbonyl, $CO-OCH(CH_3)-C_2H_5$, $CO-OCH_2-CH(CH_3)_2$ or $CO-OC(CH_3)_3$, preferably $CO-OCH_3$ or $CO-OC_2H_5$;

- $C_3$-$C_6$-alkenyl: prop-1-en-1-yl, allyl, 1-methylethenyl, 1-buten-1-yl, 1-buten-2-yl, 1-buten-3-yl, 2-buten-1-yl, 1-methylprop-1-en-1-yl, 2-methylprop-1-en-1-yl, 1-methylprop-2-en-1-yl,2-methylprop-2-en-1-yl, n-penten-1-yl, n-penten-2-yl, n-penten-3-yl, n-penten-4-yl, 1-methylbut-1-en-1-yl, 2-methylbut-1-en-1-yl, 3-methylbut-1-en-1-yl, 1-methylbut-2-en-1-yl, 2-methylbut-2-en-1-yl, 3-methylbut-2-en-1-yl, 1-methylbut-3-en-1-yl, 2-methylbut-3-en-1-yl, 3-methylbut-3-en-1-yl, 1,1-dimethylprop-2-en-1-yl, 1,2-dimethylprop-1-en-1-yl, 1,2-dimethylprop-2-en-1-yl, 1-ethylprop-1-en-2-yl, 1-ethylprop-2-en-1-yl, n-hex-1-en-1-yl, n-hex-2-en-1-yl, n-hex-3-en-1-yl, n-hex-4-en-1-yl, n-hex-5-en-1-yl, 1-methylpent-l-en-1-yl, 2-methylpent-1-en-1-yl, 3-methylpent-1-en-1-yl, 4-methylpent-1-en-1-yl, 1-methylpent-2-en-1-yl, 2-methylpent-2-en-1-yl, 3-methylpent-2-en-1-yl, 4-methylpent-2-en-1-yl, 1-methylpent-3-en-1-yl, 2-methylpent-3-en-1-yl, 3-methylpent-3-en-1-yl, 4-methylpent-3-en-1-yl, 1-methylpent-4-en-1-yl, 2-methylpent-4-en-1-yl, 3-methylpent-4-en-1-yl, 4-methylpent-4-en-1-yl, 1,1-dimethylbut-2-en-1-yl, 1,1-dimethylbut-3-en-1-yl, 1,2-dimethylbut-1-en-1-yl, 1,2-dimethylbut-2-en-1-yl, 1,2-dimethylbut-3-en-1-yl, 1,3-dimethylbut-1-en-1-yl, 1,3-dimethylbut-2-en-1-yl, 1,3-dimethylbut-3-en-1-yl, 2,2-dimethylbut-3-en-1-yl, 2,3-dimethylbut-1-en-1-yl, 2,3-dimethylbut-2-en-1-yl, 2,3-dimethylbut-3-en-1-yl, 3,3-dimethylbut-1-en-1-yl, 3,3-dimethylbut-2-en-1-yl, 1-ethylbut-1-en-1-yl, 1-ethylbut-2-en-1-yl, 1-ethylbut-3-en-1-yl, 2-ethylbut-1-en-1-yl, 2-ethylbut-2-en-1-yl, 2-ethylbut-3-en-1-yl, 1,1,2-trimethylprop-2-en-1-yl, 1-ethyl-1-methylprop-2-en-1-yl, 1-ethyl-2-methylprop-1-en-1-yl or 1-ethyl-2-methylprop-2-en-1-yl;

- $C_3$-$C_6$-haloalkenyl: $C_3$-$C_6$-alkenyl as mentioned above which is partially or fully substituted by fluorine, chlorine, bromine and/or iodine, i.e., for example, 2-chloroallyl, 3-chloroallyl, 2,3-dichloroallyl, 3,3-dichloroallyl, 2,3,3-trichloroallyl, 2,3-dichlorobut-2-enyl, 2-bromoallyl, 3-bromoallyl, 2,3-dibromoallyl, 3,3-dibromoallyl, 2,3,3-tribromoallyl or 2,3-dibromobut-2-enyl;

- cyano-$C_3$-$C_6$-alkenyl: for example 2-cyanoallyl, 3-cyanoallyl, 4-cyanobut-2-enyl, 4-cyanobut-3-enyl or 5-cyanopent-4-enyl;

- $C_3$-$C_4$-alkenyloxy: allyloxy, but-1-en-3-yloxy, but-1-en-4-yloxy, but-2-en-1-yloxy, 1-methylprop-2-enyloxy or 2-methylprop-2-enyloxy;

- $C_3$-$C_4$-alkenylthio: allylthio, but-1-en-3-ylthio, but-1-en-4-ylthio, but-2-en-1-ylthio, 1-methylprop-2-enylthio or 2-methylprop-2-enylthio;

- $C_3$-$C_4$-alkenylsulfinyl: for example allylsulfinyl, but-1-en-3-ylsulfinyl, but-1-en-4-ylsulfinyl, but-2-en-1-ylsulfinyl, 1-methylprop-2-enylsulfinyl or 2-methylprop-2-enylsulfinyl;

- $C_3$-$C_4$-alkenylsulfonyl: allylsulfonyl, but-1-en-3-ylsulfonyl, but-1-en-4-ylsulfonyl, but-2-en-1-ylsulfonyl, 1-methylprop-2-enylsulfonyl or 2-methylprop-2-enylsulfonyl;

- $C_3$-$C_6$-alkynyl: prop-1-yn-1-yl, prop-2-yn-1-yl, n-but-1-yn-1-yl, n-but-1-yn-3-yl, n-but-1-yn-4-yl, n-but-2-yn-1-yl, n-pent-1-yn-1-yl, n-pent-1-yn-3-yl, n-pent-1-yn-4-yl, n-pent-1-yn-5-yl, n-pent-2-yn-1-yl, n-pent-2-yn-4-yl, n-pent-2-yn-5-yl, 3-methylbut-1-yn-3-yl, 3-methylbut-1-yn-4-yl, n-hex-1-yn-1-yl, n-hex-1-yn-3-yl, n-hex-1-yn-4-yl, n-hex-1-yn-5-yl, n-hex-1-yn-6-yl, n-hex-2-yn-1-yl, n-hex-2-yn-4-yl, n-hex-2-yn-5-yl, n-hex-2-yn-6-yl, n-hex-3-yn-1-yl, n-hex-3-yn-2-yl, 3-methylpent-1-yn-1-yl, 3-methylpent-1-yn-3-yl, 3-methylpent-1-yn-4-yl, 3-methylpent-1-yn-5-yl, 4-methylpent-1-yn-1-yl, 4-methylpent-2-yn-4-yl or 4-methylpent-2-yn-5-yl, preferably prop-2-yn-1-yl;

- $C_3$-$C_6$-haloalkynyl: $C_3$-$C_6$-alkynyl as mentioned above which is partially or fully substituted by fluorine, chlorine, bromine and/or iodine, i.e., for example, 1,1-difluoroprop-2-yn-1-yl, 4-fluorobut-2-yn-1-yl, 4-chlorobut-2-yn-1-yl, 1,1-difluorobut-2-yn-1-yl, 5-fluoropent-3-yn-1-yl or 6-fluorohex-4-yn-1-yl;

- cyano-$C_3$-$C_6$-alkynyl: for example 3-cyanopropargyl, 4-cyanobut-2-yn-1-yl, 5-cyanopent-3-yn-1-yl and 6-cyanohex-4-yn-1-yl;

- ($C_1$-$C_4$-haloalkyl)carbonyl: a ($C_1$-$C_4$-alkyl)carbonyl radical - as mentioned above - which is partially or fully substituted by fluorine, chlorine, bromine and/or iodine, i.e., for example, $CO-CH_2F$, $CO-CHF_2$, $CO-CF_3$, $CO-CH_2Cl$, $CO-CH(Cl)_2$, $CO-C(Cl)_3$, chlorofluoromethylcarbonyl, dichlorofluoromethylcarbonyl, chlorodifluoromethylcarbonyl, 2-fluoroethylcarbonyl, 2-chloroethylcarbonyl, 2-bromoethylcarbonyl, 2-iodoethylcarbonyl, 2,2-difluoroethylcarbonyl, 2,2,2-trifluoroethylcarbonyl, 2-chloro-2-fluoroethylcarbonyl, 2-chloro-2,2-difluoroethylcarbonyl, 2,2-dichloro-2-fluoroethylcarbonyl, 2,2,2-trichloroethylcarbonyl, $CO-C_2F_5$, 2-fluoropropylcarbonyl, 3-fluoropropylcarbonyl, 2,2-difluoropropylcarbonyl, 2,3-difluoropropylcarbonyl, 2-chloropropylcarbonyl, 3-chloropropylcarbonyl, 2,3-dichloropropylcarbonyl, 2-bromopropylcarbonyl, 3-bromopropylcarbonyl, 3,3,3-trifluoropropylcarbonyl, 3,3,3-trichloropropylcarbonyl, $CO-CH_2-C_2F_5$, $CO-CF_2-C_2F_5$, 1-($CH_2F$)-2-fluoroethylcarbonyl, 1-($CH_2Cl$)-2-chloroethylcarbonyl, 1-($CH_2Br$)-2-bromoethylcarbonyl, 4-fluorobutylcarbonyl, 4-chlorobutylcarbonyl, 4-bromobutylcarbonyl or nonafluorobutylcarbonyl, preferably $CO-CF_3$, $CO-CH_2Cl$ or 2,2,2-trifluoroethylcarbonyl;

- ($C_1$-$C_4$-alkyl)carbonyloxy: $O-CO-CH_3$, $O-CO-C_2H_5$, $O-CO-CH_2-C_2H_5$, $O-CO-CH(CH_3)_2$, $O-CO-CH_2-CH_2-C_2H_5$, $O-CO-CH(CH_3)-C_2H_5$, $O-CO-CH_2-CH(CH_3)_2$ or $O-CO-C(CH_3)_3$, preferably $O-CO-CH_3$ or $O-CO-C_2H_5$;

- ($C_1$-$C_4$-haloalkyl)carbonyloxy: a ($C_1$-$C_4$-alkyl)carbonyloxy radical - as mentioned above - which is partially or fully substituted by fluorine, chlorine, bromine and/or iodine, i.e., for example, $O-CO-CH_2F$, $O-CO-CHF_2$, $O-CO-CF_3$, $O-CO-CH_2Cl$, $O-CO-CH(Cl)_2$, $O-CO-C(Cl)_3$, chlorofluoromethylcarbonyloxy, dichlorofluoromethylcarbonyloxy, chlorodifluoromethylcarbonyloxy, 2-fluoroethylcarbonyloxy, 2-chloroethylcarbonyloxy, 2-bromoethylcarbonyloxy, 2-iodoethylcarbonyloxy, 2,2-difluoroethylcarbonyloxy, 2,2,2-trifluoroethylcarbonyloxy, 2-chloro-2-fluoroethylcarbonyloxy, 2-chloro-2,2-difluoroethylcarbonyloxy, 2,2-dichloro-2-fluoroethylcarbonyloxy, 2,2,2-trichloroethylcarbonyloxy, $O-CO-C_2F_5$, 2-fluoropropylcarbonyloxy, 3-fluoropropylcarbonyloxy, 2,2-difluoropropylcarbonyloxy, 2,3-difluoropropylcarbonyloxy, 2-chloropropylcarbonyloxy, 3-chloropropylcarbonyloxy, 2,3-dichloropropylcarbonyloxy, 2-bromopropylcarbonyloxy, 3-bromopropylcarbonyloxy, 3,3,3-trifluoropropylcarbonyloxy, 3,3,3-trichloropropylcarbonyloxy, $O-CO-CH_2-C_2F_5$, $O-CO-CF_2-C_2F_5$, 1-($CH_2F$)-2-fluoroethylcarbonyloxy, 1-($CH_2Cl$)-2-chloroethylcarbonyloxy, 1-($CH_2Br$)-2-bromoethylcarbonyloxy, 4-fluorobutylcarbonyloxy, 4-chlorobutylcarbonyloxy, 4-bromobutylcarbonyloxy or nonafluorobutylcarbonyloxy;

- $C_3$-$C_4$-alkynyloxy: propargyloxy, but-1-yn-3-yloxy, but-1-yn-4-yloxy, but-2-yn-1-yloxy, 1-methylprop-2-ynyloxy or 2-methylprop-2-ynyloxy, preferably propargyloxy;

- $C_3$-$C_4$-alkynylthio: propargylthio, but-1-yn-3-ylthio, but-1-yn-4-ylthio, but-2-yn-1-ylthio, 1-methylprop-2-ynylthio or 2-methylprop-2-ynylthio, preferably propargylthio;

- $C_3$-$C_4$-alkynylsulfinyl: propargylsulfinyl, but-1-yn-3-ylsulfinyl, but-1-yn-4-ylsulfinyl, but-2-yn-1-ylsulfinyl, 1-methylprop-2-ynylsulfinyl or 2-methylprop-2-ynylsulfinyl, preferably propargylsulfinyl;

- $C_3$-$C_4$-alkynylsulfonyl: propargylsulfonyl, but-1-yn-3-ylsulfonyl, but-1-yn-4-ylsulfonyl, but-2-yn-1-ylsulfonyl, 1-methylprop-2-ynylsulfonyl or 2-methylprop-2-ynylsulfonyl;

- $C_3$-$C_8$-cycloalkyl: cyclopropyl, cyclobutyl, cyclopentyl, cyclohexyl, cycloheptyl or cyclooctyl;

- $C_3$-$C_8$-cycloalkyl-$C_1$-$C_4$-alkyl; cyclopropylmethyl, cyclobutylmethyl, cyclopentylmethyl, cyclohexylmethyl, cycloheptylmethyl, cyclooctylmethyl, 2-(cyclopropyl)ethyl, 2-(cyclobutyl)ethyl, 2-(cyclopentyl)ethyl, 2-(cyclohexyl)ethyl, 2-(cycloheptyl)ethyl, 2-(cyclooctyl)ethyl, 3-(cyclopropyl)propyl, 3-(cyclobutyl)propyl, 3-(cyclopentyl)propyl, 3-(cyclohexyl)propyl, 3-(cycloheptyl)propyl, 3-(cyclooctyl)propyl, 4-(cyclopropyl)butyl, 4-(cyclobutyl)butyl, 4-(cyclopentyl)butyl, 4-(cyclohexyl)butyl, 4-(cycloheptyl)butyl, 4-(cyclooctyl)butyl;

- $C_3$-$C_8$-cycloalkyloxy: cyclopropyloxy, cyclobutyloxy, cyclopentyloxy, cyclohexyloxy, cycloheptyloxy, cyclooctyloxy;

- $C_3$-$C_8$-cycloalkenyl: cyclopropenyl, cyclobutenyl, cyclopentenyl, cyclohexenyl, cycloheptenyl or cyclooctenyl.

Preferred herbicides B which can be used according to the present invention in combination with the 7-pyrazolylbenzoxazoles of the formula I are:

b1) from the group of the lipid biosynthesis inhibitors:
chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate and bensulide;

b2) from the group of the ALS inhibitors:

amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox, imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid and pyrithiobac;

b3) from the group of the photosynthesis inhibitors:
atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;

b4) from the group of the protoporphyrinogen-IX oxidase
inhibitors: acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid and phenyluracil compounds of the formula II:

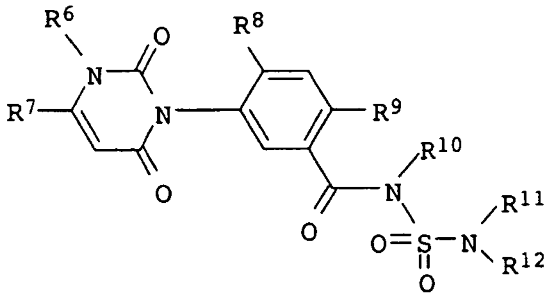

(II)

in which the variables $R^6$ - $R^{12}$ are as defined below:

$R^6$ is methyl or $NH_2$;

$R^7$ is $C_1$-$C_2$-haloalkyl;

$R^8$ is hydrogen or halogen;

$R^9$ is halogen or cyano;

$R^{10}$ is hydrogen, cyano, $C_1$-$C_6$-alkyl, $C_1$-$C_6$-alkoxy, $C_1$-$C_4$-alkoxy-$C_1$-$C_4$-alkyl, $C_3$-$C_7$-cycloalkyl, $C_3$-$C_6$-alkenyl, $C_3$-$C_6$-alkynyl or benzyl which is unsubstituted or substituted by halogen or alkyl;

$R^{11}$, $R^{12}$ independently of one another are hydrogen, $C_1$-$C_6$-alkyl, $C_1$-$C_6$-alkoxy, $C_3$-$C_6$-alkenyl, $C_3$-$C_6$-alkynyl, $C_3$-$C_7$-cycloalkyl, $C_3$-$C_7$-cycloalkenyl, phenyl or benzyl, where each of the 8 last-mentioned substituents is unsubstituted or may be substituted by 1 to 6 halogen atoms and/or by one, two or three groups selected from: OH, $NH_2$, CN, $CONH_2$, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkylsulfonyl, $C_1$-$C_4$-alkylamino, di-($C_1$-$C_4$-alkyl)

amino, formyl, $C_1$-$C_4$-alkylcarbonyl, $C_1$-$C_4$-alkoxycarbonyl, $C_1$-$C_4$-alkylaminocarbonyl, di($C_1$-$C_4$-alkyl)aminocarbonyl, $C_3$-$C_7$-cycloalkyl, phenyl or benzyl; or

$R^{11}$, $R^{12}$ together with the nitrogen atom form a 3-, 4-, 5-, 6-or 7-membered saturated or unsaturated nitrogen heterocycle which is unsubstituted or substituted by 1 to 6 methyl groups and which may contain, as ring members, 1 or 2 further heteroatoms selected from the group consisting of nitrogen, oxygen and sulfur,

b5) from the group of the bleacher herbicides: metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethylphenoxy)-2-(4-trifluoromethylphenyl)pyrimidine and also 3-heterocyclyl-substituted benzoyl derivatives of the formula III

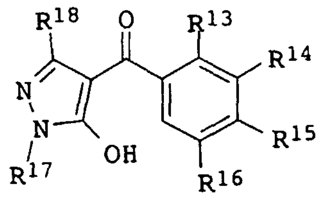

(III)

in which the variables $R^{13}$ to $R^{18}$ are as defined below:

$R^{13}$, $R^{15}$ are hydrogen, halogen, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylthio, $C_1$-$C_6$-alkylsulfinyl or $C_1$-$C_6$-alkylsulfonyl;

$R^{14}$ is a heterocyclic radical selected from the group consisting of: thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, where the nine radicals mentioned may be unsubstituted or mono- or polysubstituted by halogen, $C_1$-$C_9$-alkyl, $C_1$-$C_4$-alkoxy, $C_1$-$C_4$-haloalkyl, $C_1$-$C_4$-haloalkoxy or $C_1$-$C_4$-alkylthio;

$R^{16}$ is hydrogen, halogen or $C_1$-$C_6$-alkyl;

$R^{17}$ is $C_1$-$C_6$-alkyl;

$R^{18}$ is hydrogen or $C_1$-$C_6$-alkyl;

b6) from the group of the EPSP synthase inhibitors: glyphosate;

b7) from the group of the glutamine synthase inhibitors:
glufosinate and bilanaphos;

b8) from the group of the DHP synthase inhibitors: asulam;

b9) from the group of the mitose inhibitors:
benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham;

b10) from the group of the VLCFA inhibitors: acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;

b11) from the group of the cellulose biosynthesis inhibitors:
dichlobenil, chlorthiamid, isoxaben and flupoxam;

b12) from the group of the decoupler herbicides: dinofenate, dinoprop, dinosam, dinoseb, dinoterb, DNOC, etinofen and medinoterb;

b13) from the group of the auxin herbicides:
clomeprop, 2,4-D, 2,4,5-T, MCPA, MCPA-thioethyl, dichlorprop, dichlorprop-P, mecoprop, mecoprop-P, 2,4-DB, MCPB, chloramben, dicamba, 2,3,6-TBA, tricamba, quinclorac, quinmerac, clopyralid, fluroxypyr, picloram, triclopyr and benazolin;

b14) from the group of the auxin transport inhibitors: naptalam, diflufenzopyr;

b15) from the group of other herbicides: benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, daimuron (dymron) and cumyluron.

The 7-pyrazolylbenzoxazoles of the formula I are included in the general formula of the compounds disclosed in WO 98/27090 and WO 99/55702. The 7-pyrazolylbenzoxazoles of the formula I can be prepared by the processes described in these publications and by the processes described in WO 01/68644 and in the earlier application DE 101 01 762.6, which are expressly included herein by way of reference.

The active compounds B of groups b1) to b15) and the active compounds C are known herbicides and safeners, see, for example, The Compendium of Pesticide Common Names (http://www.hclrss.demon.co.uk/index.html); Farm Chemicals Handbook 2000 Vol. 86, Meister Publishing Company, 2000; B. Hock, C. Fedtke, R. R. Schmidt, Herbizide, Georg Thieme Verlag, Stuttgart 1995; W. H. Ahrens, Herbicide Handbook, 7th Edition, Weed Science Society of America, 1994; and K. K. Hatzios, Herbicide Handbook, Supplement to 7th Edition, Weed Science Society of America, 1998. 2,2,5-Trimethyl-3-(dichloroacetyl)-1,3-oxazolidine [CAS No. 52836-31-4] is also known as R-29148. 4-(Dichloroacetyl)-1-oxa-4-azaspiro[4.5]decane [CAS No. 71526-07-3] is also known as AD-67 and MON 4660. 4-(3-Trifluoromethylphenoxy)-2-(4-trifluoromethylphenyl)pyrimidine is known from EP 723960. The bleacher herbicides of the formula III described below are disclosed in WO 96/26202, WO 97/41116, WO 97/41117 and WO 97/41118. The protoporphyrinogen-IX oxidase inhibitors of the formula II described below are known from the earlier patent application WO 01/83459.

The categorization of the active compounds according to their mode of action is based on current understanding. If an active compound acts by more than one mode of action, this substance was assigned to only one mode of action.

If the 7-pyrazolylbenzoxazoles I, the herbicides B and/or the safeners C are capable of forming geometrical isomers, for example E/Z isomers, it is possible to use both the pure isomers and mixtures thereof in the compositions according to the invention. If the 7-pyrazolylbenzoxazoles I, the herbicides B and/or the safeners C have one or more centers of chirality and, as a consequence, are present as enantiomers or diastereomers, it is possible to use both the pure enantiomers and diastereomers and their mixtures in the compositions according to the invention.

If the 7-pyrazolylbenzoxazoles I, the herbicides B and/or the safeners C have functional groups which can be ionized, they can also be used in the form of their agriculturally acceptable salts. In general, the salts of those cations or the acid addition salts of those acids are suitable whose cations and anions, respectively, have no adverse effect on the action of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, furthermore ammonium and substituted ammonium in which one to four hydrogen atoms are replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, methylammonium, isopropylammonium, dimethylammonium, diisopropylammonium, trimethylammonium, tetramethylammonium, tetraethylammonium, tetrabutylammonium, 2-hydroxyethylammonium, 2-(2-hydroxyethoxy)eth-1-ylammonium, di(2-hydroxyethyl)]ammonium, benzyltrimethylammonium, benzyltriethylammonium, furthermore phosphonium ions, sulfonium ions, preferably tri($C_1$-$C_4$-alkyl)sulfonium such as trimethylsulfonium, and sulfoxonium ions, preferably tri($C_1$-$C_4$-alkyl)sulfoxonium.

It is possible to use, for example, the active compounds of the formula I which have an acid group, the active compounds II and III and chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, propaquizafop, quizalofop, quizalofop-P, trifop, alloxydim, butroxydim, clethodim, cloproxydim, cycloxydim, profoxydim, sethoxydim, tepraloxydim, tralkoxydim, amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, propoxycarbazon, flucarbazon, imazamethabenz, imazamox, imazapic, imazapyr, imazaquin, imazethapyr, cloransulam, diclosulam, florasulam, flumetsulam, metosulam, penoxsulam, bispyribac, pyrithiobac, pyriminobac, bentazon, acifluorfen, ethoxyfen, fluoroglycofen, fomesafen,

halosafen, lactofen, pyraflufen, flumiclorac, fluthiacet, carfentrazone, flufenpyr, mesotrione, sulcotrione, glyphosate, glufosinate, bilanaphos, clomeprop, 2,4-D, 2,4-DB, dichlorprop, dichlorprop-P, MCPA, MCPB, mecoprop, mecoprop-P, 2,4,5-T, chloramben, dicamba, 2,3,6-TBA, tricamba, quinclorac, quinmerac, clopyralid, fluroxypyr, picloram, triclopyr, naptalam, diflufenzopyr, cloquintocet, fenchlorazole, isoxadifen and mefenpyr, if desired as salts of the agriculturally useful cations mentioned above, in the compositions according to the invention.

Anions of useful acid addition salts are primarily chloride, bromide, fluoride, iodide, hydrogen sulfate, methyl sulfate, sulfate, dihydrogen phosphate, hydrogen phosphate, nitrate, dicarbonate, carbonate, hexafluorosilicate, hexafluorophosphate, benzoate and the anions of $C_1$-$C_4$-alkanoic acids, preferably formate, acetate, propionate and butyrate.

In the compositions according to the invention, the active compounds cyperquat, diethamquat, difenzoquat, diquat, morfamquat and paraquat are usually employed as salts of the agriculturally useful anions mentioned above.

The active compounds I can be used in the mixtures according to the invention as acid addition salts, as mentioned above.

In the compositions according to the invention, the active compounds which carry a carboxyl group can, instead of the active compounds mentioned above, also be employed in the form of an agriculturally acceptable derivative, for example as amides such as mono- or di-$C_1$-$C_6$-alkylamides or arylamides, as esters, for example as allyl esters, propargyl esters, $C_1$-$C_{10}$-alkyl esters or alkoxyalkyl esters, and also as thioesters, for example as $C_1$-$C_{10}$-alkyl thioesters. Examples of active compounds having a COOH group which can also be employed as derivatives are: chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, propaquizafop, quizalofop, quizalofop-P, trifop, bensulfuron, chlorimuron, ethametsulfuron, flupyrsulfuron, halosulfuron, iodosulfuron, mesosulfuron, metsulfuron, primisulfuron, pyrazosulfuron, sulfometuron, thifensulfuron, tribenuron, triflusulfuron, imazamethabenz, imazamox, imazapic, imazapyr, imazaquin, imazethapyr, cloransulam, bispyribac, pyrithiobac, pyriminobac, acifluorfen, ethoxyfen, fluoroglycofen, lactofen, pyraflufen, flumiclorac, fluthiacet, carfentrazone, flufenpyr, clomeprop, 2,4-D, 2,4-DB, dichlorprop, dichlorprop-P, MCPA, MCPB, mecoprop, mecoprop-P, 2,4,5-T, chloramben, dicamba, 2,3,6-TBA, tricamba, quinclorac, quinmerac, clopyralid, fluroxypyr, picloram, triclopyr, naptalam, diflufenzopyr, cloquintocet, fenchlorazole, isoxadifen and mefenpyr.

Preferred mono- and di-$C_1$-$C_6$-alkylamides are the methyl- and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl) or isooctyl (2-ethylhexyl) esters. Preferred $C_1$-$C_4$-alkoxy-$C_1$-$C_4$-alkyl esters are the straight-chain or branched $C_1$-$C_4$-alkoxyethyl esters, for example the methoxyethyl, ethoxyethyl or butoxyethyl esters. An example of the straight-chain or branched $C_1$-$C_{10}$-alkyl thioesters is the ethyl thioester.

Among the 7-pyrazolylbenzoxazoles of the formula I, preference is given to those in which the variables $R^1$ to $R^5$ independently of one another, but preferably combined, have the meanings given below:

$R^1$ is difluoromethoxy;

$R^2$ is chlorine or bromine;

$R^3$ is hydrogen, fluorine or chlorine, in particular fluorine or chlorine;

$R^4$ is halogen or cyano, preferably chlorine or cyano, with very particular preference chlorine;

$R^5$ is hydrogen, $C_1$-$C_6$-alkyl, $C_1$-$C_6$-haloalkyl, $C_1$-$C_4$-alkoxy-$C_1$-$C_4$-alkyl, $C_3$-$C_6$-alkenyl, $C_3$-$C_6$-alkynyl, $C_3$-$C_7$-cycloalkyl, $C_3$-$C_8$-cycloalkyl-$C_1$-$C_4$-alkyl, phenyl or benzyl, in particular $C_1$-$C_4$-alkyl, cyclopropyl or cyclopropylmethyl and with very particular preference $C_1$-$C_4$-alkyl.

Examples of particularly preferred herbicides I are the compounds of the formula Ia listed below in which $R^2$, $R^3$ and $R^5$ together have the values given in one row of Table 1 (compounds I.1 to I.76)

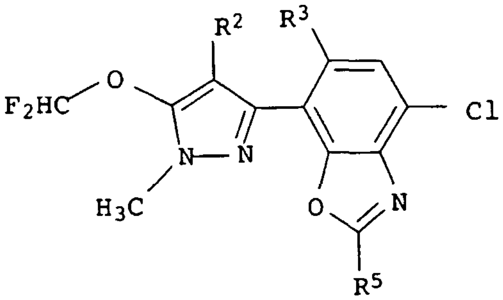

(Ia)

| 7-pyrazolylbenzoxazole I | $R^2$ | $R^3$ | $R^5$ |
|---|---|---|---|
| I.1 | Cl | F | H |
| I.2 | Cl | Cl | H |
| I.3 | Br | F | H |
| I.4 | Br | Cl | H |
| I.5 | Cl | F | methyl |
| I.6 | Cl | Cl | methyl |
| I.7 | Br | F | methyl |
| I.8 | Br | Cl | methyl |
| I.9 | Cl | F | ethyl |
| I.10 | Cl | Cl | ethyl |
| I.11 | Br | F | ethyl |
| I.12 | Br | Cl | ethyl |
| I.13 | Cl | F | propyl |
| I.14 | Cl | Cl | propyl |
| I.15 | Br | F | propyl |
| I.16 | Br | Cl | propyl |
| I.17 | Cl | F | isopropyl |
| I.18 | Cl | Cl | isopropyl |
| I.19 | Br | F | isopropyl |
| I.20 | Br | Cl | isopropyl |
| I.21 | Cl | F | butyl |
| I.22 | Cl | Cl | butyl |
| I.23 | Br | F | butyl |
| I.24 | Br | Cl | butyl |
| I.25 | Cl | F | s-butyl |
| I.26 | Cl | Cl | s-butyl |
| I.27 | Br | F | s-butyl |
| I.28 | Br | Cl | s-butyl |
| I.29 | Cl | F | isobutyl |
| I.30 | Cl | Cl | isobutyl |

Table continued

| 7-pyrazolylbenzoxazole I | $R^2$ | $R^3$ | $R^5$ |
|---|---|---|---|
| I.31 | Br | F | isobutyl |
| I.32 | Br | Cl | isobutyl |
| I.33 | Cl | F | t-butyl |
| I.34 | Cl | Cl | t-butyl |
| I.35 | Br | F | t-butyl |
| I.36 | Br | Cl | t-butyl |
| I.37 | Cl | F | trifluoromethyl |
| I.38 | Cl | Cl | trifluoromethyl |
| I.39 | Br | F | trifluoromethyl |
| I.40 | Br | Cl | trifluoromethyl |
| I.41 | Cl | F | methoxymethyl |
| I.42 | Cl | Cl | methoxymethyl |
| I.43 | Br | F | methoxymethyl |
| I.44 | Br | Cl | methoxymethyl |
| I.45 | Cl | F | cyclopropyl |
| I.46 | Cl | Cl | cyclopropyl |
| I.47 | Br | F | cyclopropyl |
| I.48 | Br | Cl | cyclopropyl |
| I.49 | Cl | F | cyclopentyl |
| I.50 | Cl | Cl | cyclopentyl |
| I.51 | Br | F | cyclopentyl |
| I.52 | Br | Cl | cyclopentyl |
| I.53 | Cl | F | cyclohexyl |
| I.54 | Cl | Cl | cyclohexyl |
| I.55 | Br | F | cyclohexyl |
| I.56 | Br | Cl | cyclohexyl |
| I.57 | Cl | F | (cyclopropyl)methyl |
| I.58 | Cl | Cl | (cyclopropyl)methyl |
| I.59 | Br | F | (cyclopropyl)methyl |
| I.60 | Br | Cl | (cyclopropyl)methyl |
| I.61 | Cl | F | (cyclopentyl)methyl |
| I.62 | Cl | Cl | (cyclopentyl)methyl |
| I.63 | Br | F | (cyclopentyl)methyl |
| I.64 | Br | Cl | (cyclopentyl)methyl |
| I.65 | Cl | F | (cyclohexyl)methyl |
| I.66 | Cl | Cl | (cyclohexyl)methyl |
| I.67 | Br | F | (cyclohexyl)methyl |
| I.68 | Br | Cl | (cyclohexyl)methyl |

Table continued

| 7-pyrazolylbenzoxazole I | $R^2$ | $R^3$ | $R^5$ |
|---|---|---|---|
| I.69 | Cl | F | phenyl |
| I.70 | Cl | Cl | phenyl |
| I.71 | Br | F | phenyl |
| I.72 | Br | Cl | phenyl |
| I.73 | Cl | F | benzyl |
| I.74 | Cl | Cl | benzyl |
| I.75 | Br | F | benzyl |
| I.76 | Br | Cl | benzyl |

Among the compositions according to the invention, preference is given to those which comprise at least one herbicide B selected from groups b1) to b7), b9) to b11), b13) to b15).

Among the compositions according to the invention, particular preference is given to those which comprise at least one herbicide B selected from groups b1), b2), b5), b6), b7), b9), b10), b13), b14) and b15), in particular selected from groups b1), b2), b5), b6), b7), b9) and b15).

Preferred herbicides B of groups b1) to b15) are the compounds listed below:

b1) clodinafop, cyhalofop, diclofop, fenoxaprop, fenoxaprop-P, fluazifop, fluazifop-P, haloxyfop, haloxyfop-P, metamifop, quizalofop, quizalofop-P, alloxydim, butroxydim, clethodim, cloproxydim, cycloxydim, profoxydim, sethoxydim, tepraloxydim, tralkoxydim;

b2) amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, propoxycarbazone, flucarbazone, imazamethabenz, imazamox, imazapic, imazapyr, imazaquin, imazethapyr, cloransulam, diclosulam, florasulam, flumetsulam, metosulam, penoxsulam, bispyribac, pyribenzoxim, pyriftalid, pyrithiobac, pyriminobac;

b3) atrazine, cyanazine, simazine, terbuthylazine, hexazinone, metamitron, metribuzin, amicarbazone, chloridazon, chlorbromuron, chlorotoluron, diuron, isoproturon, linuron, methabenzthiazuron, propanil, bromoxynil, ioxynil, bentazone, pyridate, difenzoquat, diquat, paraquat;

b4) acifluorfen, fluoroglycofen, halosafen, lactofen, oxyfluorfen, fluazolate, pyraflufen, cinidon-ethyl, flumiclorac, flumioxazin, fluthiacet, oxadiazon, oxadiargyl, azafenidin, carfentrazone, sulfentrazone, pentoxazone, benzfendizone, butafenacil, pyraclonil, profluazol, flufenpyr, nipyraclofen, 2-chloro-5-[3,6-dihydro-3-methyl-2,6-dioxo-4-(trifluoromethyl)-1(2H)-pyrimidinyl]-N-(dimethylsulfamoyl)-4-fluorobenzamide, 5-[3-amino-3,6-dihydro-2,6-dioxo-4-(trifluoromethyl)-1(2H)-pyrimidinyl]-2-chloro-N-(dimethylsulfamoyl)-4-fluorobenzamide, 2-chloro-5-[3,6-dihydro-3-methyl-2,6-dioxo-4-(trifluoromethyl)-1(2H)-pyrimidinyl]-N-[(ethyl)methylsulfamoyl]-4-fluorobenzamide, 5-[3-amino-3,6-dihydro-2,6-dioxo-4-(trifluoromethyl)-1(2H)-pyrimidinyl]-2-chloro-N-[(ethyl)methylsulfamoyl]-4-fluorobenzamide, 2-chloro-5-[3,6-dihydro-3-methyl-2,6-dioxo-4-(trifluoromethyl)-1(2H)-pyrimidinyl]-4-fluoro-N-[(methyl)propylsulfamoyl]benzamide, 5-[3-amino-3,6-dihydro-2,6-dioxo-4-(trifluoromethyl)-1(2H)-pyrimidinyl]-2-chloro-4-fluoro-N-[(methyl)propylsulfamoyl]benzamide, 2-chloro-5-[3,6-dihydro-3-methyl-2,6-dioxo-4-(trifluoromethyl)-1(2H)-pyrimidinyl]-4-fluoro-N-[(isopropyl)methylsulfamoyl]benzamide, 5-[3-amino-3,6-dihydro-2,6-dioxo-4-(trifluoromethyl)-1(2H)-pyrimidinyl]-2-chloro-4-fluoro-N-[(isopropyl)methylsulfamoyl]benzamide, N-[(butyl)methylsulfamoyl]-2-chloro-5-[3,6-dihydro-3-methyl-2,6-dioxo-4-(trifluoromethyl)-1(2H)-pyrimidinyl]-4-fluorobenzamide, 5-[3-amino-3,6-dihydro-2,6-dioxo-4-(trifluoromethyl)-1(2H)-pyrimidinyl]-N-[(butyl)methylsulfamoyl]-2-chloro-4-fluorobenzamide, 2-chloro-5-[3,6-dihydro-3-methyl-2,6-dioxo-4-(trifluoromethyl)-1(2H)-pyrimidinyl]-4-fluoro-N-[(isobutyl)methylsulfamoyl]benzamide, 5-[3-amino-3,6-dihydro-2,6-dioxo-4-(trifluoromethyl)-1(2H)-pyrimidinyl]-2-chloro-4-fluoro-N-[(isobutyl)methylsulfamoyl]benzamide, 2-chloro-5-[3,6-dihydro-3-methyl-2,6-dioxo-4-(trifluoromethyl)-1(2H)-pyrimidinyl]-N-(dimethylsulfamoyl)benzamide, 5-[3-amino-3,6-dihydro-2,6-dioxo-4-(trifluoromethyl)-1(2H)-pyrimidinyl]-2-chloro-N-(dimethylsulfamoyl)benzamide, 2-chloro-5-[3,6-dihydro-3-methyl-2,6-dioxo-4-(trifluoromethyl)-1(2H)-pyrimidinyl]-N-[(ethyl)methylsulfamoyl]benzamide, 5-[3-amino-3,6-dihydro-2,6-dioxo-4-(trifluoromethyl)-1(2H)-pyrimidinyl]-2-chloro-N-[(ethyl)methylsulfamoyl]benzamide, 2-chloro-5-[3,6-dihydro-3-methyl-2,6-dioxo-4-(trifluoromethyl)-1(2H)-pyrimidinyl]-N-[(methyl)propylsulfamoyl]benzamide, 5-[3-amino-3,6-dihydro-2,6-dioxo-4-(trifluoromethyl)-1(2H)-pyrimidinyl]-2-chloro-N-[(methyl)propylsulfamoyl]benzamide, 2-chloro-5-[3,6-dihydro-3-methyl-2,6-dioxo-4-(trifluoromethyl)-1(2H)-pyrimidinyl]-N-[(isopropyl)methylsulfamoyl]benzamide, 5-[3-amino-3,6-dihydro-2,6-dioxo-4-(trifluoromethyl)-1(2H)-pyrimidinyl]-2-chloro-N-[(isopropyl)methylsulfamoyl]benzamide, N-[(butyl)methylsulfamoyl]-2-chloro-5-[3,6-dihydro-3-methyl-2,6-dioxo-4-(trifluoromethyl)-1(2H)-pyrimidinyl]benzamide, 5-[3-amino-3,6-dihydro-2,6-dioxo-4-(trifluoromethyl)-1(2H)-pyrimidinyl]-N-[(butyl)methylsulfamoyl]-2-chlorobenzamide, 2-chloro-5-[3,6-dihydro-3-methyl-2,6-dioxo-4-(trifluoromethyl)-1(2H)-pyrimidinyl]-N-[(isobutyl)methylsulfamoyl]benzamide, 5-[3-amino-3,6-dihydro-2,6-dioxo-4-(trifluoromethyl)-1(2H)-pyrimidinyl]-2-chloro-N-[(isobutyl)methylsulfamoyl]benzamide;

b5) norflurazon, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, clomazone, [2-chloro-3-(4,5-dihydro-3-isoxazolyl)-4-(methylsulfonyl)phenyl](5-hydroxy-1-methyl-1H-pyrazol-4-yl)methanone, [3-(4,5-dihydro-3-isoxazolyl)-2-methyl-4-(methylsulfonyl)phenyl](5-hydroxy-1-methyl-1H-pyrazol-4-yl)methanone, [2-chloro-3-(3-methyl-5-isoxazolyl)-4-(methylsulfonyl)phenyl](5-hydroxy-1-methyl-1H-pyrazol-4-yl)methanone, (5-hydroxy-1-methyl-1H-pyrazol-4-yl)[2-methyl-3-(3-methyl-5-isoxazolyl)-4-(methylsulfonyl)phenyl]methanone, and also 4-(3-trifluoromethylphenoxy)-2-(4-trifluoromethylphenyl)pyrimidine;

b6) glyphosate;

b7) glufosinate;

b9) benfluralin, butralin, dinitramine, ethalfluralin, oryzalin, pendimethalin, trifluralin, propyzamide;

b10) acetochlor, alachlor, butachlor, dimethenamid, dimethenamid-P, metazachlor, metolachlor, S-metolachlor, pethoxamid, pretilachlor, propachlor, propisochlor, thenylchlor, flufenacet, mefenacet, fentrazamide, cafenstrole, indanofan;

b11) dichlobenil, chlorthiamid, isoxaben and flupoxam;

b13) 2,4-D, 2,4-DB, dichlorprop, dichlorprop-P, MCPA, MCPB, mecoprop, mecoprop-P, dicamba, quinclorac, quinmerac, clopyralid, fluroxypyr, picloram, triclopyr, benazolin;

b14) diflufenzopyr;

b15) bromobutide, cinmethylin, methyldymron, oxaziclomefone, triaziflam, daimuron (dymron) and cumyluron;

and also their agriculturally acceptable salts and, in the case of compounds with a carboxyl group, also their agriculturally acceptable derivatives.

In a particularly preferred embodiment of the invention, the compositions according to the invention comprise, as active compound B), a compound selected from the group consisting of tepraloxydim, profoxydim, cyhalofop, sethoxydim, cyclosulfamuron, nicosulfuron, imazapyr, imazaquin, propoxycarbazone, pyrazosulfuron, imazamox, imazethapyr, imazapic, bentazone, atrazine, isoproturon, paraquat, clomazone, mesotrione, picolinafen, glyphosate, glufosinate, pendimethalin, acetochlor, S-metolachlor, flufenacet, dimethenamid-P, isoxaben, 2,4-D, quinclorac, dicamba, bromobutide, methyldymron, oxaziclomefone, daimuron (dymron), cumyluron and diflufenzopyr and also, in the case of ionizable or ionic herbicides such as tepraloxydim, profoxydim, sethoxydim, pyrazosulfuron, cyclosulfamuron, nicosulfuron, imazamox, imazethapyr, imazapic, imazapyr, imazaquin, propoxycarbazone, bentazone, paraquat, mesotrione, glyphosate, glufosinate, 2,4-D, dicamba, quinclorac and diflufenzopyr, their salts, in particular their salts with the cations or anions mentioned as being preferred, and also, in the case of compounds with a carboxyl group such as pyrazosulfuron, imazamox, imazethapyr, imazapic, imazapyr, imazaquin, 2,4-D, dicamba and quinclorac, their derivatives, in particular the esters or amides mentioned as being preferred.

Among the particularly preferred compositions according to the invention which comprise at least one protoporphyrinogen-IX oxidase inhibitor b4), one embodiment of the invention relates to those compositions which, as protoporphyrinogen-IX oxidase inhibitor b4), comprise a compound of the formula II. In this embodiment, preference is given to those compositions which comprise a compound of the formula II in which the variables $R^6$ to $R^{12}$ independently of one another and particularly preferably together have the following meanings:

$R^6$ is methyl or $NH_2$;
$R^7$ is trifluoromethyl;
$R^8$ is hydrogen, fluorine or chlorine, in particular fluorine or hydrogen;
$R^9$ is halogen or cyano, in particular chlorine or cyano;
$R^{10}$ is hydrogen;
$R^{11}$, $R^{12}$ independently of one another are hydrogen, $C_1$-$C_6$-alkyl, $C_3$-$C_6$-alkenyl, $C_3$-$C_6$-alkynyl, $C_3$-$C_7$-cycloalkyl, $C_3$-$C_7$-cycloalkenyl, phenyl or benzyl, or
$R^{11}$, $R^{12}$ together with the nitrogen atom form a pyrrolidine, piperidine, morpholine, N-methylpiperazine or perhydroazepine ring.

$R^{11}$, $R^{12}$ are in particular $C_1$-$C_6$-alkyl, which may be identical or different.

Among the compositions which comprise at least one bleacher herbicide b5) and are particularly preferred according to the invention, one embodiment of the invention relates to those compositions which, as bleacher herbicide b5), comprise a compound of the formula III. In this embodiment, preference is given to those compositions which comprise a compound of the formula III in which the variables $R^{13}$ to $R^{18}$ independently of one another and particularly preferably together have the following meanings:

$R^{13}$ is halogen, $C_1$-$C_4$-alkyl, $C_1$-$C_4$-alkylthio, $C_1$-$C_4$-alkylsulfinyl or $C_1$-$C_4$-alkylsulfonyl, in particular halogen or $C_1$-$C_4$-alkyl and especially methyl or chlorine;

$R^{14}$ is a heterocyclic radical selected from the group consisting of: isoxazol-3-yl, isoxazol-5-yl and 4,5-dihydroisoxazol -3-yl, where the three radicals mentioned may be unsubstituted or mono- or disubstituted by halogen, $C_1$-$C_4$-alkyl, $C_1$-$C_4$-alkoxy or $C_1$-$C_4$-haloalkyl, in particular isoxazol-5-yl or 4,5-dihydroisoxazol-3-yl, which may be substituted in the above manner, preferably by one or two $C_1$-$C_4$-alkyl, in particular methyl, groups, for example 4,5-dihydroisoxazol-3-yl or 3-methylisoxazol-5-yl;

$R^{15}$ is halogen, $C_1$-$C_4$-alkyl, $C_1$-$C_4$-alkylthio, $C_1$-$C_4$-alkylsulfinyl or $C_1$-$C_4$-alkylsulfonyl, in particular $C_1$-$C_4$-alkylsulfonyl and particularly preferably methylsulfonyl;

$R^{16}$ is hydrogen;

$R^{17}$ is $C_1$-$C_4$-alkyl;

$R^{18}$ is hydrogen or $C_1$-$C_4$-alkyl, in particular hydrogen.

In another particularly preferred embodiment of the invention, the compositions according to the invention comprise, as active compounds C, at least one of the compounds listed below: benoxacor, cloquintocet, dichlormid, fenchlorazole, fenclorim, fluxofenim, furilazole, isoxadifen, mefenpyr, 2,2,5-trimethyl-3-(dichloroacetyl)-1,3-oxazolidine, 4-(dichloroacetyl)-1-oxa-4-azaspiro[4.5]decane and oxabetrinil and/or an agriculturally acceptable salt thereof and/or, in the case of compounds having a COOH group, an agriculturally acceptable derivative.

In another particularly preferred embodiment of the invention, preference is given to those binary and ternary compositions which comprise at least one 7-pyrazolylbenzoxazole of the formula I as active compound A and at least one herbicide selected from classes b1) to b15) and, if appropriate, one or more safeners C. Very particular preference is given to those binary and ternary compositions which comprise at least one 7-pyrazolylbenzoxazole of the formula I as active compound A and at least one herbicide selected from classes b1), b2), b3), b5), b6), b7), b9), b10), b13), b14) and b15) and, if appropriate, one or more safeners C.

Particularly preferred are those compositions which comprise, as active compound A), a 7-pyrazolylbenzoxazole compound of the formula I in which $R^1$ is difluoromethoxy, $R^2$ is chlorine or bromine, $R^3$ is fluorine or chlorine, $R^4$ is Cl and $R^5$ is $C_1$-$C_4$-alkyl and, as active compound B), a compound selected from the group consisting of tepraloxydim, profoxydim, cyhalofop, sethoxydim, cyclosulfamuron, pyrazosulfuron, imazamox, imazethapyr, imazapic, imazapyr, imazaquin, nicosulfuron, propoxycarbazone, dicamba, bentazone, atrazine, isoproturon, paraquat, clomazone, mesotrione, picolinafen, glyphosate, glufosinate, pendimethalin, acetochlor, S-metolachlor, bromobutide, flufenacet, dimethenamid-P, isoxaben, 2,4-D, quinclorac, methyldymron, oxaziclomefone, daimuron (dymron), cumyluron and diflufenzopyr and also, in the case of ionizable or ionic herbicides such as tepraloxydim, profoxydim, sethoxydim, pyrazosulfuron, cyclosulfamuron, imazamox, imazethapyr, imazapic, imazapyr, imazaquin, nicosulfuron, propoxycarbazone, bentazone, paraquat, mesotrione, glyphosate, glufosinate, 2,4-D, dicamba and difluenzopyr, their salts, in particular with the anions or cations stated as being preferred and also, in the case of compounds having a carboxyl group such as pyrazosulfuron, imazamox, imazethapyr, imazapic, imazapyr, imazaquin, 2,4-D, dicamba and quinclorac, their derivatives, in particular

the esters or amides mentioned as being preferred.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b1), in particular selected from the group consisting of clodinafop, cyhalofop, diclofop, fenoxaprop, fenoxaprop-P, profoxydim, sethoxydim, tepraloxydim, tralkoxydim, dimepiperate, esprocarb, molinate and thiobencarb and, if desired, a safener C), in particular selected from the group consisting of fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b2), in particular selected from the group consisting of amidosulfuron, azimsulfuron, bensulfuron, chlorsulfuron, cinosulfuron, cyclosulfamuron, ethoxysulfuron, foramsulfuron, imazosulfuron, iodosulfuron, mesosulfuron, metsulfuron, nicosulfuron, primisulfuron, prosulfuron, pyrazosulfuron, rimsulfuron, sulfosulfuron, trifloxysulfuron, tritosulfuron, propoxycarbazone, flucarbazone, imazamethabenz, imazamox, imazapic, imazapyr, imazaquin, imazethapyr, metosulam, diclosulam, florasulam, penoxsulam, bispyribac, pyribenzoxim, pyriftalid and pyriminobac and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b3), in particular selected from the group consisting of atrazine, cyanazine, terbuthylazine, amicarbazone, chlorotoluron, diuron, isoproturon, methabenzthiazuron, bentazone, propanil, pentanochlor, pyridate, bromoxynil, ioxynil and paraquat and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b5), in particular selected from the group consisting of diflufenican, picolinafen, mesotrione, sulcotrione, isoxaflutole, benzofenap, pyrazolynate, pyrazoxyfen, benzobicyclon, aclonifen, 4-(3-trifluoromethylphenoxy)-2-(4-trifluoromethylphenyl)pyrimidine, [2-chloro-3-(4,5-dihydro-3-isoxazolyl)-4-(methylsulfonyl)phenyl](5-hydroxy-1-methyl-1H-pyrazol-4-yl)methanone and [3-(4,5-dihydro-3-isoxazolyl)-2-methyl-4-(methylsulfonyl)phenyl](5-hydroxy-1-methyl-1H-pyrazol-4-yl)methanone and, if desired, a safener C), in particular selected from the goup consisting of furilazole, fenclorazole, cloquintocet, ioxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b6), in particular glyphosate and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b7), in particular glufosinate and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b9), in particular pendimethalin and dithiopyr and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b10), in particular selected from the group consisting of acetochlor, butachlor, dimethenamid, dimethenamid-P, metolachlor, S-metolachlor, pethoxamid, pretilachlor, thenylchlor, flufenacet, mefenacet, naproanilide, fentrazamide, cafenstrole and indanofan and, if desired, a safener C), in particular selected from the group consisting of 2,2,5-trimethyl-3-(dichloroacetyl)-1,3-oxazolidine, dichlormid, furilazole, oxabetrinil, fluxofenim, benoxacor, fenclorim and 4-(dichloroacetyl)-1-oxa- 4-azaspiro[4.5]decane.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b13), in particular selected from the group consisting of 2,4-D, dichlorprop, dichlorprop-P, mecoprop, MCPA, mecoprop-P, dicamba, quinclorac and quinmerac and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b14), in particular diflufenzopyr and, if desired, a safener C), in particular selected from the group consisting of furilazole, fenclorazole, cloquintocet, isoxadifen and mefenpyr.

In another particularly preferred embodiment of the invention, preference is given to those compositions of the invention which comprise a 7-pyrazolylbenzoxazole of the formula I, especially of formula Ia, in combination with at least one and especially exactly one herbicidally active compound of the group b15), in particular selected from the group consisting of bromobutide, cinmethylin, methyldymron, pyributicarb, oxaziclomefone, triaziflam, daimuron (dymron) and cumyluron and, if desired, a safener C), in particular selected from the group consisting of furilazole, fenclorazole, cloquintocet, isoxadifen and mefenpyr.

In the preferred or especially preferred compositions described above the herbicides B) as well as the safeners C) can be used in the form of their agriculturally acceptable salts or in the form of an agriculturally acceptable derivative thereof as described above. The weight ratios of the individual components in the compositions are within the limits stated above. Among the especially preferred compositions, particular preference is given to those compositions of the invention in which the variables $R^1$ to $R^{15}$ have the preferred meanings, especially the particularly preferred meanings. Particular preference is given to 7-pyrazolylbenzoxazole of the formula Ia as defined above.

Here and below, the term "binary compositions" embraces compositions which comprise one or more, for example 2 or 3, active compounds A and one or more, for example 2 or 3, herbicides B. Correspondingly, the term "ternary compositions" embraces compositions which comprise one or more, for example 2 or 3, active compounds A, one or more, for example 2 or 3, herbicides B and one or more, for example 2 or 3, safeners C.

In binary compositions which comprise at least one 7-pyrazolylbenzoxazole of the formula I as component A and at least one herbicide B, the weight ratio of the active compounds A:B is generally in the range from 1:500 to 10:1, preferably in the range from 1:100 to 10:1, in particular in the range from 1:50 to 10:1 and particularly preferably in the range from 1:25 to 5:1.

In ternary compositions comprising both a 7-pyrazolylbenzoxazole I as component A, at least one herbicide B and at least one safener C, the relative weight proportions of the components A:B:C are generally in the range from 10:1:1 to 1:500:10, preferably from 10:1:1 to 1:100:10, in particular from 10:1:1 to 1:50:1 and particularly preferably from 5:1:1 to 1:25:5. In these ternary compositions, the weight ratio of herbicide B to safener C is preferably in the range from 50:1 to 1:10.

Examples of compositions which are preferred according to the invention are those which, as active compound A), comprise the 7-pyrazolylbenzoxazole I.1 and, as further active compound, the substance(s) stated in one row of Table 2 (compositions 1.1 to 1.370). The weight ratios of the individual components in the compositions 1.1 to 1.370 are within the limits stated above, in particular within the preferred limits, in the case of binary mixtures of 7-pyrazolylbenzoxazole I.1 and herbicide B) for example 1:1, 1:2, 1:5, 1:10, 1:20 or 1:50 or in the case of a ternary mixture of 7-pyrazolylbenzoxazole I.1, herbicide B and safener C for example 1:1:1, 2:1:1, 1:2:1, 1:5:1 or 1:5:2.

Table 2:

| Composition No. | Herbicide B) | Safener C) |
|---|---|---|
| 1.1 | clodinafop | |
| 1.2 | clodinafop | cloquintocet |
| 1.3 | clodinafop | fenchlorazole |
| 1.4 | clodinafop | isoxadifen |
| 1.5 | clodinafop | mefenpyr |
| 1.6 | cyhalofop | |
| 1.7 | cyhalofop | cloquintocet |
| 1.8 | cyhalofop | fenchlorazole |
| 1.9 | cyhalofop | isoxadifen |
| 1.10 | cyhalofop | mefenpyr |
| 1.11 | diclofop | |
| 1.12 | diclofop | cloquintocet |

Table continued

| Composition No. | Herbicide B) | Safener C) |
|---|---|---|
| 1.13 | diclofop | fenchlorazole |
| 1.14 | diclofop | isoxadifen |
| 1.15 | diclofop | mefenpyr |
| 1.16 | fenoxaprop | |
| 1.17 | fenoxaprop | cloquintocet |
| 1.18 | fenoxaprop | fenchlorazole |
| 1.19 | fenoxaprop | isoxadifen |
| 1.20 | fenoxaprop | mefenpyr |
| 1.21 | fenoxaprop-P | - |
| 1.22 | fenoxaprop-P | cloquintocet |
| 1.23 | fenoxaprop-P | fenchlorazole |
| 1.24 | fenoxaprop-P | isoxadifen |
| 1.25 | fenoxaprop-P | mefenpyr |
| 1.26 | fluazifop | - |
| 1.27 | fluazifop | cloquintocet |
| 1.28 | fluazifop | fenchlorazole |
| 1.29 | fluazifop | isoxadifen |
| 1.30 | fluazifop | mefenpyr |
| 1.31 | fluazifop-P | - |
| 1.32 | fluazifop-P | cloquintocet |
| 1.33 | fluazifop-P | fenchlorazole |
| 1.34 | fluazifop-P | isoxadifen |
| 1.35 | fluazifop-P | mefenpyr |
| 1.36 | haloxyfop | - |
| 1.37 | haloxyfop | cloquintocet |
| 1.38 | haloxyfop | fenchlorazole |
| 1.39 | haloxyfop | isoxadifen |
| 1.40 | haloxyfop | mefenpyr |
| 1.41 | haloxyfop-P | - |
| 1.42 | haloxyfop-P | cloquintocet |
| 1.43 | haloxyfop-P | fenchlorazole |
| 1.44 | haloxyfop-P | isoxadifen |
| 1.45 | haloxyfop-P | mefenpyr |
| 1.46 | quizalofop | - |
| 1.47 | quizalofop | cloquintocet |
| 1.48 | quizalofop | fenchlorazole |
| 1.49 | quizalofop | isoxadifen |
| 1.50 | quizalofop | mefenpyr |

Table continued

| Composition No. | Herbicide B) | Safener C) |
|---|---|---|
| 1.51 | quizalofop-P | - |
| 1.52 | quizalofop-P | cloquintocet |
| 1.53 | quizalofop-P | fenchlorazole |
| 1.54 | quizalofop-P | isoxadifen |
| 1.55 | quizalofop-P | mefenpyr |
| 1.56 | alloxydim | - |
| 1.57 | butroxydim | - |
| 1.58 | clethodim | - |
| 1.59 | cloproxydim | - |
| 1.60 | cycloxydim | - |
| 1.61 | profoxydim | - |
| 1.62 | sethoxydim | - |
| 1.63 | tepraloxydim | - |
| 1.64 | tralkoxydim | - |
| 1.65 | amidosulfuron | - |
| 1.66 | amidosulfuron | cloquintocet |
| 1.67 | amidosulfuron | fenchlorazole |
| 1.68 | amidosulfuron | isoxadifen |
| 1.69 | amidosulfuron | mefenpyr |
| 1.70 | amidosulfuron | furilazole |
| 1.71 | azimsulfuron | - |
| 1.72 | bensulfuron | - |
| 1.73 | chlorimuron | - |
| 1.74 | chlorsulfuron | - |
| 1.75 | cinosulfuron | - |
| 1.76 | cyclosulfamuron | - |
| 1.77 | ethametsulfuron | - |
| 1.78 | ethoxysulfuron | - |
| 1.79 | flazasulfuron | - |
| 1.80 | flupyrsulfuron | - |
| 1.81 | foramsulfuron | - |
| 1.82 | foramsulfuron | cloquintocet |
| 1.83 | foramsulfuron | fenchlorazole |
| 1.84 | foramsulfuron | isoxadifen |
| 1.85 | foramsulfuron | mefenpyr |
| 1.86 | foramsulfuron | furilazole |
| 1.87 | halosulfuron | - |
| 1.88 | halosulfuron | cloquintocet |

Table continued

| Composition No. | Herbicide B) | Safener C) |
|---|---|---|
| 1.89 | halosulfuron | fenchlorazole |
| 1.90 | halosulfuron | isoxadifen |
| 1.91 | halosulfuron | mefenpyr |
| 1.92 | halosulfuron | furilazole |
| 1.93 | imazosulfuron | - |
| 1.94 | iodosulfuron | - |
| 1.95 | iodosulfuron | cloquintocet |
| 1.96 | iodosulfuron | fenchlorazole |
| 1.97 | iodosulfuron | isoxadifen |
| 1.98 | iodosulfuron | mefenpyr |
| 1.99 | iodosulfuron | furilazole |
| 1.100 | mesosulfuron | - |
| 1.101 | mesosulfuron | cloquintocet |
| 1.102 | mesosulfuron | fenchlorazole |
| 1.103 | mesosulfuron | isoxadifen |
| 1.104 | mesosulfuron | mefenpyr |
| 1.105 | mesosulfuron | furilazole |
| 1.106 | metsulfuron | - |
| 1.107 | nicosulfuron | - |
| 1.108 | oxasulfuron | - |
| 1.109 | primisulfuron | - |
| 1.110 | prosulfuron | - |
| 1.111 | pyrazosulfuron | - |
| 1.112 | rimsulfuron | - |
| 1.113 | sulfometuron | - |
| 1.114 | sulfosulfuron | - |
| 1.115 | thifensulfuron | - |
| 1.116 | triasulfuron | - |
| 1.117 | tribenuron | - |
| 1.118 | trifloxysulfuron | - |
| 1.119 | triflusulfuron | - |
| 1.120 | tritosulfuron | - |
| 1.121 | propoxycarbazone | - |
| 1.122 | flucarbazone | - |
| 1.123 | imazamethabenz | - |
| 1.124 | imazamox | - |
| 1.125 | imazapic | - |
| 1.126 | imazapyr | - |

Table continued

| Composition No. | Herbicide B) | Safener C) |
|---|---|---|
| 1.127 | imazaquin | - |
| 1.128 | imazethapyr | - |
| 1.129 | cloransulam | - |
| 1.130 | diclosulam | - |
| 1.131 | florasulam | - |
| 1.132 | flumetsulam | - |
| 1.133 | metosulam | - |
| 1.134 | penoxsulam | - |
| 1.135 | bispyribac | - |
| 1.136 | pyribenzoxim | - |
| 1.137 | pyriftalid | - |
| 1.138 | pyrithiobac | - |
| 1.139 | pyriminobac | - |
| 1.140 | atrazine | - |
| 1.141 | cyanazine | - |
| 1.142 | simazine | - |
| 1.143 | terbuthylazine | - |
| 1.144 | hexazinone | - |
| 1.145 | metamitron | - |
| 1.146 | metribuzin | - |
| 1.147 | amicarbazone | - |
| 1.148 | chloridazone | - |
| 1.149 | chlorbromuron | - |
| 1.150 | chlorotoluron | - |
| 1.151 | diuron | - |
| 1.152 | isoproturon | - |
| 1.153 | linuron | - |
| 1.154 | methabenzthiazuron | - |
| 1.155 | propanil | - |
| 1.156 | bromoxynil | - |
| 1.157 | ioxynil | - |
| 1.158 | bentazone | - |
| 1.159 | pyridate | - |
| 1.160 | difenzoquat | - |
| 1.161 | diquat | - |
| 1.162 | paraquat | - |
| 1.163 | acifluorfen | - |
| 1.164 | fluoroglycofen | - |

Table continued

| Composition No. | Herbicide B) | Safener C) |
|---|---|---|
| 1.165 | halosafen | - |
| 1.166 | lactofen | - |
| 1.167 | oxyfluorfen | - |
| 1.168 | fluazolate | - |
| 1.169 | pyraflufen | - |
| 1.170 | cinidon-ethyl | - |
| 1.171 | flumiclorac | - |
| 1.172 | flumioxazin | - |
| 1.173 | fluthiacet | - |
| 1.174 | oxadiazone | - |
| 1.175 | oxadiargyl | - |
| 1.176 | azafenidin | - |
| 1.177 | carfentrazone | - |
| 1.178 | sulfentrazone | - |
| 1.179 | pentoxazone | - |
| 1.180 | benzfendizone | - |
| 1.181 | butafenacil | - |
| 1.182 | pyraclonil | - |
| 1.183 | profluazol | - |
| 1.184 | flufenpyr | - |
| 1.185 | nipyraclofen | - |
| 1.186 | 2-chloro-5-[3,6-dihydro-3-methyl-2,6-dioxo-4-(trifluoromethyl)-1(2H)-pyrimidinyl]-N-(dimethylsulfamoyl)-4-fluorobenzamide | - |
| 1.187 | 5-(3-amino-3,6-dihydro-2,6-dioxo-4-(trifluoromethyl)-1(2H)-pyrimidinyl]-2-chloro-N-(dimethylsulfamoyl)-4-fluorobenzamide | - |
| 1.188 | 2-chloro-5-[3,6-dihydro-3-methyl-2,6-dioxo-4-(trifluoromethyl)-1(2H)-pyrimidinyl]-N-[(ethyl)-methylsulfamoyl]-4-fluorobenzamide | - |
| 1.189 | 5-[3-amino-3,6-dihydro-2,6-dioxo-4-(trifluoromethyl)-1(2H)-pyrimidinyl]-2-chloro-N-[(ethyl)-methylsulfamoyl]-4-fluorobenzamide | - |
| 1.190 | 2-chloro-5-[3,6-dihydro-3-methyl-2,6-dioxo-4-(trifluoromethyl)-1(2H)-pyrimidinyl]-4-fluoro-N-[(methyl) propylsulfamoyl]benzamide | - |
| 1.191 | 5-[3-amino-3,6-dihydro-2,6-dioxo-4-(trifluoromethyl)-1(2H)-pyrimidinyl]-2-chloro-4-fluoro-N-[(methyl) propylsulfamoyl]benzamide | - |

Table continued

| Composition No. | Herbicide B) | Safener C) |
|---|---|---|
| 1.192 | 2-chloro-5-[3,6-dihydro-3-methyl-2,6-dioxo-4-(trifluoromethyl)-1(2H)-pyrimidinyl]-4-fluoro-N-[(isopropyl)methylsulfamoyl]-benzamide | - |
| 1.193 | 5-[3-amino-3,6-dihydro-2,6-dioxo-4-(trifluoromethyl)-1(2H)-pyrimidinyl]-2-chloro-4-fluoro-N-[(isopropyl)methylsulfamoyl]-benzamide | - |
| 1.194 | N-[(butyl)methylsulfamoyl]-2-chloro-5-[3,6-dihydro-3-methyl-2,6-dioxo-4-(trifluoromethyl)-1(2H)-pyrimidinyl]-4-fluorobenzamide | - |
| 1.195 | 5-[3-amino-3,6-dihydro-2,6-dioxo- 4-(trifluoromethyl)-1(2H)-pyrimidinyl]-N-[(butyl)-methylsulfamoyl]-2-chloro-4-fluorobenzamide | - |
| 1.196 | 2-chloro-5-[3,6-dihydro-3-methyl-2,6-dioxo-4-(trifluoromethyl)-1(2H)-pyrimidinyl]-4-fluoro-N-[(isobutyl)methylsulfamoyl]-benzamide | - |
| 1.197 | 5-[3-amino-3,6-dihydro-2,6-dioxo-4-(trifluoromethyl)-1(2H)-pyrimidinyl]-2-chloro-4-fluoro-N-[(isobutyl)methylsulfamoyl]-benzamide | - |
| 1.198 | norflurazone | - |
| 1.199 | diflufenican | - |
| 1.200 | picolinafen | - |
| 1.201 | beflubutamid | - |
| 1.202 | fluridone | - |
| 1.203 | flurochloridone | - |
| 1.204 | flurtamone | - |
| 1.205 | mesotrione | - |
| 1.206 | sulcotrione | - |
| 1.207 | isoxachlortole | - |
| 1.208 | isoxaflutole | - |
| 1.209 | benzofenap | - |
| 1.210 | pyrazolynate | - |
| 1.211 | pyrazoxyfen | - |
| 1.212 | benzobicyclon | - |
| 1.213 | clomazone | - |
| 1.214 | [2-chloro-3-(4,5-dihydro-3-isoxazolyl)-4-(methylsulfonyl)-phenyl](5-hydroxy-1-methyl-1H-pyrazol-4-yl)methanone | - |
| 1.215 | [3-(4,5-dihydro-3-isoxazolyl)-2-methyl-4-(methylsulfonyl)phenyl]-(5-hydroxy-1-methyl-1H-pyrazol-4-yl)methanone | - |
| 1.216 | [2-chloro-3-(3-methyl-5-isoxazolyl)-4-(methylsulfonyl)-phenyl](5-hydroxy-1-methyl-1H-pyrazol-4-yl)methanone | - |

Table continued

| Composition No. | Herbicide B) | Safener C) |
|---|---|---|
| 1.217 | (5-hydroxy-1-methyl-1H-pyrazol-4-yl)[2-methyl-3-(3-methyl-5-isoxazolyl)-4-(methylsulfonyl)-phenyl] methanone | - |
| 1.218 | glyphosate | - |
| 1.219 | glufosinate | - |
| 1.220 | benfluralin | - |
| 1.221 | butralin | - |
| 1.222 | dinitramine | - |
| 1.223 | ethalfluralin | - |
| 1.224 | oryzalin | - |
| 1.225 | pendimethalin | - |
| 1.226 | trifluralin | - |
| 1.227 | propyzamide | - |
| 1.228 | acetochlor | - |
| 1.229 | acetochlor | dichlormid |
| 1.230 | acetochlor | furilazole |
| 1.231 | acetochlor | oxabetrinil |
| 1.232 | acetochlor | fluxofenim |
| 1.233 | acetochlor | benoxacor |
| 1.234 | acetochlor | fenclorim |
| 1.235 | alachlor | - |
| 1.236 | butachlor | - |
| 1.237 | butachlor | dichlormid |
| 1.238 | butachlor | furilazole |
| 1.239 | butachlor | oxabetrinil |
| 1.240 | butachlor | fluxofenim |
| 1.241 | butachlor | benoxacor |
| 1.242 | butachlor | fenclorim |
| 1.243 | dimethenamid | - |
| 1.244 | dimethenamid | dichlormid |
| 1.245 | dimethenamid | furilazole |
| 1.246 | dimethenamid | oxabetrinil |
| 1.247 | dimethenamid | fluxofenim |
| 1.248 | dimethenamid | benoxacor |
| 1.249 | dimethenamid | fenclorim |
| 1.250 | dimethenamid-P | - |
| 1.251 | dimethenamid-P | dichlormid |
| 1.252 | dimethenamid-P | furilazole |

Table continued

| Composition No. | Herbicide B) | Safener C) |
|---|---|---|
| 1.253 | dimethenamid-P | oxabetrinil |
| 1.254 | dimethenamid-P | fluxofenim |
| 1.255 | dimethenamid-P | benoxacor |
| 1.256 | dimethenamid-P | fenclorim |
| 1.257 | metazachlor | - |
| 1.258 | metolachlor | - |
| 1.259 | metolachlor | dichlormid |
| 1.260 | metolachlor | furilazole |
| 1.261 | metolachlor | oxabetrinil |
| 1.262 | metolachlor | fluxofenim |
| 1.263 | metolachlor | benoxacor |
| 1.264 | metolachlor | fenclorim |
| 1.265 | S-metolachlor | - |
| 1.266 | S-metolachlor | dichlormid |
| 1.267 | S-metolachlor | furilazole |
| 1.268 | S-metolachlor | oxabetrinil |
| 1.269 | S-metolachlor | fluxofenim |
| 1.270 | S-metolachlor | benoxacor |
| 1.271 | S-metolachlor | fenclorim |
| 1.272 | pethoxamid | - |
| 1.273 | pretilachlor | - |
| 1.274 | pretilachlor | dichlormid |
| 1.275 | pretilachlor | furilazole |
| 1.276 | pretilachlor | oxabetrinil |
| 1.277 | pretilachlor | fluxofenim |
| 1.278 | pretilachlor | benoxacor |
| 1.279 | pretilachlor | fenclorim |
| 1.280 | flupoxam | - |
| 1.281 | propachlor | - |
| 1.282 | propisochlor | - |
| 1.283 | thenylchlor | - |
| 1.284 | flufenacet | - |
| 1.285 | mefenacet | - |
| 1.286 | fentrazamide | - |
| 1.287 | cafenstrole | - |
| 1.288 | indanofan | - |
| 1,289 | dichlobenil | - |
| 1.290 | chlorthiamid | - |

Table continued

| Composition No. | Herbicide B) | Safener C) |
|---|---|---|
| 1.291 | isoxaben | - |
| 1.292 | 2,4-D | - |
| 1.293 | 2,4-DB | - |
| 1.294 | dichlorprop | - |
| 1.295 | dichlorprop-P | - |
| 1.296 | MCPA | - |
| 1.297 | MCPB | - |
| 1.298 | mecoprop | - |
| 1.299 | mecoprop-P | - |
| 1.300 | dicamba | - |
| 1.301 | quinclorac | - |
| 1.302 | quinmerac | - |
| 1.303 | clopyralid | - |
| 1.304 | fluroxypyr | - |
| 1.305 | picloram | - |
| 1.306 | triclopyr | - |
| 1.307 | benazolin | - |
| 1.308 | diflufenzopyr | - |
| 1.309 | bromobutide | - |
| 1.310 | cinmethylin | - |
| 1.311 | methyldymron | - |
| 1.312 | oxaziclomefone | - |
| 1.313 | triaziflam | - |
| 1.331 | 4-(3-trifluoromethylphenoxy)-2-(4-trifluoromethylphenyl) pyrimidine | - |
| 1.332 | 2-chloro-5-[3,6-dihydro-3-methyl-2,6-dioxo-4-(trifluoromethyl)-1 (2H)-pyrimidinyl]-N-(dimethylsulfamoyl)benzamide | - |
| 1.333 | 5-[3-amino-3,6-dihydro-2,6-dioxo-4-(trifluoromethyl)-1 (2H)-pyrimidinyl]-2-chloro-N-(dimethylsulfamoyl) benzamide | - |
| 1.334 | 2-chloro-5-[3,6-dihydro-3-methyl-2,6-dioxo-4-(trifluoromethyl)-1 (2H)-pyrimidinyl]-N-[(ethyl)-methylsulfamoyl]benzamide | - |
| 1.335 | 5-[3-amino-3,6-dihydro-2,6-dioxo-4-(trifluoromethyl)-1 (2H)-pyrimidinyl]-2-chloro-N-[(ethyl)methylsulfamoyl] benzamide | - |
| 1.336 | 2-chloro-5-[3,6-dihydro-3-methyl-2,6-dioxo-4-(trifluoromethyl)-1 (2H)-pyrimidinyl]-N-[(methyl)-propylsulfamoylibenzamide | - |

Table continued

| Composition No. | Herbicide B) | Safener C) |
|---|---|---|
| 1.337 | 5-[3-amino-3,6-dihydro-2,6-dioxo-4-(trifluoromethyl)-1(2H)-pyrimidinyl]-2-chloro-N-[(methyl)propylsulfamoyl] benzamide | - |
| 1.338 | 2-chloro-5-[3,6-dihydro-3-methyl-2,6-dioxo-4-(trifluoromethyl)-1(2H)-pyrimidinyl]-N-[(isopropyl) methylsulfamoyl]-benzamide | - |
| 1.339 | 5-[3-amino-3,6-dihydro-2,6-dioxo-4-(trifluoromethyl)-1(2H)-pyrimidinyl]-2-chloro-N-[(isopropyl) methylsulfamoyl]-benzamide | - |
| 1.340 | N-[(butyl)methylsulfamoyl]-2-chloro-5-[3,6-dihydro-3-methyl-2,6-dioxo-4-(trifluoromethyl)-1(2H)-pyrimidinyl] benzamide | - |
| 1.341 | 5-[3-amino-3,6-dihydro-2,6-dioxo-4-(trifluoromethyl)-1(2H)-pyrimidinyl]-N-[(butyl)-methylsulfamoyl]-2-chlorobenzamide | - |
| 1.342 | 2-chloro-5-[3,6-dihydro-3-methyl-2,6-dioxo-4-(trifluoromethyl)-1(2H)-pyrimidinyl]-N-[(isobutyl) methylsulfamoyl]-benzamide | - |
| 1.343 | 5-[3-amino-3,6-dihydro-2,6-dioxo-4-(trifluoromethyl)-1(2H)-pyrimidinyl]-2-chloro-N-[(isobutyl) methylsulfamoyl]-benzamide | - |
| 1.344 | acetochlor | 2,2,5-trimethyl-3-(dichloroacetyl)-1,3-oxazolidine |
| 1.345 | butachlor | 2,2,5-trimethyl-3-(dichloroacetyl)-1,3-oxazolidine |
| 1.346 | dimethenamid | 2,2,5-trimethyl-3-(dichloroacetyl)-1,3-oxazolidine |
| 1.347 | dimethenamid-P | 2,2,5-trimethyl-3-(dichloroacetyl)-1,3-oxazolidine |
| 1.348 | metolachlor | 2,2,5-trimethyl-3-(dichloroacetyl)-1,3-oxazolidine |
| 1.349 | S-metolachlor | 2,2,5-trimethyl-3-(dichloroacetyl)-1,3-oxazolidine |
| 1.350 | pretilachlor | 2,2,5-trimethyl-3-(dichloroacetyl)-1,3-oxazolidine |
| 1.351 | pethoxamid | 2,2,5-trimethyl-3-(dichloroacetyl)-1,3-oxazolidine |
| 1.352 | pethoxamid | dichlormid |
| 1.353 | pethoxamid | furilazole |
| 1.354 | pethoxamid | oxabetrinil |
| 1.355 | pethoxamid | fluxofenim |
| 1.356 | pethoxamid | benoxacor |
| 1.357 | pethoxamid | fenclorim |
| 1.358 | pethoxamid | 4-(dichloroacetyl)-1-oxa-4-azaspiro[4.5]-decane |

Table continued

| Composition No. | Herbicide B) | Safener C) |
|---|---|---|
| 1.359 | acetochlor | 4-(dichloroacetyl)-1-oxa-4-azaspiro[4.5]-decane |
| 1.360 | butachlor | 4-(dichloroacetyl)-1-oxa-4-azaspiro[4.5]-decane |
| 1.361 | dimethenamid | 4-(dichloroacetyl)-1-oxa-4-azaspiro[4.5]-decane |
| 1.362 | dimethenamid-P | 4-(dichloroacetyl)-1-oxa-4-azaspiro[4.5]-decane |
| 1.363 | metolachlor | 4-(dichloroacetyl)-1-oxa-4-azaspiro[4.5]-decane |
| 1.364 | S-metolachlor | 4-(dichloroacetyl)-1-oxa-4-azaspiro[4.5]-decane |
| 1.365 | pretilachlor | 4-(dichloroacetyl)-1-oxa-4-azaspiro[4.5]-decane |
| 1.366 | metamifop | - |
| 1.367 | metamifop | cloquintocet |
| 1.368 | metamifop | fenchlorazole |
| 1.369 | metamifop | isoxadifen |
| 1.370 | metamifop | mefenpyr |

If the active compounds mentioned in Table 2 have ionizable functional groups, preference is also given to those mixtures in which the active compounds listed are in each case replaced by their agriculturally acceptable salts, in particular, in the case of compounds which can be deprotonated, by their lithium, sodium, potassium, calcium, magnesium, ammonium, methylammonium, isopropylammonium, dimethylammonium, diisopropylammonium, trimethylammonium, 2-hydroxyethylammonium, 2-(2-hydroxyeth-1-oxy)eth-1-ylammonium, di-(2-hydroxyethyl)ammonium or trimethylsulfonium salts and also, in the case of protonatable or cationic compounds, by their chloride, bromide, hydrogensulfate, methylsulfate, sulfate, dihydrogenphosphate or hydrogenphosphate salts or acid addition salts. If the active compounds mentioned in Table 2 have a carboxyl group, preference is also given to those mixtures where the active compounds listed are in each case replaced by their agriculturally acceptable derivatives, in particular their methyl- or dimethylamides, their anilides or 2-chloroanilides, their methyl, ethyl, propyl, isopropyl, butyl, isobutyl, pentyl, mexyl, isooctyl, methoxyethyl, ethoxyethyl or butoxyethyl esters or their thioethyl esters.

Preference is also given to the compositions 2.1 - 2.370 which differ from the corresponding compositions 1.1 - 1.370 only in that the 7-pyrazolylbenzoxazole I.1 is replaced by the 7-pyrazolylbenzoxazole I.2.

Preference is also given to the compositions 3.1 - 3.370 which differ from the corresponding compositions 1.1 - 1.370 only in that the 7-pyrazolylbenzoxazole I.1 is replaced by the 7-pyrazolylbenzoxazole I.3.

Preference is also given to the compositions 4.1 - 4.370 which differ from the corresponding compositions 1.1 - 1.370 only in that the 7-pyrazolylbenzoxazole I.1 is replaced by the 7-pyrazolylbenzoxazole I.4.

Preference is also given to the compositions 5.1 - 5.370 which differ from the corresponding compositions 1.1 - 1.370 only in that the 7-pyrazolylbenzoxazole I.1 is replaced by the 7-pyrazolylbenzoxazole 1.5.

Preference is also given to the compositions 6.1 - 6.370 which differ from the corresponding compositions 1.1 - 1.370 only in that the 7-pyrazolylbenzoxazole I.1 is replaced by the 7-pyrazolylbenzoxazole I.6.

Preference is also given to the compositions 7.1 - 7.370 which differ from the corresponding compositions 1.1 - 1.370 only in that the 7-pyrazolylbenzoxazole 1.1 is replaced by the 7-pyrazolylbenzoxazole 1.7.

Preference is also given to the compositions 8.1 - 8.370 which differ from the corresponding compositions 1.1 - 1.370 only in that the 7-pyrazolylbenzoxazole 1.1 is replaced by the 7-pyrazolylbenzoxazole 1.8.

Preference is also given to the compositions 9.1 - 9.370 which differ from the corresponding compositions 1.1 - 1.370 only in that the 7-pyrazolylbenzoxazole I.1 is replaced by the 7-pyrazolylbenzoxazole I.9.

Preference is also given to the compositions 10.1 - 10.370 which differ from the corresponding compositions 1.1 - 1.370 only in that the 7-pyrazolylbenzoxazole I.1 is replaced by the 7-pyrazolylbenzoxazole I.10.

Preference is also given to the compositions 11.1 - 11.370 which differ from the corresponding compositions 1.1 - 1.370 only in that the 7-pyrazolylbenzoxazole I.1 is replaced by the 7-pyrazolylbenzoxazole I.11.

Preference is also given to the compositions 12.1 - 12.370 which differ from the corresponding compositions 1.1 - 1.370 only in that the 7-pyrazolylbenzoxazole 1.1 is replaced by the 7-pyrazolylbenzoxazole 1.12.

Preference is also given to the compositions 13.1 - 13.370 which differ from the corresponding compositions 1.1 - 1.370 only in that the 7-pyrazolylbenzoxazole I.1 is replaced by the 7-pyrazolylbenzoxazole I.13.

Preference is also given to the compositions 14.1 - 14.370 which differ from the corresponding compositions 1.1 - 1.370 only in that the 7-pyrazolylbenzoxazole I.1 is replaced by the 7-pyrazolylbenzoxazole I.14.

Preference is also given to the compositions 15.1 - 15.370 which differ from the corresponding compositions 1.1 - 1.370 only in that the 7-pyrazolylbenzoxazole 1.1 is replaced by the 7-pyrazolylbenzoxazole I.15.

Preference is also given to the compositions 16.1 - 16.370 which differ from the corresponding compositions 1.1 - 1.370 only in that the 7-pyrazolylbenzoxazole I.1 is replaced by the 7-pyrazolylbenzoxazole I.16.

Preference is also given to the compositions 17.1 - 17.370 which differ from the corresponding compositions 1.1 - 1.370 only in that the 7-pyrazolylbenzoxazole I.1 is replaced by the 7-pyrazolylbenzoxazole I.17.

Preference is also given to the compositions 18.1 - 18.370 which differ from the corresponding compositions 1.1 - 1.370 only in that the 7-pyrazolylbenzoxazole I.1 is replaced by the 7-pyrazolylbenzoxazole I.18.

Preference is also given to the compositions 19.1 - 19.370 which differ from the corresponding compositions 1.1 - 1.370 only in that the 7-pyrazolylbenzoxazole I.1 is replaced by the 7-pyrazolylbenzoxazole I.19.

Preference is also given to the compositions 20.1 - 20.370 which differ from the corresponding compositions 1.1 - 1.370 only in that the 7-pyrazolylbenzoxazole I.1 is replaced by the 7-pyrazolylbenzoxazole I.20.

Preference is also given to the compositions 21.1 - 21.370 which differ from the corresponding compositions 1.1 - 1.370 only in that the 7-pyrazolylbenzoxazole I.1 is replaced by the 7-pyrazolylbenzoxazole I.21.

Preference is also given to the compositions 22.1 - 22.370 which differ from the corresponding compositions 1.1 - 1.370 only in that the 7-pyrazolylbenzoxazole I.1 is replaced by the 7-pyrazolylbenzoxazole I.22.

Preference is also given to the compositions 23.1 - 23.370 which differ from the corresponding compositions 1.1 - 1.370 only in that the 7-pyrazolylbenzoxazole I.1 is replaced by the 7-pyrazolylbenzoxazole I.23.

Preference is also given to the compositions 24.1 - 24.370 which differ from the corresponding compositions 1.1 - 1.370 only in that the 7-pyrazolylbenzoxazole I.1 is replaced by the 7-pyrazolylbenzoxazole I.24.

Preference is also given to the compositions 25.1 - 25.370 which differ from the corresponding compositions 1.1 - 1.370 only in that the 7-pyrazolylbenzoxazole I.1 is replaced by the 7-pyrazolylbenzoxazole I.25.

Preference is also given to the compositions 26.1 - 26.370 which differ from the corresponding compositions 1.1 - 1.370 only in that the 7-pyrazolylbenzoxazole I.1 is replaced by the 7-pyrazolylbenzoxazole I.26.

Preference is also given to the compositions 27.1 - 27.370 which differ from the corresponding compositions 1.1 - 1.370 only in that the 7-pyrazolylbenzoxazole I.1 is replaced by the 7-pyrazolylbenzoxazole I.27.

Preference is also given to the compositions 28.1 - 28.370 which differ from the corresponding compositions 1.1 - 1.370 only in that the 7-pyrazolylbenzoxazole I.1 is replaced by the 7-pyrazolylbenzoxazole I.28.

Preference is also given to the compositions 29.1 - 29.370 which differ from the corresponding compositions 1.1 - 1.370 only in that the 7-pyrazolylbenzoxazole I.1 is replaced by the 7-pyrazolylbenzoxazole I.29.

Preference is also given to the compositions 30.1 - 30.370 which differ from the corresponding compositions 1.1 - 1.370 only in that the 7-pyrazolylbenzoxazole 1.1 is replaced by the 7-pyrazolylbenzoxazole I.30.

Preference is also given to the compositions 31.1 - 31.370 which differ from the corresponding compositions 1.1 - 1.370 only in that the 7-pyrazolylbenzoxazole I.1 is replaced by the 7-pyrazolylbenzoxazole I.31.

Preference is also given to the compositions 32.1 - 32.370 which differ from the corresponding compositions 1.1 - 1.370 only in that the 7-pyrazolylbenzoxazole I.1 is replaced by the 7-pyrazolylbenzoxazole I.32.

Preference is also given to the compositions 33.1 - 33.370 which differ from the corresponding compositions 1.1 - 1.370 only in that the 7-pyrazolylbenzoxazole 1.1 is replaced by the 7-pyrazolylbenzoxazole 1.33.

Preference is also given to the compositions 34.1 - 34.370 which differ from the corresponding compositions 1.1 - 1.370 only in that the 7-pyrazolylbenzoxazole I.1 is replaced by the 7-pyrazolylbenzoxazole I.34.

Preference is also given to the compositions 35.1 - 35.370 which differ from the corresponding compositions 1.1 - 1.370 only in that the 7-pyrazolylbenzoxazole I.1 is replaced by the 7-pyrazolylbenzoxazole I.35.

Preference is also given to the compositions 36.1 - 36.370 which differ from the corresponding compositions 1.1 - 1.370 only in that the 7-pyrazolylbenzoxazole I.1 is replaced by the 7-pyrazolylbenzoxazole I.36.

Preference is also given to the compositions 37.1 - 37.370 which differ from the corresponding compositions 1.1 - 1.370 only in that the 7-pyrazolylbenzoxazole I.1 is replaced by the 7-pyrazolylbenzoxazole I.37.

Preference is also given to the compositions 38.1 - 38.370 which differ from the corresponding compositions 1.1 - 1.370 only in that the 7-pyrazolylbenzoxazole I.1 is replaced by the 7-pyrazolylbenzoxazole I.38.

Preference is also given to the compositions 39.1 - 39.370 which differ from the corresponding compositions 1.1 - 1.370 only in that the 7-pyrazolylbenzoxazole I.1 is replaced by the 7-pyrazolylbenzoxazole I.39.

Preference is also given to the compositions 40.1 - 40.370 which differ from the corresponding compositions 1.1 - 1.370 only in that the 7-pyrazolylbenzoxazole I.1 is replaced by the 7-pyrazolylbenzoxazole I.40.
Preference is also given to the compositions 41.1 - 41.370 which differ from the corresponding compositions 1.1 - 1.370 only in that the 7-pyrazolylbenzoxazole I.1 is replaced by the 7-pyrazolylbenzoxazole I.41.
Preference is also given to the compositions 42.1 - 42.370 which differ from the corresponding compositions 1.1 - 1.370 only in that the 7-pyrazolylbenzoxazole I.1 is replaced by the 7-pyrazolylbenzoxazole I.42.
Preference is also given to the compositions 43.1 - 43.370 which differ from the corresponding compositions 1.1 - 1.370 only in that the 7-pyrazolylbenzoxazole I.1 is replaced by the 7-pyrazolylbenzoxazole I.43.
Preference is also given to the compositions 44.1 - 44.370 which differ from the corresponding compositions 1.1 - 1.370 only in that the 7-pyrazolylbenzoxazole 1.1 is replaced by the 7-pyrazolylbenzoxazole 1.44.
Preference is also given to the compositions 45.1 - 45.370 which differ from the corresponding compositions 1.1 - 1.370 only in that the 7-pyrazolylbenzoxazole 1.1 is replaced by the 7-pyrazolylbenzoxazole 1.45.
Preference is also given to the compositions 46.1 - 46.370 which differ from the corresponding compositions 1.1 - 1.370 only in that the 7-pyrazolylbenzoxazole I.1 is replaced by the 7-pyrazolylbenzoxazole I.46.
Preference is also given to the compositions 47.1 - 47.370 which differ from the corresponding compositions 1.1 - 1.370 only in that the 7-pyrazolylbenzoxazole I.1 is replaced by the 7-pyrazolylbenzoxazole I.47.
Preference is also given to the compositions 48.1 - 48.370 which differ from the corresponding compositions 1.1 - 1.370 only in that the 7-pyrazolylbenzoxazole I.1 is replaced by the 7-pyrazolylbenzoxazole I.48.
Preference is also given to the compositions 49.1 - 49.370 which differ from the corresponding compositions 1.1 - 1.370 only in that the 7-pyrazolylbenzoxazole I.1 is replaced by the 7-pyrazolylbenzoxazole I.49.
Preference is also given to the compositions 50.1 - 50.370 which differ from the corresponding compositions 1.1 - 1.370 only in that the 7-pyrazolylbenzoxazole I.1 is replaced by the 7-pyrazolylbenzoxazole I.50.
Preference is also given to the compositions 51.1 - 51.370 which differ from the corresponding compositions 1.1 - 1.370 only in that the 7-pyrazolylbenzoxazole I.1 is replaced by the 7-pyrazolylbenzoxazole I.51.
Preference is also given to the compositions 52.1 - 52.370 which differ from the corresponding compositions 1.1 - 1.370 only in that the 7-pyrazolylbenzoxazole I.1 is replaced by the 7-pyrazolylbenzoxazole I.52.
Preference is also given to the compositions 53.1 - 53.370 which differ from the corresponding compositions 1.1 - 1.370 only in that the 7-pyrazolylbenzoxazole 1.1 is replaced by the 7-pyrazolylbenzoxazole I.53.
Preference is also given to the compositions 54.1 - 54.370 which differ from the corresponding compositions 1.1 - 1.370 only in that the 7-pyrazolylbenzoxazole I.1 is replaced by the 7-pyrazolylbenzoxazole I.54.
Preference is also given to the compositions 55.1 - 55.370 which differ from the corresponding compositions 1.1 - 1.370 only in that the 7-pyrazolylbenzoxazole I.1 is replaced by the 7-pyrazolylbenzoxazole I.55.
Preference is also given to the compositions 56.1 - 56.370 which differ from the corresponding compositions 1.1 - 1.370 only in that the 7-pyrazolylbenzoxazole I.1 is replaced by the 7-pyrazolylbenzoxazole I.56.
Preference is also given to the compositions 57.1 - 57.370 which differ from the corresponding compositions 1.1 - 1.370 only in that the 7-pyrazolylbenzoxazole I.1 is replaced by the 7-pyrazolylbenzoxazole I.57.
Preference is also given to the compositions 58.1 - 58.370 which differ from the corresponding compositions 1.1 - 1.370 only in that the 7-pyrazolylbenzoxazole 1.1 is replaced by the 7-pyrazolylbenzoxazole 1.58.
Preference is also given to the compositions 59.1 - 59.370 which differ from the corresponding compositions 1.1 - 1.370 only in that the 7-pyrazolylbenzoxazole I.1 is replaced by the 7-pyrazolylbenzoxazole I.59.
Preference is also given to the compositions 60.1 - 60.370 which differ from the corresponding compositions 1.1 - 1.370 only in that the 7-pyrazolylbenzoxazole I.1 is replaced by the 7-pyrazolylbenzoxazole I.60.
Preference is also given to the compositions 61.1 - 61.370 which differ from the corresponding compositions 1.1 - 1.370 only in that the 7-pyrazolylbenzoxazole I.1 is replaced by the 7-pyrazolylbenzoxazole I.61.
Preference is also given to the compositions 62.1 - 62.370 which differ from the corresponding compositions 1.1 - 1.370 only in that the 7-pyrazolylbenzoxazole I.1 is replaced by the 7-pyrazolylbenzoxazole I.62.
Preference is also given to the compositions 63.1 - 63.370 which differ from the corresponding compositions 1.1 - 1.370 only in that the 7-pyrazolylbenzoxazole I.1 is replaced by the 7-pyrazolylbenzoxazole 1.63.
Preference is also given to the compositions 64.1 - 64.370 which differ from the corresponding compositions 1.1 - 1.370 only in that the 7-pyrazolylbenzoxazole I.1 is replaced by the 7-pyrazolylbenzoxazole I.64.
Preference is also given to the compositions 65.1 - 65.370 which differ from the corresponding compositions 1.1 - 1.370 only in that the 7-pyrazolylbenzoxazole 1.1 is replaced by the 7-pyrazolylbenzoxazole 1.65.
Preference is also given to the compositions 66.1 - 66.370 which differ from the corresponding compositions 1.1 - 1.370 only in that the 7-pyrazolylbenzoxazole I.1 is replaced by the 7-pyrazolylbenzoxazole I.66.
Preference is also given to the compositions 67.1 - 67.370 which differ from the corresponding compositions 1.1 - 1.370 only in that the 7-pyrazolylbenzoxazole I.1 is replaced by the 7-pyrazolylbenzoxazole I.67.
Preference is also given to the compositions 68.1 - 68.370 which differ from the corresponding compositions 1.1 - 1.370 only in that the 7-pyrazolylbenzoxazole I.1 is replaced by the 7-pyrazolylbenzoxazole I.68.

Preference is also given to the compositions 69.1 - 69.370 which differ from the corresponding compositions 1.1 - 1.370 only in that the 7-pyrazolylbenzoxazole I.1 is replaced by the 7-pyrazolylbenzoxazole I.69.

Preference is also given to the compositions 70.1 - 70.370 which differ from the corresponding compositions 1.1 - 1.370 only in that the 7-pyrazolylbenzoxazole 1.1 is replaced by the 7-pyrazolylbenzoxazole 1.70.

Preference is also given to the compositions 71.1 - 71.370 which differ from the corresponding compositions 1.1 - 1.370 only in that the 7-pyrazolylbenzoxazole I.1 is replaced by the 7-pyrazolylbenzoxazole 1.71.

Preference is also given to the compositions 72.1 - 72.370 which differ from the corresponding compositions 1.1 - 1.370 only in that the 7-pyrazolylbenzoxazole I.1 is replaced by the 7-pyrazolylbenzoxazole I.72.

Preference is also given to the compositions 73.1 - 73.370 which differ from the corresponding compositions 1.1 - 1.370 only in that the 7-pyrazolylbenzoxazole 1.1 is replaced by the 7-pyrazolylbenzoxazole 1.73.

Preference is also given to the compositions 74.1 - 74.370 which differ from the corresponding compositions 1.1 - 1.370 only in that the 7-pyrazolylbenzoxazole 1.1 is replaced by the 7-pyrazolylbenzoxazole 1.74.

Preference is also given to the compositions 75.1 - 75.370 which differ from the corresponding compositions 1.1 - 1.370 only in that the 7-pyrazolylbenzoxazole I.1 is replaced by the 7-pyrazolylbenzoxazole I.75.

Preference is also given to the compositions 76.1 - 76.370 which differ from the corresponding compositions 1.1 - 1.370 only in that the 7-pyrazolylbenzoxazole 1.1 is replaced by the 7-pyrazolylbenzoxazole I.76.

The weight ratios of the individual components in the compositions 2.1 to 76.343 are within the limits stated above, in the case of binary mixtures of 7-pyrazolylbenzoxazole I.1 and herbicide B) for example 1:1, 1:2 or 1:5 and in the case of ternary mixtures of 7-pyrazolylbenzoxazole I.1, herbicide B and safener C for example 1:1:1, 2:1:1, 1:2:1, 1:5:1 or 1:5:2.

In the ready-to-use preparations, i.e. in the compositions according to the invention in the form of crop protection products, the components A and B and/or C, in suspended, emulsified or dissolved form, can be present formulated jointly or separately. The use forms depend entirely on the intended use.

The compositions according to the invention can be applied, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, broadcasting or watering. The use forms depend on the intended use; in any case, they should ensure the finest possible distribution of the active compounds.

Depending on the from in which the ready-to-use preparations are present in the compositions according to the invention, they comprise one or more liquid or solid carriers, if appropriate surfactants and if appropriate further auxiliaries which are customary for formulating crop protection products. The person skilled in the art is sufficiently familiar with the recipes for such formulations.

The ready-to-use preparations comprise the components A and B and optionally C and auxiliaries which are customary for formulating crop protection products, which auxiliaries may also comprise a liquid carrier.

Suitable inert auxiliaries with carrier function are essentially:

mineral oil fractions of medium to high boiling point, such as kerosine and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, e.g. amines such as N-methylpyrrolidone, and water.

Aqueous use forms can be prepared from emulsion concentrates, suspensions, pastes, wettable powders or water-dispersible granules by adding water. To prepare emulsions, pastes or oil dispersions, the active compounds A) to C), as such or dissolved in an oil or solvent, can be homogenized in water by means of wetting agent, tackifier, dispersant or emulsifier. Alternatively, it is also possible to prepare concentrates consisting of active substance, wetting agent, tackifier, dispersant or emulsifier and, if desired, solvent or oil, and these concentrates are suitable for dilution with water.

Suitable surfactants are the alkali metal salts, alkaline earth metal salts and ammonium salts of aromatic sulfonic acids, e.g. ligno-, phenol-, naphthalene- and dibutylnaphthalenesulfonic acid, and of fatty acids, of alkyl- and alkylarylsulfonates, of alkyl sulfates, lauryl ether sulfates and fatty alcohol sulfates, and salts of sulfated hexa-, hepta- and octadecanols and of fatty alcohol glycol ethers, condensates of sulfonated naphthalene and its derivatives with formaldehyde, condensates of naphthalene or of the naphthalenesulfonic acids with phenol and formaldehyde, polyoxyethylene octylphenol ether, ethoxylated isooctyl-, octyl- or nonylphenol, alkylphenyl polyglycol ether, tributylphenyl polyglycol ether, alkylaryl polyether alcohols, isotridecyl alcohol, fatty alcohol/ethylene oxide condensates, ethoxylated castor oil, polyoxyethylene alkyl ether or polyoxypropylene alkyl ether, lauryl alcohol polyglycol ether acetate, sorbitol esters, lignosulfite waste liquors or methylcellulose.

Powders, materials for spreading and dusts can be prepared by mixing or concomitantly grinding the active

substances with a solid carrier.

Granules, e.g. coated granules, impregnated granules and homogeneous granules, can be prepared by binding the active compounds to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin such as cereal meal, tree bark meal, wood meal and nutshell meal, cellulose powders, or other solid carriers.

The concentrations of the active compounds in the ready-to-use preparations can be varied within wide ranges. In general, the formulations comprise approximately from 0.001 to 98% by weight, preferably 0.01 to 95% by weight, of active compounds. The active compounds are employed in a purity of from 90% to 100%, preferably 95% to 100% (according to NMR spectrum).

The compositions according to the invention can, for example, be formulated as follows:

I 20 parts by weight of the active compound or active compound mixture in question are dissolved in a mixture composed of 80 parts by weight of alkylated benzene, 10 parts by weight of the adduct of 8 to 10 mol of ethylene oxide to 1 mol of oleic acid N-monoethanolamide, 5 parts by weight of calcium dodecylbenzenesulfonate and 5 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active compound.

II 20 parts by weight of the active compound or active compound mixture in question are dissolved in a mixture composed of 40 parts by weight of cyclohexanone, 30 parts by weight of isobutanol, 20 parts by weight of the adduct of 7 mol of ethylene oxide to 1 mol of isooctylphenol and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active compound.

III 20 parts by weight of the active compound or active compound mixture in question are dissolved in a mixture composed of 25 parts by weight of cyclohexanone, 65 parts by weight of a mineral oil fraction of boiling point 210 to 280°C and 10 parts by weight of the adduct of 40 mol of ethylene oxide to 1 mol of castor oil. Pouring the solution into 100 000 parts by weight of water and finely distributing it therein gives an aqueous dispersion which comprises 0.02% by weight of the active compound.

IV 20 parts by weight of the active compound or active compound mixture in question are mixed thoroughly with 3 parts by weight of sodium diisobutylnaphthalenesulfonate, 17 parts by weight of the sodium salt of a lignosulfonic acid from a sulfite waste liquor and 60 parts by weight of pulverulent silica gel, and the mixture is ground in a hammer mill. Finely distributing the mixture in 20 000 parts by weight of water gives a spray mixture which comprises 0.1% by weight of the active compound.

V 3 parts by weight of the active compound or active compound mixture in question are mixed with 97 parts by weight of finely divided kaolin. This gives a dust which comprises 3% by weight of the active compound.

VI 20 parts by weight of the active compound or active compound mixture in question are mixed intimately with 2 parts by weight of calcium dodecylbenzenesulfonate, 8 parts by weight of fatty alcohol polyglycol ether, 2 parts by weight of the sodium salt of a phenol-urea-formaldehyde condensate and 68 parts by weight of a paraffinic mineral oil. This gives a stable oily dispersion.

VII 1 part by weight of the active compound or active compound mixture in question is dissolved in a mixture composed of 70 parts by weight of cyclohexanone, 20 parts by weight of ethoxylated isooctylphenol and 10 parts by weight of ethoxylated castor oil. This gives a stable emulsion concentrate.

VIII 1 part by weight of the active compound or active compound mixture in question is dissolved in a mixture composed of 80 parts by weight of cyclohexanone and 20 parts by weight of Wettol® EM 31 (nonionic emulsifier based on ethoxylated castor oil). This gives a stable emulsion concentrate.

The components A and B and optionally C can be formulated jointly or separately.

The components A and B and optionally C can be applied jointly or separately, simultaneously or successively, before, during or after emergence of the plants.

If the active compounds A and B and optionally C are less well tolerated by certain crop plants, it is possible

to use application methods in which the herbicidal compositions are sprayed with the aid of sprayers in such a way that the leaves of the sensitive crop plants are as far as possible unaffected, whereas the active compounds reach the leaves of the undesirable plants growing underneath or the uncovered soil surface (post-directed, lay-by).

The required application rate of the pure active compound composition, i.e. of A and B and optionally C without formulation auxiliary, depends on the composition of the plant stem, on the development stage of the plants, on the climatic conditions of the location where the composition is used and on the application method. In general, the application rate of A and B and optionally C is from 0.001 to 3 kg/ha, preferably from 0.005 to 2 kg/ha and in particular from 0.01 to 1 kg/ha of active substance (a.s.).

The required application rates of 7-pyrazolylbenzoxazoles are generally in the range from 0.1 g/ha to 1 kg/ha and preferably in the range from 1 g/ha to 500 g/ha or from 5 g/ha to 500 g/ha of a.s.

The compositions are applied to the plants mainly by foliar spraying. Application can be carried out by customary spraying techniques using, for example, water as carrier and spray liquor rates of from about 100 to 1 000 l/ha (for example from 300 to 400 l/ha). Application of the herbicidal compositions by the low-volume and the ultra-low-volume method is possible, as is their application in the form of micro granules.

The compositions according to the present invention are suitable for controlling common harmful plants in useful plants, in particular in crops such as wheat, barley, oats, corn, soybean, sorghum, rice, oilseed rape, cotton, potatoes, dry beans, groundnuts or in perennial crops. In another embodiment of the invention, they are useful for controlling the whole vegetation, i. e. they act as a total weedkiller. Futhermore, in another emodiment of the present invention, the compositions are useful for controlling undesirable vegetation in forestry.

Moreover, the compositions according to the present invention are also suitable for the desiccation and/or defoliation of plants.

As desiccants, they are suitable, in particular, for desiccating the above-ground parts of crop plants such as potatoes, oilseed rape, sunflowers and soya beans. This allows completely mechanical harvesting of these important crop plants.

Also of economic interest is

- the coordinated dehiscence of fruits or the reduction of their adherence to the plant, for example in citrus fruit, olives or other kinds and species of pernicious fruit, stone fruit and nuts, since this facilitates harvesting of these fruits, and also the controlled defoliation of useful plants, in particular cotton. The dehiscence which is promoted by the application of compositions according to the invention is due to the formation of abscission tissue between the fruit or leaf and shoot part of the plants. The defoliation of cotton is of very particular economic interest since it facilitates harvesting. Simultaneously, the shortening of the window within which the individual plants mature leads to increased quality of the harvested fiber material.

Moreover, it may be useful to apply the compositions according to the invention jointly as a mixture with other crop protection products, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates may also be added.

The compositions according to the invention can also be used in crop plants which are resistant to one or more herbicides owing to genetic engineering or breeding or which are resistant to attack by insects owing to genetic engineering or breeding. Suitable are for example crop plants which are resistant to herbicidal EPSP synthase inhibitors, such as, for example, glyphosate, to herbicidal glutamine synthase inhibitors, such as, for example, glufosinate, to herbicidal protoporphyrinogen-IX oxidase inhibitors, such as, for example, butafenacil, or to herbicidal ALS inhibitors, such as, for example, imazamethabenz, imazamox, imazapic, imazapyr, imazaquin, imazethapyr, or crop plants which, owing to introduction of the gene for Bt toxin by genetic modification, are resistant to attack by certain insects.

Surprisingly, the compositions according to the invention which comprise at least one 7-pyrazolylbenzoxazole of the formula I and at least one herbicide B have better herbicidal activity against harmful plants than would have been expected by the herbicidal activity of the individual compounds. In other words, the joint application of 7-pyrazolylbenzoxazole I and herbicide B results in an enhanced activity against harmful plants in the sense of a synergy effect (synergism). For this reason, the mixtures can, based on the individual components, be used at lower application rates to achieve a herbicidal effect comparable to the individual components.

Surprisingly, the compositions according to the invention which, in addition to the 7-pyrazolylbenzoxazole I and the herbicide B, comprise an active compound from group C are better tolerated by useful plants than the respective 7-pyrazolylbenzoxazole I or the respective mixture of 7-pyrazolylbenzoxazole + herbicide B without active compound of group C.

Use Examples

The effect of the herbicidal mixtures according to the invention of components A and B and, if appropriate, C on the growth of undesirable plants compared to the herbicidally active compounds alone was demonstrated by the following greenhouse experiments (Examples 1 to 33):

For the post-emergence treatment, the test plants were first grown to a height of 3 to 20 cm, depending on the plant habit, and only then treated. Here, the herbicidal compositions were suspended or emulsified in water as distribution medium and sprayed using finely distributing nozzles.

For the pre-emergence treatment, the test plants were sown is pots 1-2 days later, i.e. prior to germination, the pots were sprayed with the finely distributed herbicidal compositions, which had been suspended in water.

The respective components A and B and optionally C were formulated as 10% by weight strength emulsion concentrate and introduced to the spray liquor with the amount of solvent system used for applying the active compound. In the examples, the solvent used was water.

The test period extended over 21 days. During this time, the plants were tended, and their response to the treatments with active compound was evaluated.

The evaluation for the damage caused by the chemical compositions was carried out using a scale from 0 to 100%, compared to the untreated control plants. Here, 0 means no damage and 100 means complete destruction of the plants.

In the examples below, the value E which is to be expected if the activity of the individual active compounds is just additive was calculated using the method of S. R. Colby (1967) "Calculating synergistic and antagonistic responses of herbicide combinations", Weeds 15, p. 22 ff.

$$E = X + Y - (X \cdot Y/100)$$

where

X = effect in percent using active compound A at an application rate a;

Y = effect in percent using active compound B at an application rate b;

E = expected effect (in %) of A + B at application rates a + b.

If the value calculated in this manner is higher than the value E calculated according to Colby, a synergistic effect is present.

The plants used in the greenhouse experiments were of the following species:

| Bayer code | Scientific Name |
|---|---|
| ABUTH | velvet leaf |
| AVEFA | wild oat |
| BIDPI | hairy beggarticks |
| BRAPL | alexandergrass |
| CHEAL | lambsquarters |
| COMBE | tropical spiderwort |
| ECHCG | barnyardgrass |
| GALAP | catchweed bedstraw |
| MATIN | false chamomille |
| POAAN | annual bluegrass |
| POLPE | ladysthumb |
| SETFA | giant foxtail |

Table continued

| Bayer code | Scientific Name |
|---|---|
| SETVI | green foxtail |
| SORHA | johnsongrass |
| THLAR | fanweed |
| VERSS | speadwell |

The results of these tests are given in the tables of Examples 1 to 32 below and demonstrate the synergistic effect of mixtures comprising at least one 7-pyrazolylbenzoxazole I and at least one herbicide B.

I.9 corresponds to compound In.003 from WO 98/27090.
I.12 corresponds to compound Im.003 from WO 99/55702.
I.15 corresponds to compound In.004 from WO 99/55702.
I.18 corresponds to compound Im.005 from WO 98/27090.

Example 1: Synergistic herbicidal action of the mixture No. 9.63, applied by the post-emergence method

| Application rate in g/ha | | Herbicidal action against AVEFA | | Herbicidal action against SETFA | |
|---|---|---|---|---|---|
| 7-pyrazolylbenzoxazole I.9 | tepraloxydim (from Group b1) | Found | Calculated using Colby formula | Found | Calculated using Colby formula |
| 1.95 | - | 10 | - | 45 | - |
| - | 7.81 | 70 | - | 70 | - |
| 1.95 | 7.81 | 85 | 73 | 98 | 83.5 |
| 1.95 | - | 10 | - | 45 | - |
| - | 15.63 | 80 | - | 80 | - |
| 1.95 | 15.63 | 98 | 82 | 98 | 89 |

Example 2: Synergistic herbicidal action of the mixture No. 12.63, applied by the post-emergence method

| Application rate in g/ha | | Herbicidal action against AVEFA | | Herbicidal action against SETFA | |
|---|---|---|---|---|---|
| 7-pyrazolylbenzoxazole I.12 | tepraloxydim (from Group b1) | Found | Calculated using Colby formula | Found | Calculated using Colby formula |
| 1.95 | - | 20 | - | 50 | - |
| - | 15.63 | 80 | - | 80 | - |
| 1.95 | 15.63 | 100 | 84 | 98 | 90 |
| 3.91 | - | 30 | - | 65 | - |
| - | 15.63 | 80 | - | 80 | - |
| 3.91 | 15.63 | 100 | 86 | 100 | 93 |

Example 3: Synergistic herbicidal action of the mixture No. 12.61, applied by the post-emergence method

| Application rate in g/ha | | Herbicidal action against GALAP | |
|---|---|---|---|
| 7-pyrazolyl-benzoxazole I.12 | profoxydim (from Group b1) | Found | Calculated using Colby formula |
| 0.49 | - | 15 | - |
| - | 7.81 | 30 | - |
| 0.49 | 7.81 | 50 | 40.5 |
| 0.98 | - | 15 | - |
| - | 15.63 | 30 | - |
| 0.98 | 15.63 | 75 | 40.5 |

Example 4: Synergistic herbicidal action of the mixture No. 12.111, applied by the post-emergence method

| Application rate in g/ha | | Herbicidal action against AVEFA | | Herbicidal action against POLPE | |
|---|---|---|---|---|---|
| 7-pyrazolylbenzoxazole I.12 | pyrazosulfuronethyl (from Group b2) | Found | Calculated using Colby formula | Found | Calculated using Colby formula |
| 1.95 | - | 20 | - | 60 | - |
| - | 15.63 | 0 | - | 40 | - |
| 1.95 | 15.63 | 40 | 20 | 95 | 76 |
| 3.91 | - | 30 | - | 65 | - |
| - | 31.25 | 10 | - | 55 | - |
| 3.91 | 31.25 | 50 | 37 | 98 | 84.25 |

Example 5: Synergistic herbicidal action of the mixture No. 9.124, applied by the post-emergence method

| Application rate in g/ha | | Herbicidal action against BIDPI | |
|---|---|---|---|
| 7-pyrazolylbenzoxazole I.9 | imazamox (from Group b2) | Found | Calculated using Colby formula |
| 1.95 | - | 0 | - |
| - | 31.25 | 20 | - |
| 1.95 | 31.25 | 50 | 20 |
| 3.91 | - | 40 | - |
| - | 62.5 | 60 | - |
| 3.91 | 62.5 | 98 | 76 |

Example 6: Synergistic herbicidal action of the mixture No. 9.128, applied by the post-emergence method

| Application rate in g/ha | | Herbicidal action against COMBE | | Herbicidal action against POLPE | |
|---|---|---|---|---|---|
| 7-pyrazolylbenzoxazole I.9 | imaze-thapyr (from Group b2) | Found | Calculated using Colby formula | Found | Calculated using Colby formula |
| 0.98 | - | 10 | - | 10 | - |
| - | 15.63 | 20 | - | 40 | - |
| 0.98 | 15.63 | 50 | 28 | 70 | 46 |
| 1.95 | - | 10 | - | 50 | - |
| - | 31.25 | 40 | - | 60 | - |
| 1.95 | 31.25 | 85 | 46 | 100 | 80 |

Example 7: Synergistic herbicidal action of the mixture No. 9.125, applied by the post-emergence method

| Application rate in g/ha | | Herbicidal action against COMBE | | Herbicidal action against POLPE | |
|---|---|---|---|---|---|
| 7-pyrazolylbenzoxazole I.9 | imazapic (from Group b2) | Found | Calculated using Colby formula | Found | Calculated using Colby formula |
| 0.98 | - | 10 | - | 10 | - |
| - | 15.63 | 0 | - | 75 | - |
| 0.98 | 15.63 | 40 | 10 | 98 | 77.5 |
| 1.95 | - | 10 | - | 50 | - |
| - | 31.25 | 40 | - | 80 | - |
| 1.95 | 31.25 | 90 | 46 | 100 | 90 |

Example 8: Synergistic herbicidal action of the mixture No. 9.158, applied by the post-emergence method

| Application rate in g/ha | | Herbicidal action against ABUTH | | Herbicidal action against POLPE | |
|---|---|---|---|---|---|
| 7-pyrazolylbenzoxazole I.9 | bentazone sodium salt (from Group b3) | Found | Calculated using Colby formula | Found | Calculated using Colby formula |
| 0.49 | - | 0 | - | 5 | - |
| - | 125 | 0 | - | 15 | - |
| 0.49 | 125 | 60 | 0 | 100 | 19.25 |
| 0.98 | - | 70 | - | 10 | - |
| - | 250 | 20 | - | 25 | - |
| 0.98 | 250 | 100 | 76 | 100 | 32.5 |

Example 9: Synergistic herbicidal action of the mixture No. 12.140, applied by the post-emergence method

| Application rate in g/ha | | Herbicidal action against ECHCG | |
|---|---|---|---|
| 7-pyrazolylbenzoxazole I.12 | atrazine (from Group b3) | Found | Calculated using Colby formula |
| 1.95 | - | 50 | - |
| - | 62.5 | 45 | - |
| 1.95 | 62.5 | 98 | 72.5 |
| 3.91 | - | 50 | - |
| - | 125 | 65 | - |
| 3.91 | 125 | 98 | 82.5 |

Example 10: Synergistic herbicidal action of the mixture No. 12.152, applied by the post-emergence method

| Application rate in g/ha | | Herbicidal action against BIDPI | |
|---|---|---|---|
| 7-pyrazolylbenzoxazole I.12 | isoproturon (from Group b3) | Found | Calculated using Colby formula |
| 1.95 | - | 65 | - |
| - | 62.5 | 30 | - |
| 1.95 | 62.5 | 100 | 75.5 |
| 3.91 | - | 65 | - |
| - | 125 | 60 | - |
| 3.91 | 125 | 100 | 86 |

Example 11: Synergistic herbicidal action of the mixture No. 12.162, applied by the post-emergence method

| Application rate in g/ha | | Herbicidal action against AVEFA | |
|---|---|---|---|
| 7-pyrazolylbenzoxazole I.12 | paraquat (from Group b3) | Found | Calculated using Colby formula |
| 1.95 | - | 40 | - |
| - | 62.5 | 70 | - |
| 1.95 | 62.5 | 95 | 82 |
| 3.91 | - | 40 | - |
| - | 125 | 80 | - |
| 3.91 | 125 | 95 | 88 |

Example 12: Synergistic herbicidal action of the mixture No. 12.213, applied by the post-emergence method

| Application rate in g/ha | | Herbicidal action against POLPE | |
|---|---|---|---|
| 7-pyrazolylbenzoxazole I.12 | clomazone (from Group b5) | Found | Calculated using Colby formula |
| 0.49 | - | 15 | - |
| - | 125 | 75 | - |

Table continued

| Application rate in g/ha | | Herbicidal action against POLPE | |
|---|---|---|---|
| 7-pyrazolylbenzoxazole I.12 | clomazone (from Group b5) | Found | Calculated using Colby formula |
| 0.49 | 125 | 90 | 78.75 |
| 0.98 | - | 15 | - |
| - | 250 | 75 | - |
| 0.98 | 250 | 90 | 78.75 |

Example 13: Synergistic herbicidal action of the mixture No. 12.205, applied by the post-emergence method

| Application rate in g/ha | | Herbicidal action against ECHCG | |
|---|---|---|---|
| 7-pyrazolylbenzoxazole I.12 | mesotrione (from Group b5) | Found | Calculated using Colby formula |
| 0.49 | - | 0 | - |
| - | 7.81 | 45 | - |
| 0.49 | 7.81 | 75 | 45 |
| 0.98 | - | 0 | - |
| - | 15.63 | 70 | - |
| 0.98 | 15.63 | 100 | 70 |

Example 14: Synergistic herbicidal action of the mixture No. 12.200, applied by the post-emergence method

| Application rate in g/ha | | Herbicidal action against SETVI | |
|---|---|---|---|
| 7-pyrazolylbenzoxazole I.12 | picolinafen (from Group b5) | Found | Calculated using Colby formula |
| 0.98 | - | 40 | - |
| - | 15.63 | 40 | - |
| 0.98 | 15.63 | 70 | 64 |
| 1.95 | - | 50 | - |
| - | 15.63 | 40 | - |
| 1.95 | 15.63 | 75 | 70 |

Example 15: Synergistic herbicidal action of the mixture No. 9.218, applied by the post-emergence method

| Application rate in g/ha | | Herbicidal action against AVEFA | |
|---|---|---|---|
| 7-pyrazolylbenzoxazole I.9 | glyphosate isopropylamine salt (from Group b6) | Found | Calculated using Colby formula |
| 1.95 | - | 10 | - |
| - | 250 | 40 | - |

Table continued

| Application rate in g/ha | | Herbicidal action against AVEFA | |
|---|---|---|---|
| 7-pyrazolylbenzoxazole I.9 | glyphosate isopropylamine salt (from Group b6) | Found | Calculated using Colby formula |
| 1.95 | 250 | 98 | 46 |
| 3.91 | - | 20 | - |
| - | 250 | 40 | - |
| 3.91 | 250 | 98 | 52 |

Example 16: Synergistic herbicidal action of the mixture No. 12.218, applied by the post-emergence method

| Application rate in g/ha | | Herbicidal action against AVEFA | |
|---|---|---|---|
| 7-pyrazolylbenzoxazole I.12 | glyphosate isopropylamine salt (from Group b6) | Found | Calculated using Colby formula |
| 1.95 | - | 20 | - |
| - | 250 | 40 | - |
| 1.95 | 250 | 90 | 52 |
| 3.91 | - | 30 | - |
| - | 250 | 40 | - |
| 3.91 | 250 | 90 | 58 |

Example 17: Synergistic herbicidal action of the mixture No. 9.219, applied by the post-emergence method

| Application rate in g/ha | | Herbicidal action against BRAPL | |
|---|---|---|---|
| 7-pyrazolylbenzoxazole I.9 | glufosinate ammonium salt (from Group b7) | Found | Calculated using Colby formula |
| 3.91 | - | 65 | - |
| - | 125 | 45 | - |
| 3.91 | 125 | 100 | 81 |
| 7.81 | - | 85 | - |
| - | 125 | 45 | - |
| 7.81 | 125 | 100 | 92 |

Example 18: Synergistic herbicidal action of the mixture No. 12.219, applied by the post-emergence method

| Application rate in g/ha | | Herbicidal action against BRAPL | |
|---|---|---|---|
| 7-pyrazolylbenzoxazole I.12 | glufosinate ammonium salt (from Group b7) | Found | Calculated using Colby formula |
| 3.91 | - | 60 | - |

Table continued

| Application rate in g/ha | | Herbicidal action against BRAPL | |
|---|---|---|---|
| 7-pyrazolylbenzoxazole I.12 | glufosinate ammonium salt (from Group b7) | Found | Calculated using Colby formula |
| - | 125 | 45 | - |
| 3.91 | 125 | 85 | 78 |
| 7.81 | - | 75 | - |
| - | 125 | 45 | - |
| 7.81 | 125 | 100 | 86 |

Example 19: Synergistic herbicidal action of the mixture No. 9.225, applied by the pre-emergence method

| Application rate in g/ha | | Herbicidal action against THLAR | |
|---|---|---|---|
| 7-pyrazolylbenzoxazole I.9 | pendimethalin (from Group b9) | Found | Calculated using Colby formula |
| 15.63 | - | 80 | - |
| - | 250 | 40 | - |
| 15.63 | 250 | 100 | 88 |
| 31.25 | - | 80 | - |
| - | 250 | 40 | - |
| 31.25 | 250 | 100 | 88 |

Example 20: Synergistic herbicidal action of the mixture No. 9.284, applied by the post-emergence method

| Application rate in g/ha | | Herbicidal action against POAAN | | Herbicidal action against MATIN | |
|---|---|---|---|---|---|
| 7-pyrazolylbenzoxazole I.9 | flufenacet (from Group b10) | Found | Calculated using Colby formula | Found | Calculated using Colby formula |
| 1.95 | - | 10 | - | 20 | - |
| - | 250 | 0 | - | 10 | - |
| 1.95 | 250 | 40 | 10 | 50 | 28 |
| 3.91 | - | 10 | - | 20 | - |
| - | 250 | 0 | - | 10 | - |
| 3.91 | 250 | 50 | 10 | 60 | 28 |

Example 21: Synergistic herbicidal action of the mixture No. 12.284, applied by the post-emergence method

| Application rate in g/ha | | Herbicidal action against VERSS | |
|---|---|---|---|
| 7-pyrazolylbenzoxazole I.12 | flufenacet (from Group b10) | Found | Calculated using Colby formula |
| 0.49 | - | 0 | - |
| - | 250 | 0 | - |
| 0.49 | 250 | 25 | 0 |
| 0.98 | - | 50 | - |
| - | 250 | 0 | - |
| 0.98 | 250 | 70 | 50 |

Example 22: Synergistic herbicidal action of the mixture No. 9.250, applied by the pre-emergence method

| Application rate in g/ha | | Herbicidal action against ECHCG | | Herbicidal action against CHEAL | |
|---|---|---|---|---|---|
| 7-pyrazolylbenzoxazole I.9 | dimethenamide-P (from Group b10) | Found | Calculated using Colby formula | Found | Calculated using Colby formula |
| 7.81 | - | 10 | - | 75 | - |
| - | 62.5 | 85 | - | 10 | - |
| 7.81 | 62.5 | 100 | 86.5 | 85 | 77.5 |
| 15.63 | - | 35 | - | 75 | - |
| - | 62.5 | 85 | - | 10 | - |
| 15.63 | 62.5 | 100 | 90 | 100 | 77.5 |

Example 23: Synergistic herbicidal action of the mixture No. 12.250, applied by the pre-emergence method

| Application rate in g/ha | | Herbicidal action against ECHCG | | Herbicidal action against SORHA | |
|---|---|---|---|---|---|
| 7-pyrazolylbenzoxazole I.12 | dimethenamide-P (from Group b10) | Found | Calculated using Colby formula | Found | Calculated using Colby formula |
| 31.25 | - | 0 | - | 30 | - |
| - | 62.5 | 85 | - | 50 | - |
| 31.25 | 62.5 | 100 | 85 | 75 | 65 |
| 62.5 | - | 0 | - | 40 | - |
| - | 62.5 | 85 | - | 50 | - |
| 62.5 | 62.5 | 100 | 85 | 85 | 70 |

Example 24: Synergistic herbicidal action of the mixture No. 12.301, applied by the post-emergence method

| Application rate in g/ha | | Herbicidal action against ECHCG | | Herbicidal action against POLPE | |
|---|---|---|---|---|---|
| 7-pyrazolylbenzoxazole I.12 | quinclorac (from Group b13) | Found | Calculated using Colby formula | Found | Calculated using Colby formula |
| 0.98 | - | 0 | - | 15 | - |
| - | 62.5 | 10 | - | 15 | - |
| 0.98 | 62.5 | 60 | 10 | 45 | 27.75 |
| 1.95 | - | 0 | - | 60 | - |
| - | 125 | 10 | - | 15 | - |
| 1.95 | 125 | 65 | 10 | 98 | 66 |

Example 25: Synergistic herbicidal action of the mixture No. 12.308, applied by the pre-emergence method

| Application rate in g/ha | | Herbicidal action against ABUTH | | Herbicidal action against BIDPI | |
|---|---|---|---|---|---|
| 7-pyrazolbenzoxazole I.12 | diflufenzopyr sodium salt (from Group b14) | Found | Calculated using Colby formula | Found | Calculated using Colby formula |
| 62.5 | - | 60 | - | 30 | - |
| - | 62.5 | 10 | - | 40 | - |
| 62.5 | 62.5 | 70 | 64 | 70 | 58 |
| 125 | - | 60 | - | 30 | - |
| - | 125 | 30 | - | 70 | - |
| 125 | 125 | 90 | 72 | 95 | 79 |

Example 26: Synergistic herbicidal action of the mixture No. 18.107, applied by the post-emergence method

| Application rate in g/ha | | Herbicidal action against BIDPI | |
|---|---|---|---|
| 7-pyrazolylbenzoxazole I.18 | nicosulfuron (from Group b2) | Found | Calculated using Colby formula |
| 1.95 | - | 60 | - |
| - | 3.91 | 70 | - |
| 1.95 | 3.91 | 100 | 88 |
| 3.91 | - | 60 | - |
| - | 7.81 | 80 | - |
| 3.91 | 7.81 | 100 | 92 |

Example 27: Synergistic herbicidal action of the mixture No. 18.121, applied by the post-emergence method

| Application rate in g/ha | | Herbicidal action against BIDPI | |
|---|---|---|---|
| 7-pyrazolylbenzoxazole I.18 | propoxycarbazone sodium salt (from Group b2) | Found | Calculated using Colby formula |
| 1.95 | - | 60 | - |
| - | 3.91 | 30 | - |
| 1.95 | 3.91 | 75 | 72 |
| 3.91 | - | 60 | - |
| - | 7.81 | 40 | - |
| 3.91 | 7.81 | 100 | 76 |

Example 28: Synergistic herbicidal action of the mixture No. 18.300, applied by the post-emergence method

| Application rate in g/ha | | Herbicidal action against AVEFA | | Herbicidal action against BRAPL | |
|---|---|---|---|---|---|
| 7-pyrazolylbenzoxazole I.12 | dicamba (from Group b13) | Found | Calculated using Colby formula | Found | Calculated using Colby formula |
| 1.95 | - | 20 | - | 50 | - |
| - | 125 | 20 | - | 20 | - |
| 1.95 | 125 | 60 | 36 | 90 | 60 |
| 3.91 | - | 20 | - | 50 | - |
| - | 250 | 20 | - | 20 | - |
| 3.91 | 250 | 75 | 36 | 90 | 60 |

Example 29: Synergistic herbicidal action of the mixture No. 15.265, applied by the post-emergence method

| Application rate in g/ha | | Herbicidal action against GALAP | |
|---|---|---|---|
| 7-pyrazolylbenzoxazole I.15 | S-metolachlor (from Group b10) | Found | Calculated using Colby formula |
| 0.49 | - | 40 | - |
| - | 125 | 0 | - |
| 0.49 | 125 | 85 | 40 |
| 0.98 | - | 70 | - |
| - | 250 | 20 | - |
| 0.98 | 250 | 98 | 76 |

Example 30: Synergistic herbicidal action of the mixture No. 15.270, applied by the post-emergence method

| Application rate in g/ha | | Herbicidal action against GALAP | |
|---|---|---|---|
| 7-pyrazolylbenzoxazole I.15 | S-metolachlor (from Group b10) + benzoxacor (from Group C) | Found | Calculated using Colby formula |
| 0.49 | - | 40 | - |
| - | 125 + 6.25 | 0 | - |
| 0.49 | 125 + 6.25 | 80 | 40 |
| 0.98 | - | 70 | - |
| - | 250 + 12.5 | 0 | - |
| 0.98 | 250 + 12.5 | 98 | 70 |

Example 31: Synergistic herbicidal action of the mixture No. 15.292, applied by the post-emergence method

| Application rate in g/ha | | Herbicidal action against BRAPL | | Herbicidal action against BIDPI | |
|---|---|---|---|---|---|
| 7-pyrazolylbenzoxazole I.15 | 2,4-D dimethylamine salt (from Group b13) | Found | Calculated using Colby formula | Found | Calculated using Colby formula |
| 0.49 | - | 30 | - | 30 | - |
| - | 31.25 | 10 | - | 80 | - |
| 0.49 | 31.25 | 70 | 37 | 95 | 86 |
| 0.98 | - | 75 | - | 40 | - |
| - | 62.5 | 15 | - | 80 | - |
| 0.98 | 62.5 | 90 | 78.75 | 98 | 88 |

Example 32: Synergistic herbicidal action of the mixture No. 15.291, applied by the post-emergence method

| Application rate in g/ha | | Herbicidal action against ECHCG | | Herbicidal action against GALAP | |
|---|---|---|---|---|---|
| 7-pyrazolylbenzoxazole I.15 | isoxaben (from Group b11) | Found | Calculated using Colby formula | Found | Calculated using Colby formula |
| 0.49 | - | 30 | - | 40 | - |
| - | 125 | 0 | - | 0 | - |
| 0.49 | 125 | 50 | 30 | 50 | 40 |
| 0.98 | - | 40 | - | 70 | - |
| - | 250 | 0 | - | 0 | - |
| 0.98 | 250 | 60 | 40 | 90 | 70 |

## Claims

**1.** A herbicidally active composition comprising

A) at least one 7-pyrazolylbenzoxazole compound of the formula I,

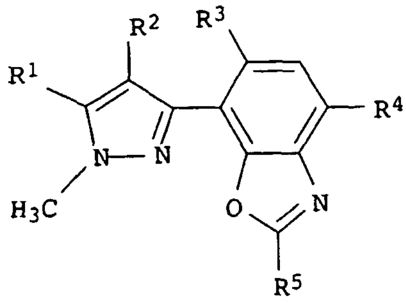

(I)

in which the variables $R^1$ - $R^5$ are as defined below:

$R^1$ is difluoromethoxy, trifluoromethyl or methylsulfonyl;
$R^2$ is halogen;
$R^3$ is hydrogen or halogen;
$R^4$ is halogen or cyano;
$R^5$ is hydrogen, $C_1$-$C_6$-alkyl, $C_1$-$C_6$-haloalkyl, $C_3$-$C_6$-alkenyl, cyano-$C_3$-$C_6$-alkenyl, $C_3$-$C_6$-haloalkenyl, $C_3$-$C_6$-alkynyl, cyano-$C_3$-$C_6$-alkynyl, $C_3$-$C_6$-haloalkynyl,
$C_1$-$C_4$-alkyl which carries one of the following groups: cyano, hydroxyl, carboxyl, $C_1$-$C_4$-alkoxy, $C_1$-$C_4$-haloalkoxy, $C_3$-$C_4$-alkenyloxy, $C_3$-$C_4$-alkynyloxy, $C_3$-$C_8$-cycloalkyl, $C_3$-$C_8$-cycloalkyloxy, amino, $C_1$-$C_4$-alkylamino, di($C_1$-$C_4$-alkyl)amino, $C_1$-$C_4$-alkylthio, $C_1$-$C_4$-haloalkylthio, $C_3$-$C_4$-alkenylthio, $C_3$-$C_4$-alkynylthio, $C_1$-$C_4$-alkylsulfinyl, $C_1$-$C_4$-haloalkylsulfinyl, $C_3$-$C_4$-alkenylsulfinyl, $C_3$-$C_4$-alkynylsulfinyl, $C_1$-$C_4$-alkylsulfonyl, $C_1$-$C_4$-haloalkylsulfonyl, $C_3$-$C_4$-alkenylsulfonyl, $C_3$-$C_4$-alkynylsulfonyl, ($C_1$-$C_4$-alkoxy) carbonyl, $C_3$-$C_8$-cycloalkyl, phenyl;
phenyl, $C_3$-$C_8$-cycloalkyl, where each cycloalkyl or phenyl ring may be unsubstituted or may carry one, two, three or four substituents independently of one another selected from the group consisting of cyano, nitro, amino,

hydroxyl, carboxyl, halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkylsulfonyl, ($C_1$-$C_4$-alkoxy)carbonyl, ($C_1$-$C_4$-alkyl)carbonyl, ($C_1$-$C_4$-haloalkyl)carbonyl, ($C_1$-$C_4$-alkyl)carbonyloxy, ($C_1$-$C_4$-haloalkyl)carbonyloxy and di($C_1$-$C_4$-alkyl)amino;
and/or at least one of its agriculturally acceptable salts; and
at least one further active compound selected from
B) herbicides of classes b1) to b15):

b1) lipid biosynthesis inhibitors;
b2) acetolactate synthase inhibibitors (ALS inhibitors);
b3) photosynthesis inhibitors;
b4) protoporphyrinogen-IX oxidase inhibitors,
b5) bleacher herbicides;
b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitose inhibitors;
b10) inhibitors of the synthesis of long-chain fatty acids (VLCFA inhibitors);
b11) cellulose biosynthesis inhibitors;
b12) decoupler herbicides;
b13) auxin herbicides;
b14) auxin transport inhibitors; and
b15) other herbicides selected from the group consisting of benzoylprop, flamprop, flamprop-M, bromobutide, chlorflurenol, cinmethylin, methyldymuron, etobenzanid, fosamine, metam, pyributicarb, oxaciclomefone, dazomet, daimuron (dymron), cumyluron, triaziflam and methyl bromide, the agriculturally acceptable salts of the active compounds B and the agriculturally acceptable derivatives of the active compounds B,

provided they have a carboxyl group, the weight ratio of the active compounds A:B being in the range from 1:500 to 10:1.

**2.** A composition as claimed in claim 1 where the variables $R^1$ to $R^5$ in formula I are as defined below:

$R^1$ is difluoromethoxy;
$R^2$ is chlorine or bromine;
$R^3$ is hydrogen, fluorine or chlorine;
$R^4$ is halogen or cyano;
$R^5$ is hydrogen, $C_1$-$C_6$-alkyl, $C_1$-$C_6$-haloalkyl, $C_1$-$C_4$-alkoxy-$C_1$-$C_4$-alkyl, $C_3$-$C_6$-alkenyl, $C_3$-$C_6$-alkynyl, $C_3$-$C_7$-cycloalkyl, $C_3$-$C_8$-cycloalkyl-$C_1$-$C_4$-alkyl, phenyl or benzyl.

**3.** A composition as claimed in claim 2 where the variables $R^3$ to $R^4$ in formula I are as defined below:

$R^3$ is fluorine or chlorine;
$R^4$ is chlorine.

**4.** A composition as claimed in claim 2 or 3 where $R^5$ is $C_1$-$C_4$-alkyl, cyclopropyl or cyclopropylmethyl.

**5.** A composition as claimed in any of the preceding claims, comprising at least one herbicide B selected from the compounds listed below:

b1) from the group of the lipid biosynthesis inhibitors:
chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate and bensulide;
b2) from the group of the ALS inhibitors:
amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox, imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid and pyrithiobac;
b3) from the group of the photosynthesis inhibitors:
atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;
b4) from the group of the protoporphyrinogen-IX oxidase inhibitors: acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid and phenyluracil compounds of the formula II

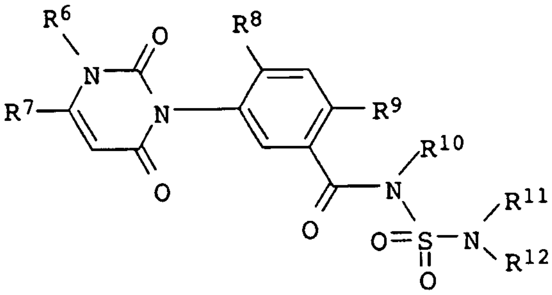

(II)

in which the variables $R^6$ - $R^{12}$ are as defined below:

$R^6$ is methyl or $NH_2$;
$R^7$ is $C_1$-$C_2$-haloalkyl;
$R^8$ is hydrogen or halogen;
$R^9$ is halogen or cyano;
$R^{10}$ is hydrogen, cyano, $C_1$-$C_6$-alkyl, $C_1$-$C_6$-alkoxy, $C_1$-$C_4$-alkoxy-$C_1$-$C_4$-alkyl, $C_3$-$C_7$-cycloalkyl, $C_3$-$C_6$-alkenyl, $C_3$-$C_6$-alkynyl or benzyl which is unsubstituted or substituted by halogen or alkyl;
$R^{11}$, $R^{12}$ independently of one another are hydrogen, $C_1$-$C_6$-alkyl, $C_1$-$C_6$-alkoxy, $C_3$-$C_6$-alkenyl, $C_3$-$C_6$-alkynyl, $C_3$-$C_7$-cycloalkyl, $C_3$-$C_7$-cycloalkenyl, phenyl or benzyl, where each of the 8 last-mentioned substituents is unsubstituted or may be substituted by 1 to 6 halogen atoms and/or by one, two or three groups selected from: OH, $NH_2$, CN, $CONH_2$, $C_1$-$C_4$-alkoxy, $C_1$-$C_4$-haloalkoxy, $C_1$-$C_4$-alkylthio, $C_1$-$C_4$-haloalkylthio, $C_1$-$C_4$-alkylsulfonyl, $C_1$-$C_4$-haloalkylsulfonyl, $C_1$-$C_4$-alkylamino, di-($C_1$-$C_4$-alkyl)amino, formyl, $C_1$-$C_4$-alkylcarbonyl, $C_1$-$C_4$-alkoxycarbonyl, $C_1$-$C_4$-alkylaminocarbonyl, di($C_1$-$C_4$-alkyl)aminocarbonyl, $C_3$-$C_7$-cycloalkyl, phenyl or benzyl; or
$R^{11}$, $R^{12}$ together with the nitrogen atom form a 3-, 4-, 5-, 6- or 7-membered saturated or unsaturated nitrogen heterocycle which is unsubstituted or substituted by 1 to 6 methyl groups and which may contain, as ring members, 1 or 2 further heteroatoms selected from the group consisting of nitrogen, oxygen and sulfur,

b5) from the group of the bleacher herbicides: metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoro methylphenoxy)-2-(4-trifluoromethylphenyl)pyrimidine and also 3-heterocyclyl-substituted benzoyl derivatives of the formula III

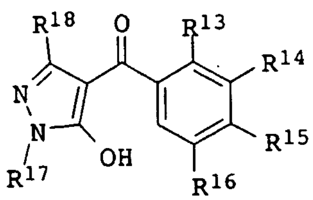

(III)

in which the variables $R^{13}$ to $R^{18}$ are as defined below:

$R^{13}$, $R^{15}$ are hydrogen, halogen, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylthio, $C_1$-$C_6$-alkylsulfinyl or $C_1$-$C_6$-alkylsulfonyl;
$R^{14}$ is a heterocyclic radical selected from the group consisting of: thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, where the nine radicals mentioned may be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
$R^{16}$ is hydrogen, halogen or $C_1$-$C_6$-alkyl;
$R^{17}$ is $C_1$-$C_6$-alkyl;
$R^{18}$ is hydrogen or $C_1$-$C_6$-alkyl;

b6) from the group of the EPSP synthase inhibitors:
glyphosate;
b7) from the group of the glutamine synthase inhibitors:
glufosinate and bilanaphos;
b8) from the group of the DHP synthase inhibitors: asulam;
b9) from the group of the mitose inhibitors:
benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham;
b10) from the group of the VLCFA inhibitors: acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;
b11) from the group of the cellulose biosynthesis inhibitors:
dichlobenil, chlorthiamid, isoxaben and flupoxam;
b12) from the group of the decoupler herbicides: dinofenate, dinoprop, dinosam, dinoseb, dinoterb, DNOC, etinofen and medinoterb;
b13) from the group of the auxin herbicides:
clomeprop, 2,4-D, 2,4,5-T, MCPA, MCPA-thioethyl, dichlorprop, dichlorprop-P, mecoprop, mecoprop-P, 2,4-DB, MCPB, chloramben, dicamba, 2,3,6-TBA, tricamba, quinclorac, quinmerac, clopyralid, fluroxypyr, picloram, triclopyr and benazolin;
b14) from the group of the auxin transport inhibitors:
naptalam, diflufenzopyr;
b15) from the group of other herbicides: benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide, daimuron (dymron) and cumyluron;

the agriculturally acceptable salts and the agriculturally acceptable derivatives of the herbicides B, provided they have a carboxyl group.

**6.** A composition as claimed in claim 5 where the herbicides B are selected from:

b1) clodinafop, cyhalofop, diclofop, fenoxaprop, fenoxaprop-P, fluazifop, fluazifop-P, haloxyfop, haloxyfop-P, metamifop, quizalofop, quizalofop-P, alloxydim, butroxydim, clethodim, cloproxydim, cycloxydim, profoxydim, sethoxydim, tepraloxydim, tralkoxydim;
b2) amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, propoxycarbazone, flucarbazone, imazamethabenz, imazamox, imazapic, imazapyr, imazaquin, imazethapyr, cloransulam, diclosulam, florasulam, flumetsulam, metosulam, penoxsulam, bispyribac, pyribenzoxim, pyriftalid, pyrithiobac, pyriminobac;
b3) atrazine, cyanazine, simazine, terbuthylazine, hexazinone, metamitron, metribuzin, amicarbazone, chloridazon, chlorbromuron, chlorotoluron, diuron, isoproturon, linuron, methabenzthiazuron, propanil, bromoxynil, ioxynil, bentazone, pyridate, difenzoquat, diquat, paraquat;
b4) acifluorfen, fluoroglycofen, halosafen, lactofen, oxyfluorfen, fluazolate, pyraflufen, cinidon-ethyl, flumiclorac, flumioxazin, fluthiacet, oxadiazon, oxadiargyl, azafenidin, carfentrazone, sulfentrazone, pentoxazone, benzfendizone, butafenacil, pyraclonil, profluazol, flufenpyr, nipyraclofen, 2-chloro-5-[3,6-dihydro-3-methyl-2,6-dioxo-4-(trifluoromethyl)-1(2H)-pyrimidinyl]-N-(dimethylsulfamoyl)-4-fluorobenzamide, 5-[3-amino-3,6-dihydro-2,6-dioxo-4-(trifluoromethyl)-1(2H)-pyrimidinyl]-2-chloro-N-(dimethylsulfamoyl)-4-fluorobenzamide, 2-chloro-5-[3,6-dihydro-3-methyl-2,6-dioxo-4-(trifluoromethyl)-1(2H)-pyrimidinyl]-N-[(ethyl)methylsulfamoyl]-4-fluorobenzamide, 5-[3-amino-3,6-dihydro-2,6-dioxo-4-(trifluoromethyl)-1(2H)-pyrimidinyl]-2-chloro-N-[(ethyl)methylsulfamoyl]-4-fluorobenzamide, 2-chloro-5-[3,6-dihydro-3-methyl-2,6-dioxo-4-(trifluoromethyl)-1(2H)-pyrimidinyl]-4-fluoro-N-[(methyl)propylsulfamoyl]benzamide, 5-[3-amino-3,6-dihydro-2,6-dioxo-4-(trifluoromethyl)-1(2H)-pyrimidinyl]-2-chloro-4-fluoro-N-[(methyl)propylsulfamoyl]benzamide, 2-chloro-5-[3,6-dihydro-3-methyl-2,6-dioxo-4-(trifluoromethyl)-1(2H)-pyrimidinyl]-4-fluoro-N-[(isopropyl)methylsulfamoyl]benzamide, 5-[3-amino-3,6-dihydro-2,6-dioxo-4-(trifluoromethyl)-1(2H)-pyrimidinyl]-2-chloro-4-fluoro-N-[(isopropyl)methylsulfamoyl]benzamide, N-[(butyl)methylsulfamoyl]-2-chloro-5-[3,6-dihydro-3-methyl-2,6-dioxo-4-(trifluoromethyl)-1(2H)-pyrimidinyl]-4-fluorobenzamide, 5-[3-amino-3,6-dihydro-2,6-dioxo-4-(trifluoromethyl)-1(2H)-pyrimidinyl]-N-[(butyl)methylsulfamoyl]-2-chloro-4-fluorobenzamide, 2-chloro-5-[3,6-dihydro-3-methyl-2,6-dioxo-4-(trifluoromethyl)-1(2H)-pyrimidinyl]-4-fluoro-N-[(isobutyl)methylsulfamoyl]benzamide, 5-[3-amino-3,6-dihydro-2,6-dioxo-4-(trifluoromethyl)-1(2H)-pyrimidinyl]-2-chloro-4-fluoro-N-[(isobutyl)methylsulfamoyl]benzamide, 2-chloro-5-[3,6-dihydro-3-methyl-2,6-dioxo-4-(trifluoromethyl)-1(2H)-pyrimidinyl]-N-(dimethylsulfamoyl)benzamide, 5-[3-amino-3,6-dihydro-2,6-dioxo-4-(trifluoromethyl)-1(2H)-pyrimidinyl]-2-chloro-N-(dimethylsulfamoyl)benzamide, 2-chloro-5-[3,6-dihydro-3-methyl-2,6-dioxo-4-(trifluoromethyl)-1(2H)-pyrimidinyl]-N-[(ethyl)methylsulfamoyl]benzamide, 5-[3-amino-3,6-dihydro-2,6-dioxo-4-(trifluoromethyl)-1(2H)-pyrimidinyl]-2-chloro-N-[(ethyl)methylsulfamoyl]benzamide, 2-chloro-5-[3,6-dihydro-3-methyl-2,6-dioxo-4-(trifluoromethyl)-1(2H)-pyrimidinyl]-N-[(methyl)propylsulfamoyl]benzamide, 5-[3-amino-3,6-dihydro-2,6-dioxo-4-(trifluoromethyl)-1(2H)-pyrimidinyl]-2-chloro-N-[(methyl)propylsulfamoyl]benzamide, 2-chloro-5-[3,6-dihydro-3-methyl-2,6-dioxo-4-(trifluoromethyl)-1(2H)-pyrimidinyl]-N-[(isopropyl)methylsulfamoyl]benzamide, 5-[3-amino-3,6-dihydro-2,6-dioxo-4-(trifluoromethyl)-1(2H)-pyrimidinyl]-2-chloro-N-[(isopropyl)methylsulfamoyl]benzamide, N-[(butyl)methylsulfamoyl]-2-chloro-5-[3,6-dihydro-3-methyl-2,6-dioxo-4-(trifluoromethyl)-1(2H)-pyrimidinyl]benzamide, 5-[3-amino- 3,6- dihydro- 2,6- dioxo- 4-(trifluoromethyl)- 1 (2H)-pyrimidinyl]-N-[(butyl) methylsulfamoyl]- 2- chlorobenzamide, 2-chloro-5-[3,6-dihydro-3-methyl-2,6-dioxo-4-(trifluoromethyl)-1(2H)-pyrimidinyl]-N-[(isobutyl)methylsulfamoyl]benzamide, 5-[3-amino-3,6-dihydro-2,6-dioxo-4-(trifluoromethyl)-1(2H)-pyrimidinyl]-2-chloro-N-[(isobutyl)methylsulfamoyl]benzamide,

b5) norflurazon, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon and clomazone, and also [2-chloro-3-(4,5-dihydro-3-isoxazolyl)-4-(methylsulfonyl)phenyl](5-hydroxy-1-methyl-1H-pyrazol-4-yl)methanone, [3-(4,5-dihydro-3-isoxazolyl)-2-methyl-4-(methylsulfonyl)phenyl](5-hydroxy-1-methyl-1H-pyrazol-4 -yl)methanone, [2-chloro-3-(3-methyl-5-isoxazolyl)-4-(methylsulfonyl)phenyl](5-hydroxy-1-methyl-1H-pyrazol-4-yl)methanone, (5-hydroxy-1-methyl-1H-pyrazol-4-yl)[2-methyl-3-(3-methyl-5-isoxazolyl)-4-(methylsulfonyl)phenyl]methanone, and also 4-(3-trifluoromethylphenoxy)-2-(4-trifluoromethylphenyl)pyrimidine;

b6) glyphosate;

b7) glufosinate;

b9) benfluralin, butralin, dinitramine, ethalfluralin, oryzalin, pendimethalin, trifluralin, propyzamide;

b10) acetochlor, alachlor, butachlor, dimethenamid, dimethenamid-P, metazachlor, metolachlor, S-metolachlor, pethoxamid, pretilachlor, propachlor, propisochlor, thenylchlor, flufenacet, mefenacet, fentrazamide, cafenstrole, indanofan;

b11) dichlobenil, chlorthiamid, isoxaben, flupoxam;

b13) 2,4-D, 2,4-DB, dichlorprop, dichlorprop-P, MCPA, MCPB, mecoprop, mecoprop-P, dicamba, quinclorac, quinmerac, clopyralid, fluroxypyr, picloram, triclopyr, benazolin;

b14) diflufenzopyr;

b15) bromobutide, cinmethylin, methyldymron, oxaziclomefone, triaziflam, daimuron (dymuron) and cumyluron;

the agriculturally acceptable salts of the abovementioned active compounds B and the agriculturally acceptable derivatives of the active compounds B, provided they have a carboxyl group.

**7.** A composition as claimed in any of the preceding claims, comprising additionally at least one safener C selected from the group consisting of benoxacor, cloquintocet, dichlormid, fenchlorazole, fenclorim, fluxofenim, furilazole, isoxadifen, mefenpyr, 2,2,5-trimethyl-3-(dichloroacetyl)-1,3-oxazolidine, 4-(dichloroacetyl)-1-oxa-4-azaspiro[4.5]decane and oxabetrinil, their agriculturally acceptable salts and, in the case of carboxylic acids, their agriculturally acceptable derivatives.

**8.** A composition as claimed in any of the preceding claims where the weight ratio of component A to component B is in the range from 10:1 to 1:500.

**9.** A composition as claimed in claim 7 where the weight ratio of component A to component C is in the range from 10:1 to 1:10.

**10.** A composition as claimed in claim 7 where the weight ratio of component B to component C is in the range from 50:1 to 1:10.

**11.** A composition as claimed in any of the preceding claims, comprising, as active compound A), a 7-pyrazolylbenzoxazole compound of the formula I in which $R^1$ is difluoromethoxy, $R^2$ is chlorine or bromine, $R^3$ is fluorine or chlorine,

$R^4$ is Cl and $R^5$ is $C_1$-$C_4$-alkyl, and, as active compound B), a compound selected from the group consisting of tepraloxydim, profoxydim, cyhalofop, sethoxydim, cyclosulfamuron, pyrazosulfuron, imazamox, imazethapyr, imazapic, imazapyr, imazaquin, nicosulfuron, propoxycarbazone, dicamba, bentazone, atrazine, isoproturon, paraquat, clomazone, mesotrione, picolinafen, glyphosate, glufosinate, acetochlor, S-metalochlor, brombutide, methyldymron, oxaziclomefone, daimuron, cumyluron, pendimethalin, flufenacet, dimethenamid-P, isoxaben, 2,4-D, quinclorac and diflufenzopyr and, in the case of ionizable or ionic herbicides, also their salts, and, in the case of compounds having a carboxyl group, also their derivatives.

**12.** A composition as claimed in any of the preceding claims in the form of a crop protection composition comprising additionally at least one inert liquid and/or solid carrier, if desired at least one surfactant and, if appropriate, customary auxiliaries.

**13.** A composition as claimed in any of the preceding claims in the form of a crop protection composition formulated as a 2-component composition comprising a first component comprising the active compound A, a solid or liquid carrier and, if appropriate, one or more surfactants, and a second component comprising at least one further active compound selected from among the herbicides B, a solid or liquid carrier and, if appropriate, one or more surfactants.

**14.** A method for controlling unwanted vegetation, which comprises applying a herbicidally effective amount of a composition as claimed in any of claims 1 to 13 to plants, to their habitat or to seed.

**15.** A method as claimed in claim 14 which comprises applying a composition as claimed in any of claims 1 to 13 before, during and/or after the emergence of the unwanted plants, where the herbicidally effective components A) and B) and optionally C) are applied simultaneously or in succession.

**16.** A method as claimed in claim 15, wherein the leaves of the crop plants and of the unwanted plants are treated.

**17.** The use of compositions as claimed in any of claims 1 to 13 for controlling unwanted vegetation.

**18.** The use of compositions as claimed in any of claims 1 to 13 for controlling undesirable vegetation in crops of cereals.

**19.** The use of compositions as claimed in any of claims 1 to 13 for controlling undesirable vegetation in crops of corn and in crops of sorghum.

**20.** The use of compositions as claimed in any of claims 1 to 13 for controlling undesirable vegetation in crops of rice.

**21.** The use of compositions as claimed in any of claims 1 to 13 for controlling undesirable vegetation in crops of cotton, in crops of oilseed rape, in crops of soyabean, in crops of potatoes, in crops of dry beans, in crops of groundnuts and in perennial crops.

**22.** The use of compositions as claimed in any of claims 1 to 13 for controlling undesirable vegetation in forestry.

**23.** The use of compositions as claimed in any of claims 1 to 13 for controlling undesirable vegetation in crops of plants where the crop plants are resistant to one or more herbicides owing to genetical engineering and/or breeding.

**24.** The use of compositions as claimed in any of claims 1 to 13 for controlling undesirable vegetation in crops of plants where the crop plants are resistant to attack by insects owing to genetical engineering and/or breeding.

**25.** The use of herbidical mixtures as claimed in any of claims 1 to 13 for the desiccation and/or defoliation of plants.

## Patentansprüche

**1.** Herbizid wirksame Zusammensetzung, umfassend

A) mindestens eine 7-Pyrazolylbenzoxazol-Verbindung der Formel I,

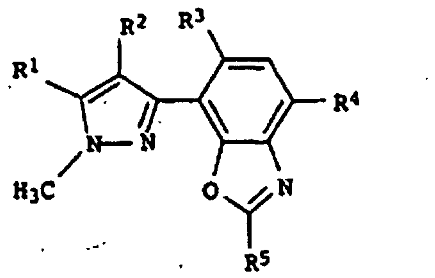

(I)

in der die Variablen $R^1$ - $R^5$ folgende Bedeutung haben:

$R^1$ Difluormethoxy, Trifluormethyl oder Methylsulfonyl;
$R^2$ Halogen;
$R^3$ Wasserstoff oder Halogen;
$R^4$ Halogen oder Cyano;
$R^5$ Wasserstoff, $C_1$-$C_6$-Alkyl, $C_1$-$C_6$-Halogenalkyl, $C_3$-$C_6$-Alkenyl, Cyano-$C_3$-$C_6$-alkenyl, $C_3$-$C_6$-Halogenalkenyl, $C_3$-$C_6$-Alkinyl, Cyano-$C_3$-$C_6$-alkinyl, $C_3$-$C_6$-Halogenalkinyl,
$C_1$-$C_4$-Alkyl, das eine der folgenden Gruppen trägt: Cyano, Hydroxy, Carboxy, $C_1$-$C_4$-Alkoxy, $C_1$-$C_4$-Halogenalkoxy, $C_3$-$C_4$-Alkenyloxy, $C_3$-$C_4$-Alkinyloxy, $C_3$-$C_8$-Cycloalkyl, $C_3$-$C_8$-Cycloalkyloxy, Amino, $C_1$-$C_4$-Alkylamino, Di($C_1$-$C_4$-alkyl)amino, $C_1$-$C_4$-Alkylthio, $C_1$-$C_4$-Halogenalkylthio, $C_3$-$C_4$-Alkenylthio, $C_3$-$C_4$-Alkinylthio, $C_1$-$C_4$-Alkylsulfinyl, $C_1$-$C_4$-Halogenalkylsulfinyl, $C_3$-$C_4$-Alkenylsulfinyl, $C_3$-$C_4$-Alkinylsulfinyl, $C_1$-$C_4$-Alkylsulfonyl, $C_1$-$C_4$-Halogenalkylsulfonyl, $C_3$-$C_4$-Alkenylsulfonyl, $C_3$-$C_4$-Alkinylsulfonyl, ($C_1$-$C_4$-Alkoxy)carbonyl, $C_3$-$C_8$-Cycloalkyl, Phenyl;
Phenyl, $C_3$-$C_8$-Cycloalkyl, wobei jeder Cycloalkyl- oder Phenylring unsubstituiert sein oder einen, zwei, drei oder vier Substituenten tragen kann, die unabhängig voneinander ausgewählt sind unter Cyano, Nitro, Amino, Hydroxy, Carboxy, Halogen, $C_1$-$C_4$-Alkyl, $C_1$-$C_4$-Halogenalkyl, $C_1$-$C_4$-Alkoxy, $C_1$-$C_4$-Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl, ($C_1$-$C_4$-Alkoxy)carbonyl, ($C_1$-$C_4$-Alkyl)carbonyl, ($C_1$-$C_4$-Halogenalkyl)carbonyl, ($C_1$-$C_4$-Alkyl)carbonyloxy, ($C_1$-$C_4$-Halogenalkyl)carbonyloxy und Di($C_1$-$C_4$-alkyl)amino;
und/oder wenigstens eines seiner landwirtschaftlich verträglichen Salze; und

wenigstens einen weiteren Wirkstoff, ausgewählt unter
B) Herbiziden der Klassen b1) bis b15):

b1) Lipidbiosynthese-Inhibitoren;
b2) Acetolactatsynthase-Inhibitoren (ALS-Inhibitoren);
b3) Photosynthese-Inhibitoren;
b4) Protoporphyrinogen-IX-oxidase-Inhibitoren,
b5) Bleacher-Herbizide;
b6) Enolpyruvyl-Shikimat-3-Phosphat-Synthase-Inhibitoren (EPSP-Inhibitoren);
b7) Glutamin-Synthetase-Inhibitoren;
b8) 7,8-Dihydropteroatsynthase-Inhibitoren (DHP-Inhibitoren);
b9) Mitose-Inhibitoren;
b10) Inhibitoren der Synthese langkettiger Fettsäuren (VLCFA-Inhibitoren);
b11) Cellulose-Biosynthese-Inhibitoren;
b12) Entkoppler-Herbizide;
b13) Auxin-Herbizide;
b14) Auxin-Transport-Inhibitoren; und
b15) sonstige Herbizide, ausgewählt unter Benzoylprop, Flamprop, Flamprop-M, Bromobutide, Chlorflurenol, Cinmethylin, Methyldymuron, Etobenzanid, Fosamine, Metam, Pyributicarb, Oxaciclomefone, Dazomet, Daimuron (Dymron), Cymyluron, Triaziflam und Methylbromid;

den landwirtschaftlich verträglichen Salzen der Wirkstoffe B sowie den landwirtschaftlich verträglichen Derivaten der Wirkstoffe B, soweit diese eine Carboxylgruppe aufweisen, wobei das Gewichtsverhältnis von Wirkstoff A:B im Bereich von 1:500 bis 10:1 liegt.

2. Zusammensetzung nach Anspruch 1, worin die Variablen $R^1$ bis $R^5$ in Formel I die folgenden Bedeutungen aufweisen:

$R^1$ Difluormethoxy;
$R^2$ Chlor oder Brom;
$R^3$ Wasserstoff, Fluor oder Chlor;
$R^4$ Halogen oder Cyano;
$R^5$ Wasserstoff, $C_1$-$C_6$-Alkyl, $C_1$-$C_6$-Halogenalkyl, $C_1$-$C_4$-Alkoxy-$C_1$-$C_4$-alkyl, $C_{3-}C_6$-Alkenyl, $C_3$-$C_6$-Alkinyl, $C_3$-$C_7$-Cycloalkyl, $C_3$-$C_8$-Cycloalkyl-$C_1$-$C_4$-alkyl, Phenyl oder Benzyl.

3. Zusammensetzung nach Anspruch 2, worin die Variablen $R^3$ bis $R^4$ in Formel I die folgenden Bedeutungen aufweisen:

$R^3$ Fluor oder Chlor;
$R^4$ Chlor.

4. Zusammensetzung nach Anspruch 2 oder 3, worin $R^5$ für $C_1$-$C_4$-Alkyl, Cyclopropyl oder Cyclopropylmethyl steht.

5. Zusammensetzung nach einem der vorhergehenden Ansprüche, enthaltend wenigstens ein Herbizid B das ausgewählt ist unter den nachfolgend aufgeführten Verbindungen:

b1) aus der Gruppe der Lipid-Biosynthese-Inhibitoren:
Chlorazifop, Clodinafop, Clofop, Cyhalofop, Diclofop, Fenoxaprop, Fenoxaprop-P, Fenthiaprop, Fluazifop, Fluazifop-P, Haloxyfop, Haloxyfop-P, Isoxapyrifop, Metamifop, Propaquizafop, Quizalofop, Quizalofop-P, Trifop, Alloxydim, Butroxydim, Clethodim, Cloproxydim, Cycloxydim, Profoxydim, Sethoxydim, Tepraloxydim, Tralkoxydim, Butylate, Cycloate, Diallate, Dimepiperate, EPTC, Esprocarb, Ethiolate, Isopolinate, Methiobencarb, Molinate, Orbencarb, Pebulate, Prosulfocarb, Sulfallate, Thiobencarb, Tiocarbazil, Triallate, Vernolate, Benfuresate, Ethofumesate und Bensulide;
b2) aus der Gruppe der ALS-Inhibitoren:
Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, lmazosulfuron, lodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, lmazamethabenz, Imazamox, lmazapic, lmazapyr, Imazaquin, lmazethapyr, Cloransulam, Diclosulam, Florasulam, Flumetsulam, Metosulam, Penoxsulam, Bispyribac, Pyriminobac, Propoxycarbazon, Flucarbazon, Pyribenzoxim, Pyriftalid und Pyrithiobac;
b3) aus der Gruppe der Photosynthese-Inhibitoren:
Atraton, Atrazine, Ametryne, Aziprotryne, Cyanazine, Cyanatryn, Chlorazine, Cyprazine, Desmetryne, Dimethametryne, Dipropetryn, Eglinazine, Ipazine, Mesoprazine, Methometon, Methoprotryne, Procyazine, Proglinazine, Prometon, Prometryne, Propazine, Sebuthylazine, Secbumeton, Simazine, Simeton, Simetryne, Terbumeton, Terbuthylazine, Terbutryne, Trietazine, Ametridione, Amibuzin, Hexazinone, Isomethiozin, Metamitron, Metribuzin, Bromacil, Isocil, Lenacil, Terbacil, Brompyrazon, Chloridazon, Dimidazon, Desmedipham, Phenisopham, Phenmedipham, Phenmedipham-ethyl, Benzthiazuron, Buthiuron, Ethidimuron, Isouron, Methabenzthiazuron, Monoisouron, Tebuthiuron, Thiazafluron, Anisuron, Buturon, Chlorbromuron, Chloreturon, Chlorotoluron, Chloroxuron, Difenoxuron, Dimefuron, Diuron, Fenuron, Fluometuron, Fluothiuron, Isoproturon, Linuron, Methiuron, Metobenzuron, Metobromuron, Metoxuron, Monolinuron, Monuron, Neburon, Parafluron, Phenobenzuron, Siduron, Tetrafluron, Thidiazuron, Cyperquat, Diethamquat, Difenzoquat, Diquat, Morfamquat, Paraquat, Bromobonil, Bromoxynil, Chloroxynil, lodobonil, loxynil, Amicarbazone, Bromofenoxim, Flumezin, Methazole, Bentazon, Propanil, Pentanochlor, Pyridate, und Pyridafol;
b4) aus der Gruppe der Protoporphyrinogen-IX-Oxidase-Inhibitoren:
Acifluorfen, Bifenox, Chlomethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolate, Pyraflufen, Cinidon-ethyl, Flumiclorac, Flumioxazin, Flumipropyn, Fluthiacet, Thidiazimin, Oxadiazon, Oxadiargyl, Azafenidin, Carfentrazone, Sulfentrazone, Pentoxazone, Benzfendizone, Butafenacil, Pyraclonil, Profluazol, Flufenpyr, Flupropacil, Nipyraclofen, Etnipromid und Phenyluracil-Verbindungen der Formel II

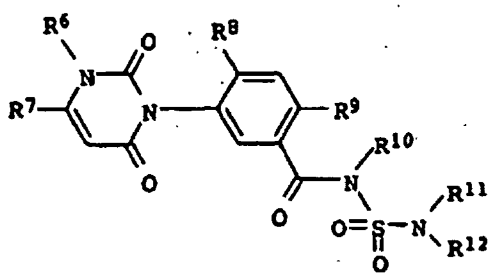

(II)

in der die Variablen $R^6$ - $R^{12}$ folgende Bedeutung haben:

$R^6$ Methyl oder $NH_2$;
$R^7$ $C_1$-$C_2$-Halogenalkyl;
$R^8$ Wasserstoff oder Halogen;
$R^9$ Halogen oder Cyano;
$R^{10}$ Wasserstoff, Cyano, $C_1$-$C_6$-Alkyl, $C_1$-$C_6$-Alkoxy, $C_1$-$C_4$-Alkoxy-$C_1$-$C_4$-alkyl, $C_3$-$C_7$-Cycloalkyl, $C_3$-$C_6$-Alkenyl, $C_3$-$C_6$-Alkinyl oder Benzyl, das gegebenenfalls durch Halogen oder Alkyl substituiert ist;
$R^{11}$, $R^{12}$ unabhängig voneinander Wasserstoff, $C_1$-$C_6$-Alkyl, $C_1$-$C_6$-Alkoxy, $C_3$-$C_6$-Alkenyl, $C_3$-$C_6$-Alkinyl, $C_3$-$C_7$-Cycloalkyl, $C_3$-$C_7$-Cycloalkenyl, Phenyl oder Benzyl, wobei jeder der 8 vorgenannten Substituenten unsubstituiert ist oder durch 1 bis 6 Halogenatome und/oder durch eine, zwei oder drei Gruppen, ausgewählt unter: OH, $NH_2$, CN, $CONH_2$, $C_1$-$C_4$-Alkoxy, $C_1$-$C_4$- Halogenalkoxy, $C_1$-$C_4$-Alkylthio, $C_1$-$C_4$-Halogenalkylthio, $C_1$-$C_4$-Alkylsulfonyl, $C_1$-$C_4$-Halogenalkylsulfonyl, $C_1$-$C_4$-Alkylamino, Di-($C_1$-$C_4$-alkyl)amino, Formyl, $C_1$-$C_4$-Alkylcarbonyl, $C_1$-$C_4$-Alkoxycarbonyl, $C_1$-$C_4$-Alkylaminocarbonyl, Di($C_1$-$C_4$-alkyl)aminocarbonyl, $C_3$-$C_7$-Cycloalkyl, Phenyl oder Benzyl, substituiert sein kann; oder
$R^{11}$, $R^{12}$ bilden gemeinsam mit dem Stickstoffatom einen 3-, 4-, 5-, 6- oder 7-gliedrigen, gesättigten oder ungesättigten Stickstoffheterocyclus, der gegebenenfalls durch 1 bis 6 Methylgruppen substituiert ist und der gegebenenfalls 1 oder 2 weitere Heteroatome, ausgewählt unter Stickstoff, Sauerstoff und Schwefel als Ringglieder aufweisen kann,

b5) aus der Gruppe der Bleacher-Herbizide: Metflurazon, Norflurazon, Flufenican, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon, Amitrole, Clomazone, Aclonifen, 4-(3-Trifluormethylphenoxy)-2-(4-trifluormethylphenyl)pyrimidin sowie 3-heterocyclyl-substituierte Benzoylderivate der Formel III

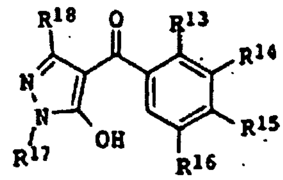

(III)

in der die Variablen $R^{13}$ bis $R^{18}$ die folgende Bedeutung haben:

$R^{13}$, $R^{15}$ Wasserstoff, Halogen, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylthio, $C_1$-$C_6$-Alkylsulfinyl oder $C_1$-$C_6$-Alkylsulfonyl;
$R^{14}$ ein heterocyclischer Rest ausgewählt aus der Gruppe: Thiazol-2-yl, Thiazol-4-yl, Thiazol-5-yl, Isoxazol-3-yl, Isoxazol-4-yl, Isoxazol-5-yl, 4,5-Dihydroisoxazol-3-yl, 4,5-Dihydroisoxazol-4-yl und 4,5-Dihydroisoxazol-5-yl, wobei die neun genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;
$R^{16}$ Wasserstoff, Halogen oder $C_1$-$C_6$-Alkyl;
$R^{17}$ $C_1$-$C_6$-Alkyl;
$R^{18}$ Wasserstoff oder $C_1$-$C_6$-Alkyl.

b6) aus der Gruppe der EPSP-Synthase-Inhibitoren: Glyphosate;
b7) aus der Gruppe der Glutamin-Synthase-Inhibitoren: Glufosinate und Bilanaphos;

b8) aus der Gruppe der DHP-Synthase-Inhibitoren: Asulam;
b9) aus der Gruppe der Mitose-Inhibitoren:
Benfluralin, Butralin, Dinitramine, Ethalfluralin, Fluchloralin, Isopropalin, Methalpropalin, Nitralin, Oryzalin, Pendimethalin, Prodiamine, Profluralin, Trifluralin, Amiprofos-methyl, Butamifos, Dithiopyr, Thiazopyr, Propyzamide, Tebutam, Chlorthal, Carbetamide, Chlorbufam, Chlorpropham und Propham;
b10) aus der Gruppe der VLCFA-Inhibitoren: Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propachlor, Propisochlor, Prynachlor, Terbuchlor, Thenylchlor, Xylachlor, Allidochlor, CDEA, Epronaz, Diphenamid, Napropamide, Naproanilide, Pethoxamid, Flufenacet, Mefenacet, Fentrazamide, Anilofos, Piperophos, Cafenstrole, Indanofan und Tridiphane;
b11) aus der Gruppe der Cellulose-Biosynthese-Inhibitoren:
Dichlobenil, Chlorthiamid, Isoxaben und Flupoxam;
b12) aus der Gruppe der Entkoppler-Herbizide: Dinofenate, Dinoprop, Dinosam, Dinoseb, Dinoterb, DNOC, Etinofen und Medinoterb;
b13) aus der Gruppe der Auxin-Herbizide:
Clomeprop, 2,4-D, 2,4,5-T, MCPA, MCPA Thioethyl, Dichlorprop, Dichlorprop-P, Mecoprop, Mecoprop-P, 2,4-DB, MCPB, Chloramben, Dicamba, 2,3,6-TBA, Tricamba, Quinclorac, Quinmerac, Clopyralid, Fluroxypyr, Picloram, Triclopyr und Benazolin;
b14) aus der Gruppe der Auxin-Transport-Inhibitoren: Naptalam, Diflufenzopyr;
b15) aus der Gruppe der sonstigen Herbizide: Benzoylprop, Flamprop, Flamprop-M, Bromobutide, Chlorflurenol, Cinmethylin, Methyldymron, Etobenzanid, Fosamine, Metam, Pyributicarb, Oxaziclomefone, Dazomet, Triaziflam, Methylbromid, Daimuron (Dymron) und Cumyluron;

den landwirtschaftlich verträglichen Salzen und den landwirtschaftlich verträglichen Derivaten der Herbizide B, soweit diese eine Carboxylgruppe aufweisen.

**6.** Zusammensetzung nach Anspruch 5, worin die Herbizide B ausgewählt sind unter:

b1) Clodinafop, Cyhalofop, Diclofop, Fenoxaprop, Fenoxaprop-P, Fluazifop, Fluazifop-P, Haloxyfop, Haloxyfop-P,Metamifop, Quizalofop, Quizalofop-P, Alloxydim, Butroxydim, Clethodim, Cloproxydim, Cycloxydim, Profoxydim, Sethoxydim, Tepraloxydim, Tralkoxydim;
b2) Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Propoxycarbazon, Flucarbazon, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyribenzoxim, Pyriftalid, Pyrithiobac, Pyriminobac;
b3) Atrazine, Cyanazine, Simazine, Terbuthylazine, Hexazinone, Metamitron, Metribuzin, Amicarbazone, Chloridazon, Chlorbromuron, Chlorotoluron, Diuron, Isoproturon, Linuron, Methabenzthiazuron, Propanil, Bromoxynil, Ioxynil, Bentazon, Pyridate, Difenzoquat, Diquat, Paraquat;
b4) Acifluorfen, Fluoroglycofen, Halosafen, Lactofen, Oxyfluorfen, Fluazolate, Pyraflufen, Cinidon-ethyl, Flumiclorac, Flumioxazin, Fluthiacet, Oxadiazon, Oxadiargyl, Azafenidin, Carfentrazone, Sulfentrazone, Pentoxazone, Benzfendizone, Butafenacil, Pyraclonil, Profluazol, Flufenpyr, Nipyraclofen, 2-Chlor-5-[3,6-dihydro-3-methyl-2,6-dioxo-4-(trifluormethyl)-1(2H)-pyrimidinyl]-N-(dimethylsulfamoyl)-4-fluorbenzamid, 5-[3-Amino-3,6-dihydro-2,6-dioxo-4-(trifluormethyl)-1(2H)-pyrimidinyl]-2-chlor-N-(dimethylsulfamoyl)-4-fluorbenzamid, 2-Chlor-5-[3,6-dihydro-3-methyl-2,6-dioxo-4-(trifluormethyl)-1(2H)-pyrimidinyl]-N-[(ethyl)methylsulfamoyl]-4-fluorbenzamid, 5-[3-Amino-3,6-dihydro-2,6-dioxo-4-(trifluormethyl)-1(2H)-pyrimidinyl]-2-chlor-N-[(ethyl)methylsulfamoyl]-4-fluorbenzamid, 2-Chlor -5-[3,6-dihydro-3-methyl-2,6-dioxo-4-(trifluormethyl)-1(2H)-pyrimidinyl]-4-fluor-N-[(methyl)propylsulfamoyl]benzamid, 5-[3-Amino-3,6-dihydro-2,6-dioxo-4-(trifluormethyl)-1(2H)-pyrimidinyl]-2-chlor-4-fluor-N-[(methyl)propylsulfamoyl]benzamid, 2-Chlor-5-[3,6-dihydro-3-methyl-2,6-dioxo-4-(trifluormethyl)-1(2H)-pyrimidinyl]-4-fluor-N-[(isopropyl)methylsulfamoyl]benzamid, 5-[3-Amino-3,6-dihydro-2,6-dioxo-4-(trifluormethyl)-1(2H)-pyrimidinyl]-2-chlor-4-fluor-N-[(isopropyl)methylsulfamoyl]benzamid, N-[(butyl)methylsulfamoyl]-2-chlor-5-[3,6-dihydro-3-methyl-2,6-dioxo-4-(trifluormethyl)-1(2H)-pyrimidinyl]-4-fluorbenzamid, 5-[3-Amino-3,6-dihydro-2,6-dioxo-4-(trifluormethyl)-1 (2H)-pyrimidinyl]-N-[(butyl)methylsulfamoyl]-2-chlor-4-fluorbenzamid, 2-Chlor-5-[3,6-dihydro-3-methyl-2,6-dioxo-4-(trifluormethyl)-1(2H)-pyrimidinyl]-4-fluor-N-[(isobutyl)methylsulfamoyl]benzamid, 5-[3-Amino-3,6-dihydro-2,6-dioxo-4-(trifluormethyl)-1(2H)-pyrimidinyl]-2-chlor-4-fluor-N-[(isobutyl)methylsulfamoyl]benzamid, 2-Chlor-5-[3,6-dihydro-3-methyl-2,6-dioxo-4-(trifluormethyl)-1(2H)-pyrimidinyl]-N-(dimethylsulfamoyl)benzamid, 5-[3-Amino-3,6-dihydro-2,6-dioxo-4-(trifluormethyl)-1(2H)-pyrimidinyl]-2-chlor-N-(dimethyisulfamoyl)benzamid, 2-Chlor-5-[3,6-dihydro-3-methyl-2,6-dioxo-4-(trifluormethyl)-1(2H)-pyrimidinyl]-N-[(ethyl)methylsulfamoyl]benzamid, 5-[3-Amino-3,6-dihydro-2,6-dioxo-4-(trifluormethyl)-1(2H)-pyrimidinyl]-2-chlor-N-[(ethyl)methylsulfamoyl]benzamid, 2-Chlor-5-[3,6-dihydro-3-methyl-2,6-dioxo-4-(trifluormethyl)-1(2H)-pyrimidinyl]-N-[(methyl)propylsulfamoyl]benzamid, 5-[3-Amino-3,6-dihydro-2,6-dioxo-4-(trifluormethyl)-1(2H)-pyrimidinyl]-2-chlor-N-[(methyl)propylsulfamoyl]benzamid, 2-Chlor-5-[3,6-dihydro-3-methyl-2,6-dioxo-4-(trifluormethyl)-1(2H)-pyrimidinyl]-N-[(isopropyl)methylsulfamoyl]benzamid, 5-[3-Amino-3,6-dihydro-2,6-dioxo-4-(trifluormethyl)-1(2H)-pyrimidinyl]-2-chlor-N-[(isopropyl)methylsulfamoyl]benzamid, N-[(butyl)methylsulfamoyl]-2-chlor-5-[3,6-dihydro-3-methyl-2,6-dioxo-4-(trifluormethyl)-1(2H)-pyrimidinyl]benzamid, 5-[3-Amino-3,6-dihydro-2,6-dioxo-4-(trifluormethyl)-1(2H)-pyrimidinyl]-N-[(butyl)methylsulfamoyl]-2-chlorbenzamid, 2-Chlor-5-[3,6-dihydro-3-methyl-2,6-dioxo-4-(trifluormethyl)-1(2H)-pyrimidinyl]-N-[(isobutyl)methylsulfamoyl]benzamid, 5-[3-Amino-3,6-dihydro-2,6-dioxo-4-(trifluormethyl)-1(2H)-pyrimidinyl]-2-chlor-N-[(isobutyl)methylsulfamoyl]benzamid,
b5) Norflurazon, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon und Clomazone, sowie [2-Chlor-3-(4,5-dihydro-3-isoxazolyl)-4-(methylsulfonyl)phenyl](5-hydroxy-1-methyl-1H-pyrazol-4-yl)methanon, [3-(4,5-Dihydro-3-isoxazolyl)-2-methyl-4-(methylsulfonyl)phenyl](5-hydroxy-1-methyl-1H-pyrazol-4-yl)methanon, [2-Chlor-3-(3-methyl-5-isoxazolyl)-4-(methylsulfonyl)phenyl](5-hydroxy-1-methyl-1H-pyrazol-4-yl)methanon, (5-Hydroxy-1-methyl-1H-pyrazol-4-yl)[2-methyl-3-(3-methyl-5-isoxazolyl)-4-(methylsulfonyl)phenyl]methanon, sowie 4-(3-Trifluormethylphenoxy)-2-(4-trifluormethylphenyl)pyrimidin ;
b6) Glyphosate;
b7) Glufosinate;
b9) Benfluralin, Butralin, Dinitramine, Ethalfluralin, Oryzalin, Pendimethalin, Trifluralin, Propyzamide;
b10) Acetochlor, Alachlor, Butachlor, Dimethenamid, Dimethenamid-P, Metazachlor, Metolachlor, S-Metolachlor, Pethoxamid, Pretilachlor, Propachlor, Propisochlor, Thenylchlor, Flufenacet, Mefenacet, Fentrazamide, Cafenstrole, Indanofan;
b11) Dichlobenil, Chlorthiamid, Isoxaben, Flupoxam;
b13) 2,4-D, 2,4-DB, Dichlorprop, Dichlorprop-P, MCPA, MCPB, Mecoprop, Mecoprop-P, Dicamba, Quinclorac, Quinmerac, Clopyralid, Fluroxypyr, Picloram, Triclopyr, Benazolin;
b14) Diflufenzopyr;
b15) Bromobutide, Cinmethylin, Methyldymron, Oxaziclomefone, Triaziflam, Daimuron (Dymron) und Cumyluron;

den landwirtschaftlich verträglichen Salzen der vorgenannten Wirkstoffe B und den landwirtschaftlich verträglichen Derivaten der Wirkstoffe B, soweit diese eine Carboxylgruppe aufweisen.

**7.** Zusammensetzung nach einem der vorhergehenden Ansprüche, enthaltend zusätzlich wenigstens einen Safener C, ausgewählt unter Benoxacor, Cloquintocet, Dichlormid, Fenchlorazole, Fenclorim, Fluxofenim, Furilazole, Isoxadifen, Mefenpyr, 2,2,5-Trimethyl-3-(dichloracetyl)-1,3-oxazolidin, 4-(Dichloracetyl)-1-oxa-4-azaspiro[4,5]decan und Oxabetrinil, deren landwirtschaftlich verträglichen Salzen und im Falle von Carbonsäuren deren landwirtschaftlich verträglichen Derivaten.

**8.** Zusammensetzung nach einem der vorhergehenden Ansprüche, worin das Gewichtsverhältnis von Komponente A zu Komponente B im Bereich von 10:1 bis 1:500 liegt.

**9.** Zusammensetzung nach Anspruch 7, worin das Gewichtsverhältnis von Komponente A zu Komponente C im Bereich von 10:1 bis 1:10 liegt.

**10.** Zusammensetzung nach Anspruch 7, worin das Gewichtsverhältnis von Komponente B zu Komponente C im Bereich von 50:1 bis 1:10 liegt.

**11.** Zusammensetzung nach einem der vorhergehenden Ansprüche, enthaltend als Wirkstoff A) eine 7-Pyrazolylbenzoxazol-Verbindung der Formel I, worin $R^1$ für Difluormethoxy, $R^2$ für Chlor oder Brom, $R^3$ für Fluor oder Chlor, $R^4$ für Cl und $R^5$ für $C_1$-$C_4$-Alkyl steht, und als Wirkstoff B) eine Verbindung ausgewählt unter Tepraloxydim, Profoxydim, Cyhalofop, Sethoxydim, Cyclosulfamuron, Pyrazosulfuron, Imazamox, Imazethapyr, Imazapic, Imazapyr, Imazaquin, Nicosulfuron, Propoxycarbazon, Dicamba, Bentazon, Atrazine, Isoproturon, Paraquat, Clomazone, Mesotrione, Picolinafen, Glyphosate, Glufosinate, Acetochlor, S-Metalochlor, Brombutide, Methyldymron, Oxaziclomefone, Daimuron, Cumyluron, Pendimethalin, Flufenacet, Dimethenamid-P, Isoxaben, 2,4-D, Quinclorac und Diflufenzopyr

sowie im Falle ionisierbarer oder ionischer Herbizide auch deren Salze, sowie im Falle von Verbindungen mit Carboxylgruppe auch deren Derivate.

**12.** Zusammensetzung nach einem der vorhergehenden Ansprüche in Form eines Pflanzenschutzmittels, enthaltend zusätzlich mindestens einen inerten flüssigen und/oder festen Trägerstoff, gewünschtenfalls mindestens einen grenzflächenaktiven Stoff und gegebenenfalls übliche Hilfsmittel.

**13.** Zusammensetzung nach einem der vorhergehenden Ansprüche in Form eines als 2-Komponentenzusammensetzung formulierten Pflanzenschutzmittels, umfassend eine erste Komponente, enthaltend den Wirkstoff A, einen festen oder flüssigen Träger und gegebenenfalls eine oder mehrere grenzflächenaktive Substanzen, und eine zweite Komponente, enthaltend wenigstens einen weiteren Wirkstoff, ausgewählt unter den Herbiziden B, einem festen oder flüssigen Träger und gegebenenfalls eine oder mehrere grenzflächenaktive Substanzen.

**14.** Verfahren zur Bekämpfung von unerwünschtem Pflanzenwuchs, **dadurch gekennzeichnet, dass** man eine herbizid wirksame Menge einer Zusammensetzung nach einem der Ansprüche 1 bis 13 auf Pflanzen, deren Lebensraum oder Saatgut einwirken läßt.

**15.** Verfahren nach Anspruch 14, **dadurch gekennzeichnet, dass** man eine Zusammensetzung gemäß einem der Ansprüche 1 bis 13, vor, während und/oder nach dem Auflaufen der unerwünschten Pflanzen ausbringt, wobei die herbizid wirksamen Bestandteile A) und B) und gegebenenfalls C) gleichzeitig oder nacheinander appliziert werden.

**16.** Verfahren nach Anspruch 15, **dadurch gekennzeichnet, dass** man die Blätter der Kulturpflanzen und der unerwünschten Pflanzen behandelt.

**17.** Verwendung von Zusammensetzungen gemäß einem der Ansprüche 1 bis 13 zur Bekämpfung von unerwünschtem Pflanzenwuchs.

**18.** Verwendung von Zusammensetzungen gemäß einem der Ansprüche 1 bis 13 zur Bekämpfung von unerwünschtem Pflanzenwuchs in Getreidekulturen.

**19.** Verwendung von Zusammensetzungen gemäß einem der Ansprüche 1 bis 13 zur Bekämpfung von unerwünschtem Pflanzenwuchs in Maiskulturen und in Rapskulturen.

**20.** Verwendung von Zusammensetzungen gemäß einem der Ansprüche 1 bis 13 zur Bekämpfung von unerwünschtem Pflanzenwuchs in Reiskulturen.

**21.** Verwendung von Zusammensetzungen gemäß einem der Ansprüche 1 bis 13 zur Bekämpfung von unerwünschtem Pflanzenwuchs in Baumwollkulturen, in Rapskulturen, in Sojakulturen, in Kartoffelkulturen, in Gartenbohnenkulturen, in Erdnusskulturen und in Dauerkulturen.

**22.** Verwendung von Zusammensetzungen gemäß einem der Ansprüche 1 bis 13 zur Bekämpfung von unerwünschtem Pflanzenwuchs in der Forstwirtschaft.

**23.** Verwendung von Zusammensetzungen gemäß einem der Ansprüche 1 bis 13 zur Bekämpfung von unerwünschtem Pflanzenwuchs in Pflanzenkulturen, worin die Kulturpflanzen aufgrund von gentechnischen und/oder züchterischen Maßnahmen Resistenz gegen eines oder mehrere Herbizide aufweisen.

**24.** Verwendung von Zusammensetzungen gemäß einem der Ansprüche 1 bis 13 zur Bekämpfung von unerwünschtem Pflanzenwuchs in Pflanzenkulturen, worin die Kulturpflanzen aufgrund von gentechnischen und/oder züchterischen Maßnahmen Resistenz gegen einen Befall mit Insekten aufweisen.

**25.** Verwendung von herbiziden Mischungen gemäß einem der Ansprüche 1 bis 13 zur Desikkation oder Defoliation von Pflanzen.

## Revendications

**1.** Composition active du point de vue herbicide, comprenant

A) au moins un composé de 7-pyrazolylbenzoxazole de la formule I :

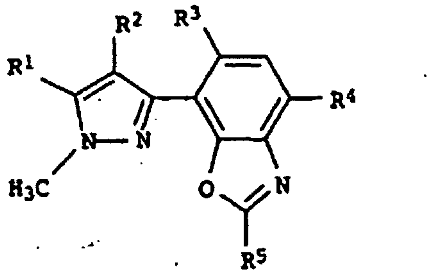

(I)

dans laquelle les variables $R^1$ à $R^5$ sont telles que définies ci-dessous :

$R^1$ représente un groupe difluorométhoxy, trifluorométhyle ou méthylsulfonyle,
$R^2$ représente de l'halogène,
$R^3$ représente de l'hydrogène ou de l'halogène,
$R^4$ représente de l'halogène ou un groupe cyano,
$R^5$ représente de l'hydrogène ou un groupe $C_1$-$C_6$-alkyle, $C_1$-$C_6$-halogénoalkyle, $C_3$-$C_6$-alcényle, cyano-$C_3$-$C_6$-alcényle, $C_3$-$C_6$-halogénoalcényle, $C_3$-$C_6$-alcynyle, cyano-$C_3$-$C_6$-alcynyle, $C_3$-$C_6$-halogénoalcynyle, $C_1$-$C_4$-alkyle qui porte un des groupes suivants :
cyano, hydroxyle, carboxyle, $C_1$-$C_4$-alcoxy, $C_1$-$C_4$-halogénoalcoxy, $C_3$-$C_4$-alcényloxy, $C_3$-$C_4$-alcynyloxy, $C_3$-$C_8$-cycloalkyle, $C_3$-$C_8$-

cycloalkyloxy, amino, $C_1$-$C_4$-alkylamino, di($C_1$-$C_4$-alkyl)amino, $C_1$-$C_4$-alkylthio, $C_1$-$C_4$-halogénoalkylthio, $C_3$-$C_4$-alcénylthio, $C_3$-$C_4$-alcynylthio, $C_1$-$C_4$-alkylsulfinyle, $C_1$-$C_4$-halogénoalkylsulfinyle, $C_3$-$C_4$-alcénylsulfinyle, $C_3$-$C_4$-alcynylsulfinyle, $C_1$-$C_4$-alkylsulfonyle, $C_1$-$C_4$-halogénoalkylsulfonyle, $C_3$-$C_4$-alcénylsulfonyle, $C_3$-$C_4$-alcynylsulfonyle, ($C_1$-$C_4$-alcoxy)carbonyle, $C_3$-$C_8$-cycloalkyle, phényle,
phényle, $C_3$-$C_8$-cycloalkyle, où chaque noyau de cycloalkyle ou de phényle peut être non substitué ou peut porter un, deux, trois ou quatre substituants indépendamment l'un de l'autre, choisis parmi le groupe constitué par de l'halogène ou des groupes cyano, nitro, amino, hydroxyle, carboxyle, $C_1$-$C_4$-alkyle, $C_1$-$C_4$-halogénoalkyle, $C_1$-$C_4$-alcoxy, $C_1$-$C_4$-halogénoalcoxy, $C_1$-$C_4$-alkylthio, $C_1$-$C_4$-halogénoalkylthio, $C_1$-$C_4$-alkylsulfonyle, $C_1$-$C_4$-halogénoalkylsulfonyle, ($C_1$-$C_4$-alcoxy)-carbonyle, ($C_1$-$C_4$-alkyl)carbonyle, ($C_1$-$C_4$-halogénoalkyl)carbonyle, ($C_1$-$C_4$-alkyl)carbonyloxy, ($C_1$-$C_4$-halogénoalkyl)carbonyloxy et di ($C_1$-$C_4$-alkyl)amino,
et/ou au moins un de ses sels acceptables en agriculture, et
au moins un autre composé actif choisi parmi
B) des herbicides des classes b1) à b15) :

b1) inhibiteurs de biosynthèse de lipide,
b2) inhibiteurs d'acétolactate-synthase (inhibiteurs ALS),
b3) inhibiteurs de photosynthèse,
b4) inhibiteurs de protoporphyrinogène-IX-oxydase,
b5) herbicides décolorants,
b6) inhibiteurs d'énolpyruvyl-shikimate-3-phosphate-synthase (inhibiteurs EPSP),
b7) inhibiteurs de glutamine-synthétase,
b8) inhibiteurs de 7,8-dihydropteroate-synthase (inhibiteurs DHP),
b9) inhibiteurs de mitose,
b10) inhibiteurs de la synthèse d'acides gras à longue chaîne (inhibiteurs VLCFA),
b11) inhibiteurs de biosynthèse de cellulose,
b12) herbicides découpleurs,
b13) herbicides à auxine,
b14) inhibiteurs de transport d'auxine, et
b15) d'autres herbicides choisis parmi le groupe constitué de benzoylprop, flamprop, flamprop-M, bromobutide, chlorflurénol, cinméthylin, méthyldymuron, étobenzanid, fosamine, métam, pyributicarb, oxaciclométone, dazomet, daimuron (dymron), cumyluron, triaziflam et de bromure de méthyle,

les sels acceptables en agriculture des composés actifs B et les dérivés acceptables en agriculture des composés

actifs B, pourvu qu'ils aient un groupe carboxyle, le rapport pondéral entre les composés actifs A/B étant de l'ordre de 1/500 à 10/1.

**2.** Composition suivant la revendication 1, où les variables $R^1$ à $R^5$ dans la formule I sont telles que définies ci-dessous :

$R^1$ est du difluorométhoxy,
$R^2$ est du chlore ou du brome,
$R^3$ est de l'hydrogène, du fluor ou du chlore,
$R^4$ est de l'halogène ou du cyano,
$R^5$ est de l'hydrogène ou un groupe $C_1$-$C_6$-alkyle, $C_1$-$C_6$-halogénoalkyle, $C_1$-$C_4$-alcoxy-$C_1$-$C_4$-alkyle, $C_3$-$C_6$-alcényle, $C_3$-$C_6$-alcynyle, $C_3$-$C_7$-cycloalkyle, $C_3$-$C_8$-cycloalkyl-$C_1$-$C_4$-alkyle, phényle ou benzyle.

**3.** Composition suivant la revendication 2, où les variables $R^3$ à $R^4$ dans la formule I sont telles que définies ci-dessous :

$R^3$est du fluor ou du chlore,
$R^4$ est du chlore.

**4.** Composition suivant la revendication 2 ou 3, où $R^5$ représente un groupe $C_1$-$C_4$-alkyle, cyclopropyle ou cyclopropylméthyle.

**5.** Composition suivant l'une quelconque des revendications précédentes, comprenant au moins un herbicide B choisi parmi les composés listés ci-dessous .

b1) parmi le groupe des inhibiteurs de biosynthèse de lipide :
chlorazifop, clodinafop, clofop, cyhalofop, diclofop, fénoxaprop, fénoxaprop-p, fenthiaprop, fluazifop, fluazifop-P, haloxyfop, haloxyfop-P, isoxapyrifop, métamifop, propaquizafop, quizalofop, quizalofop-P, trifop, alloxydim, butroxydim, cléthodim, cloproxydim, cycloxydim, profoxydim, séthoxydim, tépraloxydim, tralkoxydim, butylate, cycloate, diallate, dimépipérate, EPTC, esprocarb, éthiolate, isopolinate, méthiobencarb, molinate, orbencarb, pébulate, prosulfocarb, sulfallate, thiobencarb, tiocarbazil, triallate, vernolate, benfurésate, éthofumésate et bensulide,
b2) parmi le groupe des inhibiteurs ALS :
amidosulfuron, azimsulfuron, bensulfuron, chlorimuron, chlorsulfuron, cinosulfuron, cyclosulfamuron, éthamétsulfuron, éthoxysulfuron, flazasulfuron, flupyrsulfuron, foramsulfuron, halosulfuron, imazosulfuron, iodosulfuron, mésosulfuron, métsulfuron, nicosulfuron, oxasulfuron, primisulfuron, prosulfuron, pyrazosulfuron, rimsulfuron, sulfométuron, sulfosulfuron, thifensulfuron, triasulfuron, tribénuron, trifloxysulfuron, triflusulfuron, tritosulfuron, imazaméthabenz, imazamox, imazapic, imazapyr, imazaquin, imazéthapyr, cloransulam, diclosulam, florasulam, flumétsulam, métosulam, pénoxsulam, bispyribac, pyriminobac, propoxycarbazone, flucarbazone, pyribenzoxim, pyriftalid et pyrithiobac,
b3) parmi le groupe des inhibiteurs de photosynthèse :
atraton, atrazine, amétryne, aziprotryne, cyanazine, cyanatryn, chlorazine, cyprazine, desmétryne, diméthamétryne, dipropetryn, eglinazine, ipazine, mésoprazine, méthometon, méthoprotryne, procyazine, proglinazine, prometon, prométryne, propazine, sébuthylazine, secbuméton, simazine, simeton, simétryne, terbumeton, terbuthylazine, terbutryne, triétazine, amétridione, amibuzin, hexazinone, isométhiozin, métamitron, métribuzin, bromacil, isocil, lénacil, terbacil, brompyrazon, chloridazon, dimidazon, desmédipham, phénisopham, phenmédipham, phenmédipham-éthyl, benzthiazuron, buthiuron, éthidimuron, isouron, méthabenzthiazuron, monoisouron, tébuthiuron, thiazafluron, anisuron, buturon, chlorbromuron, chloréturon, chlorotoluron, chloroxuron, difénoxuron, diméfuron, diuron, fénuron, fluométuron, fluothiuron, isoproturon, linuron, méthiuron, métobenzuron, métobromuron, métoxuron, monolinuron, monuron, neburon, parafluron, phénobenzuron, siduron, tétrafluron, thidiazuron, cyperquat, diéthamquat, difenzoquat, diquat, morfamquat, paraquat, bromobonil, bromoxynil, chloroxynil, iodobonil, ioxynil, amicarbazone, bromofénoxim, flumezin, méthazole, bentazone, propanil, pentanochlor, pyridate et pyridafol,
b4) parmi le groupe des inhibiteurs de protoporphyrinogène-IX- oxydase :
acifluorfen, bifénox, chlométhoxyfen, chlornitrofen, éthoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-éthyl, flumiclorac, flumioxazin, flumipropyn, fluthiacet, thidiazimin, oxadiazon, oxadiargyl, azafénidin, carfentrazone, sulfentrazone, pentoxazone, benzfendizone, butafénacil, pyraclonil, profluazol, flufenpyr, flupropacil, nipyraclofen, étnipromid et des composés de phényluracil de la formule II :

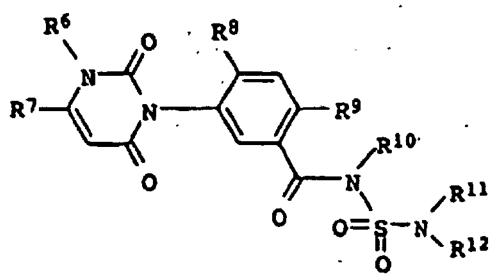

(II)

dans laquelle les variables $R^6$-$R^{12}$ sont telles que définies ci-dessous :

$R^6$ est du méthyle ou $NH_2$,
$R^7$ est un groupe $C_1$-$C_2$-halogénoalkyle,
$R^8$ est de l'hydrogène ou de l'halogène,
$R^9$ est de l'halogène ou un groupe cyano,
$R^{10}$ est de l'hydrogène ou un groupe cyano, $C_1$-$C_6$-alkyle, $C_1$-$C_6$-alcoxy, $C_1$-$C_4$-alcoxy-$C_1$-$C_4$- alkyle, $C_3$-$C_7$-cycloalkyle, $C_3$-$C_6$-alcényle, $C_3$-$C_6$-alcynyle ou benzyle qui est non substitué ou substitué par de l'halogène ou un alkyle,
$R^{11}$ et $R^{12}$ représentent indépendamment l'un de l'autre de l'hydrogène ou un groupe $C_1$-$C_6$-alkyle, $C_1$-$C_6$-alcoxy, $C_3$-$C_6$-alcényle, $C_3$-$C_6$-alcynyle, $C_3$-$C_7$-cycloalkyle, $C_3$-$C_7$-cycloalcényle, phényle ou benzyle, où chacun des 8 substituants mentionnés en dernier lieu est non substitué ou peut être substitué par 1 à 6 atomes d'halogène et/ou par un, deux ou trois groupes choisis parmi : OH, $NH_2$, CN, $CONH_2$, $C_1$-$C_4$-alcoxy, $C_1$-$C_4$-halogénoalcoxy, $C_1$-$C_4$-alkylthio, $C_1$-$C_4$-halogénoalkylthio, $C_1$-$C_4$-alkylsulfonyle, $C_1$-$C_4$-halogénoalkylsulfonyle, $C_1$-$C_4$-alkylamino, di-($C_1$-$C_4$-alkyl) amino, formyle, $C_1$-$C_4$-alkylcarbonyle, $C_1$-$C_4$-alcoxycarbonyle, $C_1$-$C_4$-alkylaminocarbonyle, di ($C_1$-$C_4$-alkyl)aminocarbonyle, $C_3$-$C_7$-cycloalkyle, phényle ou benzyle, ou
$R^{11}$ et $R^{12}$ forment conjointement à l'atome d'azote un hétérocycle azoté à 3, 4, 5, 6 ou 7 termes, saturé ou non saturé, qui est non substitué ou substitué par 1 à 6 groupes méthyle et qui peut contenir, comme termes du cycle, 1 ou 2 hétéroatomes supplémentaires choisis parmi le groupe constitué de l'azote, de l'oxygène et du soufre,

b5) parmi le groupe des herbicides décolorants :
métflurazon, norflurazon, flufénican, diflufénican, picolinafen, béflubutamid, fluridone, flurochloridone, flurtamone, mésotrione, sulcotrione, isoxachlortole, isoxaflutole, benzofénap, pyrazolynate, pyrazoxyfen, benzobicyclon, amitrole, clomazone, aclonifen, 4-(3-trifluorométhylphénoxy)-2-(4-trifluorométhylphényl)-pyrimidine et également des dérivés benzoyle substitués par un groupe 3-hétérocyclyle de la formule III :

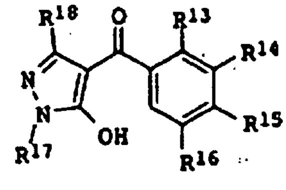

(III)

dans laquelle les variables $R^{13}$ à $R^{18}$ sont telles que définies ci-dessous :

$R^{13}$ et $R^{15}$ représentent de l'hydrogène, un halogène ou un groupe $C_1$-$C_6$-alkyle, $C_1$-$C_6$-halogénoalkyle, $C_1$-$C_6$-alcoxy, $C_1$-$C_6$-halogénoalcoxy, $C_1$-$C_6$-alkylthio, $C_1$-$C_6$-alkylsulfinyle ou $C_1$-$C_6$-alkylsulfonyle,
$R^{14}$ est un radical hétérocyclique choisi parmi le groupe constitué des radicaux thiazol-2-yle, thiazol-4-yle, thiazol-5-yle, isoxazol-3-yle, isoxazol-4-yle, isoxazol-5-yle, 4,5-dihydroisoxazol-3-yle, 4,5-dihydroisoxazol-4-yle et 4,5-dihydroisoxazol-5-yle, où les neufs radicaux mentionnés peuvent être non substitués ou mono- ou polysubstitués par de l'halogène ou un groupe $C_1$-$C_4$-alkyle, $C_1$-$C_4$-alcoxy, $C_1$-$C_4$-halogénoalkyle, $C_1$-$C_4$-halogénoalcoxy ou $C_1$-$C_4$-alkylthio,
$R^{16}$ est de l'hydrogène, un halogène ou un groupe $C_1$-$C_6$-alkyle,
$R^{17}$ est un groupe $C_1$-$C_6$-alkyle,

$R^{18}$ est de l'hydrogène ou un groupe $C_1$-$C_6$-alkyle,

b6) parmi le groupe des inhibiteurs d'EPSP-synthase :
glyphosate,
b7) parmi le groupe des inhibiteurs de glutamine-synthase :
glufosinate et bilanaphos,
b8) parmi le groupe des inhibiteurs de DHP-synthase :
asulam,
b9) parmi le groupe des inhibiteurs de mitose :
benfluralin, butralin, dinitramine, éthalfluralin, fluchloralin, isopropalin, méthalpropalin, nitralin, oryzalin, pendiméthalin, prodiamine, profluralin, trifluralin, amiprofos-méthyl, butamifos, dithiopyr, thiazopyr, propyzamide, tébutam, chlorthal, carbétamide, chlorbufam, chlorpropham et propham,
b10) parmi le groupe des inhibiteurs VLCFA :
acétochlor, alachlor, butachlor, buténachlor, délachlor, diéthatyl, diméthachlor, diméthénamid, diméthénamid-P, métazachlor, métolachlor, S-métolachlor, prétilachlor, propachlor, propisochlor, prynachlor, terbuchlor, thénylchlor, xylachlor, allidochlor, CDEA, épronaz, diphénamid, napropamide, naproanilide, péthoxamid, flufénacet, méfénacet, fentrazamide, anilofos, pipérophos, cafenstrole, indanofan et tridiphane,
b11) parmi le groupe des inhibiteurs de biosynthèse de cellulose : dichlobénil, chlorthiamid, isoxaben et flupoxam,
b12) parmi le groupe des herbicides découpleurs :
dinofénate, dinoprop, dinosam, dinoseb, dinoterb, DNOC, étinofen et médinoterb,
b13) parmi le groupe des herbicides à auxine :
clomeprop, 2,4-D, 2,4,5-T, MCPA, MCPA-thioéthyl, dichlorprop, dichlorprop-P, mécoprop, mécoprop-P, 2,4-DB, MCPB, chloramben, dicamba, 2,3,6-TBA, tricamba, quinclorac, quinmerac, clopyralid, fluroxypyr, picloram, triclopyr et bénazolin,
b14) parmi le groupe des inhibiteurs de transport d'auxine :
naptalam, diflufenzopyr,
b15) parmi le groupe des autres herbicides :
benzoylprop, flamprop, flamprop-M, bromobutide, chlorflurénol, cinméthylin, méthyldymron, étobenzanid, fosamine, métam, pyributicarb, oxaziclométone, dazomet, triaziflam, bromure de méthyle, daimuron (dymron) et cumyluron,

les sels acceptables en agriculture et les dérivés acceptables en agriculture des herbicides B, pourvu qu'ils aient un groupe carboxyle.

**6.** Composition suivant la revendication 5, où les herbicides B sont choisis parmi :

b1) clodinafop, cyhalofop, diclofop, fénoxaprop, fénoxaprop-P, fluazifop, fluazifop-P, haloxyfop, haloxyfop-P, métamifop, quizalofop, quizalofop-P, alloxydim, butroxydim, cléthodim, cloproxydim, cycloxydim, profoxydim, séthoxydim, tépraloxydim, tralkoxydim,
b2) amidosulfuron, azimsulfuron, bensulfuron, chlorimuron, chlorsulfuron, cinosulfuron, cyclosulfamuron, éthamétsulfuron, éthoxysulfuron, flazasulfuron, flupyrsulfuron, foramsulfuron, halosulfuron, imazosulfuron, iodosulfuron, mésosulfuron, métsulfuron, nicosulfuron, oxasulfuron, primisulfuron, prosulfuron, pyrazosulfuron, rimsulfuron, sulfométuron, sulfosulfuron, thifensulfuron, triasulfuron, tribénuron, trifloxysulfuron, triflusulfuron, tritosulfuron, propoxycarbazone, flucarbazone, imazaméthabenz, imazamox, imazapic, imazapyr, imazaquin, imazéthapyr, cloransulam, diclosulam, florasulam, flumétsulam, métosulam, pénoxsulam, bispyribac, pyribenzoxim, pyriftalid, pyrithiobac, pyriminobac,
b3) atrazine, cyanazine, simazine, terbuthylazine, hexazinone, métamitron, métribuzin, amicarbazone, chloridazon, chlorbromuron, chlorotoluron, diuron, isoproturon, linuron, méthabenzthiazuron, propanil, bromoxynil, ioxynil, bentazone, pyridate, difenzoquat, diquat, paraquat,
b4) acifluorfen, fluoroglycofen, halosafen, lactofen, oxyfluorfen, fluazolate, pyraflufen, cinidon-éthyl, flumiclorac, flumioxazin, fluthiacet, oxadiazon, oxadiargyl, azafénidin, carfentrazone, sulfentrazone, pentoxazone, benzfendizone, butafénacil, pyraclonil, profluazol, flufenpyr, nipyraclofen, 2-chloro-5-[3, 6-dihydro-3-méthyl-2,6-dioxo-4-(trifluorométhyl)-1(2H)-pyrimidinyl]-N-(diméthylsulfamoyl)-4-fluorobenzamide, 5-[3-amino-3,6-dihydro-2,6-dioxo-4-(trifluorométhyl)-1(2H)-pyrimidinyl]-2-chloro-N-(diméthylsulfamoyl)-4-fluorobenzamide, 2-chloro-5-[3,6-dihydro-3-méthyl-2,6-dioxo-4-(trifluorométhyl)-1(2H)-pyrimidinyl]-N-[(éthyl)méthylsulfamoyl]-4-fluorobenzamide, 5-[3-amino-3,6-dihydro-2,6-dioxo-4-(trifluorométhyl)-1(2H)-pyrimidinyl]-2-chloro-N-[(éthyl)méthylsulfamoyl]-4-fluorobenzamide, 2-chloro-5-[3,6-dihydro-3-méthyl-2,6-dioxo-4-(trifluorométhyl)-1(2H)-pyrimidinyl]-4-fluoro-N-[(méthyl)propylsulfamoyl]benzamide, 5-[3-amino-3,6- dihydro-2,6-dioxo-4-(trifluorométhyl)-1(2H)-pyrimidinyl]-2-chloro-4-fluoro-N-[(méthyl)propylsulfamoyl]benzamide, 2-chloro-5-[3,6-dihydro-3-méthyl-2,6-dioxo-4-(trifluorométhyl)-1(2H)-pyrimidinyl]-4-fluoro-N-[(isopropyl)méthylsulfamoyl]-benzamide, 5-[3-amino-3,6-dihydro-2,6-dioxo-4-(trifluorométhyl)-1(2H)-pyrimidinyl]-2-chloro-4-fluoro-N-[(isopropyl)méthylsulfamoyl]benzamide, N-[(butyl)méthylsulfamoyl]-2-chloro-5-[3,6-dihydro-3-méthyl-2,6-dioxo-4-(trifluorométhyl)-1(2H)-pyrimidinyl]-4-fluorobenzamide, 5-[3-amino-3,6-dihydro-2,6-dioxo-4-(trifluorométhyl)-1(2H)-pyrimidinyl]-N-[(butyl)-méthylsulfamoyl]-2-chloro-4-fluorobenzamide, 2-chloro-5-[3,6-dihydro-3-méthyl-2,6-dioxo-4-(trifluorométhyl)-1(2H)-pyrimidinyl]-4-fluoro-N-[(isobutyl)méthylsulfamoyl]benzamide, 5-[3-amino-3,6-dihydro-2,6-dioxo-4-(trifluorométhyl)-1(2H)-pyrimidinyl]-2-chloro-4-fluoro-N-[(isobutyl)méthylsulfamoyl] benzamide, 2-chloro-5-[3,6-dihydro-3-méthyl-2,6-dioxo-4-(trifluorométhyl)-1(2H)-pyrimidinyl]-N-(diméthylsulfamoyl) benzamide, 5-[3-amino-3,6-dihydro-2,6-dioxo-4-(trifluorométhyl)-1(2H)-pyrimidinyl]-2-chloro-N-(diméthylsulfamoyl)benzamide, 2-chloro-5-[3,6-dihydro-3-méthyl-2,6-dioxo-4-(trifluorométhyl)-1(2H)-pyrimidinyl]-N-[(éthyl) méthylsulfamoyl]benzamide, 5-[3-amino-3,6-dihydro-2,6-dioxo-4-(trifluorométhyl)-1(2H)-pyrimidinyl]-2-chloro-N-[(éthyl)méthylsulfamoyl]benzamide, 2-chloro-5-[3,6-dihydro-3-méthyl-2,6-dioxo-4-(trifluorométhyl)-1(2H)-pyrimidinyl]-N-[(méthyl)propylsulfamoyl]benzamide, 5-[3-amino-3,6-dihydro-2,6-dioxo-4-(trifluorométhyl)-1(2H)-pyrimidinyl]-2-chloro-N[(méthyl)propylsulfamoyl]benzamide, 2-chloro-5-(3,6-dihydro-3-méthyl-2,6-dioxo-4-(trifluorométhyl)-1(2H)-pyrimidinyl]-N-[(isopropyl)méthylsulfamoyl]benzamide, 5-[3-amino-3,6-dihydro- 2,6- dioxo- 4-(trifluorométhyl)- 1 (2H)-pyrimidinyl]- 2- chloro- N-[(isopropyl) méthylsulfamoyl] benzamide, N-[(butyl)méthylsulfamoyl]-2-chloro-5-[3, 6-dihydro-3-méthyl-2,6-dioxo-4-(trifluorométhyl)-1(2H)-pyrimidinyl]-benzamide, 5-[3-amino-3,6-dihydro-2,6-dioxo-4-(trifluorométhyl)-1(2H)-pyrimidinyl]-N-[(butyl)méthylsulfamoyl]-2-chlorobenzamide, 2-chloro-5-[3,6-dihydro-3-méthyl-2,6-dioxo-4-(trifluorométhyl)-1(2H)-pyrimidinyl]-N-[(isobutyl)méthylsulfamoyl]benzamide, 5-[3-amino-3,6-dihydro-2,6-dioxo-4-(trifluorométhyl)-1(2H)-pyrimidinyl]-2-chloro-N-[(isobutyl)méthylsulfamoyl]benzamide,

b5) norflurazon, diflufénican, picolinafen, béflubutamid, fluridone, flurochloridone, flurtamone, mésotrione, sulcotrione, isoxachlortole, isoxaflutole, benzofénap, pyrazolynate, pyrazoxyfen, benzobicyclon et clomazone et également [2-chloro-3-(4,5-dihydro-3-isoxazolyl)-4-(méthylsulfonyl)phényl](5-hydroxy-1-méthyl-1H-pyrazol-4-yl)méthanone, [3-(4,5-dihydro-3-isoxazolyl)-2-méthyl-4-(méthylsulfonyl)phényl](5-hydroxy-1-méthyl-1H-pyrazol-4-yl)méthanone, [2-chloro-3-(3-méthyl-5-isoxazolyl)-4-(méthylsulfonyl)phényl](5-hydroxy-1-méthyl)1H-pyrazol-4-yl)méthanone, (5-hydroxy-1-méthyl-1H-pyrazol-4-yl)[2-méthyl-3-(3-méthyl-5-isoxazolyl)-4-(méthylsulfonyl)phényl]méthanone, et également 4-(3-trifluorométhylphénoxy)-2-(4-trifluorométhylphényl)pyrimidine,

b6) glyphosate,

b7) glufosinate,

b9) benfluralin, butralin, dinitramine, éthalfluralin, oryzalin, pendiméthalin, trifluralin, propyzamide,

b10) acétochlor, alachlor, butachlor, diméthénamid, diméthénamid-P, métazachlor, métolachlor, S-métolachlor, péthoxamid, prétilachlor, propachlor, propisochlor, thénylchlor, flufénacet, méfénacet, fentrazamide, cafenstrole, indanofan,

b11) dichlobénil, chlorthiamid, isoxaben, flupoxam,

b13) 2,4-D, 2,4-DB, dichlorprop, dichlorprop-P, MCPA, MCPB, mécoprop, mécoprop-P, dicamba, quinclorac, quinmérac, clopyralid, fluroxypyr, picloram, triclopyr, bénazolin,

b14) diflufenzopyr,

b15) bromobutide, cinméthylin, méthyldymron, oxaziclométone, triaziflam, daimuron (dymuron) et cumyluron,

les sels acceptables en agriculture des composés actifs B mentionnés ci-dessus et les dérivés acceptables en agriculture des composés actifs B, pourvu qu'ils aient un groupe carboxyle.

7. Composition suivant l'une quelconque des revendications précédentes, comprenant en supplément au moins un composé de sécurisation C choisi parmi le groupe constitué de bénoxacor, cloquintocet, dichlormid, fenchlorazole, fenclorim, fluxofénim, furilazole, isoxadifen, méfenpyr, 2,2,5-triméthyl-3-(dichloroacétyl)-1,3-oxazolidine, 4-(dichloroacétyl)-1-oxa-4-azaspiro[4.5]décane et oxabétrinil, de leurs sels acceptables en agriculture et, dans le cas d'acides carboxyliques, de leurs dérivés acceptables en agriculture.

8. Composition suivant l'une quelconque des revendications précédentes, où le rapport pondéral entre le composant A et le composant B est de l'ordre de 10/1 à 1/500.

9. Composition suivant la revendication 7, où le rapport pondéral entre le composant A et le composant C est de l'ordre de 10/1 à 1/10.

10. Composition suivant la revendication 7, où le rapport pondéral entre le composant B et le composant C est de l'ordre

de 50/1 à 1/10.

**11.** Composition suivant l'une quelconque des revendications précédentes, comprenant, comme composé actif A), un composé de 7-pyrazolylbenzoxazole de la formule I dans laquelle $R^1$ est un groupe difluorométhoxy, $R^2$ est du chlore ou du brome, $R^3$ est du fluor ou du chlore, $R^4$ est Cl et $R^5$ est un alkyle en $C_1$-$C_4$, et, comme composé actif B), un composé choisi parmi le groupe constitué de tépraloxydim, profoxydim, cyhalofop, séthoxydim, cyclosulfamuron, pyrazosulfuron, imazamox, imazéthapyr, imazapic, imazapyr, imazaquin, nicosulfuron, propoxycarbazone, dicamba, bentazone, atrazine, isoproturon, paraquat, clomazone, mésotrione, picolinafen, glyphosate, glufosinate, acétochlor, S-métalochlor, brombutide, méthyldymron, oxaziclométone, daimuron, cumyluron, pendiméthalin, flufénacet, diméthénamid-P, isoxaben, 2,4-D, quinclorac et diflufenzopyr et, dans le cas d'herbicides ionisables ou ioniques, également de leurs sels et, dans le cas de composés comportant un groupe carboxyle, également de leurs dérivés.

**12.** Composition suivant l'une quelconque des revendications précédentes, sous la forme d'une composition de protection de culture, comprenant en supplément au moins un liquide inerte et/ou un support solide, si on le souhaite au moins un agent tensioactif et, si cela est approprié, des auxiliaires courants.

**13.** Composition suivant l'une quelconque des revendications précédentes, sous la forme d'une composition de protection de culture formulée sous la forme d'une composition à deux composants comprenant un premier composant comportant le composé actif A, un support solide ou liquide et, si cela est approprié, un ou plusieurs agents tensioactifs, et un second composant comprenant au moins un autre composé actif choisi parmi les herbicides B, un support solide ou liquide et, si cela est approprié, un ou plusieurs agents tensioactifs.

**14.** Procédé de contrôle d'une végétation non voulue, qui comprend une application d'une quantité efficace du point de vue herbicide d'une composition suivant l'une quelconque des revendications 1 à 13, à des plantes, à leur habitat ou aux semences.

**15.** Procédé suivant la revendication 14, qui comprend une application d'une composition suivant l'une quelconque des revendications 1 à 13 avant, pendant et/ou après l'émergence des plantes non voulues, les composants efficaces du point de vue herbicide A) et B) et éventuellement C) étant appliqués simultanément ou en succession.

**16.** Procédé suivant la revendication 15, dans lequel les feuilles des plantes de culture et des plantes non voulues sont traitées.

**17.** Utilisation de compositions suivant l'une quelconque des revendications 1 à 13, pour contrôler une végétation non voulue.

**18.** Utilisation de compositions suivant l'une quelconque des revendications 1 à 13, pour contrôler une végétation indésirable dans des cultures de céréales.

**19.** Utilisation de compositions suivant l'une quelconque des revendications 1 à 13, pour contrôler une végétation indésirable dans des cultures de maïs et dans des cultures de sorgho.

**20.** Utilisation de compositions suivant l'une quelconque des revendications 1 à 13, pour contrôler une végétation indésirable dans des cultures de riz.

**21.** Utilisation de compositions suivant l'une quelconque des revendications 1 à 13, pour contrôler une végétation indésirable dans des cultures de coton, de colza, de soya, de pommes de terre, de haricots secs, de cacahouètes et dans des plantes vivaces.

**22.** Utilisation de compositions suivant l'une quelconque des revendications 1 à 13, pour contrôler une végétation indésirable en sylviculture.

**23.** Utilisation de compositions suivant l'une quelconque des revendications 1 à 13, pour contrôler une végétation indésirable dans des cultures de plantes où les plantes de culture sont résistantes à un ou plusieurs herbicides du fait d'une manipulation génétique et/ou de croisements.

**24.** Utilisation de compositions suivant l'une quelconque des revendications 1 à 13, pour contrôler une végétation

indésirable dans des cultures de plantes où les plantes de culture sont résistantes à une attaque par des insectes du fait d'une manipulation génétique et/ou de croisements.

**25.** Utilisation de mélanges herbicides suivant l'une quelconque des revendications 1 à 13, pour la dessiccation et/ou la défoliation de plantes.